# EUROPEAN PATENT SPECIFICATION

(11) **EP 2 267 324 B1**
(45) Date of publication and mention of the grant of the patent: **16.06.2021**
(21) Application number: 09723156.7
(22) Date of filing: 19.03.2009
(51) Int. Cl.: F16C 33/41, F16C 33/66, F16C 33/78, F16C 43/06, F16C 19/06, F16C 19/08, F16C 19/18

(54) **COMB-SHAPED CAGE FOR A BALL BEARING, BALL BEARING WITH THE CAGE AND METHOD OF MANUFACTURING THE CAGE**
KAMMKÄFIG FÜR EIN KUGELLAGER, KUGELLAGER MIT DEM KAMMKÄFIG UND VERFAHREN ZUR HERSTELLUNG DES KAMMKÄFIGS
CAGE EN FORME DE PEIGNE POUR UN ROULEMENT À BILLES, ROULEMENT À BILLES AVEC LA CAGE, ET PROCÉDÉ DE FABRICATION DE LA CAGE

(30) Priority: 21.03.2008 JP 2008072930; 24.03.2008 JP 2008074964; 11.07.2008 JP 2008181163; 11.07.2008 JP 2008181164; 21.08.2008 JP 2008212744; 21.08.2008 JP 2008212745; 21.08.2008 JP 2008212746; 20.02.2009 JP 2009037447
(43) Date of publication of application: 29.12.2010
(73) Proprietor: NTN Corporation, Osaka-shi, Osaka 550-0003 (JP)
(72) Inventor: KAWAMURA, Mitsuo, Kuwana-shi Mie 511-08678 (JP); SATO, Norihide, Kuwana-shi Mie 511-08678 (JP); SAKAGUCHI, Tomoya, Kuwana-shi Mie 511-08678 (JP); KAWAMURA, Takayuki, Kuwana-shi Mie 511-08678 (JP); ISHIDA, Hikaru, Kuwana-shi Mie 511-08678 (JP); MURAMATSU, Makoto, Iwata-shi Shizuoka 438-0037 (JP); GOTO, Tomoaki, Anjo-shi Aichi 446-0056 (JP)
(74) Representative: Maikowski & Ninnemann Patentanwälte Partnerschaft mbB
(86) International application number: PCT/JP2009/001236
(87) International publication number: WO 2009/116295

(56) References cited:
- DE-A1- 10 258 861
- DE-U1- 9 015 349
- GB-A- 263 425
- GB-A- 2 167 816
- JP-A- H1 113 769
- JP-A- 2000 046 058
- JP-A- 2002 147 463
- JP-A- 2003 004 055
- JP-A- 2003 214 436
- JP-A- 2004 197 942
- JP-A- 2005 076 747
- JP-A- 2006 170 313
- JP-A- 2007 016 822
- JP-A- 2007 051 761
- JP-A- 2007 217 520
- JP-A- 2008 008 411
- JP-A- 2008 014 484
- JP-U- 55 059 813
- US-A1- 2004 141 670
- US-B1- 6 371 655
- None

## Description

### CROSS REFERENCE TO THE RELATED APPLICATION

This application is based on and claims Convention priority to Japanese patent applications No. 2008-72930, filed March 21, 2008; No. 2008-74964, filed March 24, 2008; No. 2008-181163, filed July 11, 2008; No. 2008-181164, filed July 11, 2008; No. 2008-212744, filed August 21, 2008; No. 2008-212745, filed August 21, 2008; No. 2008-212746, filed August 21, 2008; and No. 2009-37447, filed February 20, 2009.

### BACKGROUND OF THE INVENTION

The present invention relates to a snap cage for a ball bearing assembly, methods of making the snap cage and a ball bearing assembly having such cage assembled therein.

### Description of the Related Art

A sealed ball bearing assembly that is used in various rotary apparatuses and equipments, particularly automobile auxiliary equipments is generally required to have a resistance to high temperature, a resistance to high speed, a resistance to muddy water, a dust controllability, a resistance to grease leakage, a long servicing life and a low torque characteristic and, particularly in order to meet with the resistance to muddy water and the dust controllability, contact sealing members are employed at opposite ends of a bearing space delimited between inner and outer rings of the bearing assembly.

In the sealed ball bearing assembly of the structure described above, if the bearing temperature increases while grease is present in a sealing lip segment of any of those sealing members, the pressure inside the bearing assembly increases as a result of expansion of air inside the bearing assembly, thus bringing about a difference in pressure between inside and outside of the bearing assembly to such an extent as to result in opening of the sealing lip segment. Once the sealing lip segment opens by the effect of the pressure difference, the phenomenon occurs, in which the grease and air both present inside the bearing assembly leak (hereinafter referred to as "breath") to the outside of the bearing assembly. (See the Patent Document 1 listed below.)

To avoid the breathing phenomenon discussed above, suggestion has been made, in which a ventilating cutout is defined in a portion of the sealing lip segment referred to above. (See the Patent Document 1 listed below.) It has, however, been found that if the grease deposits on the cutout so employed, grease leakage tends to occur in a manner similar to that occurring in the previously described ball bearing assembly. (See the Patent Document 2 listed below.)

It may be contemplated that in, for example, a ball bearing assembly of an inner ring rotating type in which no cutout referred to above is employed, the pressure of urging the seal lip segment against a seal groove, which is defined in an outer diametric surface of an inner ring (which pressure is hereinafter referred to as "tensing force"), is increased to accomplish the countermeasure against the breathing phenomenon. It has, however, been found that this countermeasure tends to merely bring about an increase of the bearing torque and is incapable of avoiding the grease leakage particularly in the event of a large temperature rise enough to result in the internal pressure of a value higher than the tensing force. Also, in the event of a decrease of the bearing temperature, the internal pressure decreases as a result of shrinkage of the air inside the bearing assembly and, therefore, an attachment phenomenon, in which the tip of the sealing lip segment is sucked, will occur, resulting in a further increase of the bearing torque. (See, for example, the Patent Document 3 listed below.)

For this reason, even though any of the various structures as the contact sealing member is employed, the grease leakage will be hardly avoided once the grease deposits in the inner ring seal groove.

In view of the foregoing, the cage for ball bearing assemblies has been suggested, in which the shape of a steel ribbon cage is altered to avoid the grease leakage. (This type of cage is hereinafter referred to as an "improved steel ribbon cage".) (See the Patent Document 4 listed below.) In this cage, the radius of a circumferential portion of the inner diameter, where pockets for accommodating respective bearing balls are defined, as measured from the center of the cage, is made greater than the radius of a circumferential portion of the inner diameter, which lies between the neighboring pockets, as measured from the center of the cage. With this structure an excessive grease, depositing on balls at that circumferential portion having a large inner diameter, can be scraped off from the balls to thereby prevent the grease from depositing on an inner ring shoulder.

It has, however, been found that if the structure employed in the improved steel ribbon cage for avoiding the grease leakage is adopted in the standard snap cage, an intermediate portion of the cage between the neighboring pockets, at which the minimum sectional surface area is attained in the snap cage, will further be reduced, and therefore, application of such structure to the snap cage is difficult to achieve.

Another attempt has also been made, in which each of the bridge portions of the resinous snap cage positioned between the neighboring pockets has its rear surface (a surface opposite to the direction in which each of the pockets is open) is opened as a countermeasure for the grease leakage. (See the Patent Document 5 listed below.) Thus, in this cage, the volume of each of the bridge portions between the neighboring pockets is reduced to increase the space capacity in the bearing space to thereby improve the grease leakproof. The resinous snap cage employed in this case has a shape similar to the grease leak-proofing structure employed in the improved steel ribbon cage referred to previously.

However, in order to adopt such a grease leak-proofing structure of a kind described above in the snap cage utilizing a resin generally considered to have a strength lower than that of iron, the axial length thereof needs to be increased, but increase of the axial length results in increase of the surface area of an inner diametric surface as compared with that in the steel ribbon cage. Once the surface area of the inner diametric surface increases, the grease is correspondingly apt to deposit, leading to an undesirable possibility of grease leakage. Accordingly, a large effect of suppressing the grease leakage can be hardly anticipated.

In view of the recent orientation towards the high performance of the automobile auxiliary machines and equipments, the various rotary component parts are desired to have a high speed feature. Particularly where in designing such a high speed feature, the crown shaped resinous cage is utilized, the strength of the cage is controversial. Accordingly, a method of enhancing the strength of the crown shaped resinous cage against a delay and an advance of rolling elements has been suggested, in which a groove for separating an inner diametric side wall portion and an outer diametric side wall portion from each other is provided in an axial end face of the cage in a direction circumferentially thereof. (See the Patent Document 6 listed below.) In this example, since the cage has the inner diametric side wall portion and the outer diametric side wall portion separated from each other by the groove, the inner diametric side wall portion tends to resiliently tilt radially inwardly and the outer diametric side wall portion tends to resiliently tilt radially outwardly, in correspondence with the delay and the advance of rolling elements, to accommodate the delay-advance of the rolling elements. By so doing, the stress imposed on the cage is dispersed.

Also, in order to increase the strength of the resinous cage, incorporation of a reinforcement member into the cage has been suggested. (See the Patent Document 7 listed below.)
[Patent Document 1] JP Laid-open Patent Publication No. 2000-257640
[Patent Document 2] JP Laid-open Patent Publication No. 2005-308117
[Patent Document 3] JP Laid-open Patent Publication No. 2005-069404
[Patent Document 4] JP Laid-open Patent Publication No. 2007-271078
[Patent Document 5] JP Laid-open Patent Publication No. 2003-287032
[Patent Document 6] JP Laid-open Patent Publication No. 2007-139025, Fig. 1
[Patent Document 7] JP Laid-open Patent Publication No. 09-79265, bottom left column on page 3 and Figs. 1 and 2.

As discussed above, as the countermeasure for the grease leakage in the sealed ball bearing assembly, the tensing force of the sealing lip segment, the shape of the sealing lip segment and the cutout have been tailored as disclosed in the Patent Documents 1 to 3 referred to previously, but those countermeasures pose such a problem that if grease exists in the seal groove and/or an inner ring outer diametric portion as a result of rotation, the temperature inside the bearing assembly increases, accompanied by the occurrence of a grease leakage.

Also, although the improved steel ribbon cage disclosed in the Patent Document 4 referred to above is effective in avoiding the grease leakage, application of this grease leak-proofing structure to the snap cage is limited in terms of strength and, therefore, such application is difficult to achieve. In addition, since the resinous material often used in the snap cage has a strength lower than that of iron, application of that grease leak-proofing structure to the snap cage requires the axial thickness of the snap cage to be increased and as mentioned above, this has been found involving an increase of the amount of grease deposited on the cage inner diametric surface, hence making it difficult to avoid the grease leakage.

In the resinous snap cage disclosed in the Patent Document 6 referred to above, the cage tends to be further tilted towards an outer diametric side by the effect of a centrifugal force when it is rotated at high speed, and therefore, there is the possibility that the cage outer diametric side may undesirably contact the outer ring inner diametric side.

By way of example, in the cage in which the reinforcement member is incorporated as disclosed in the Patent Document 7 referred to above, an injection molding or the like must be carried out by supplying a resinous material into a mold assembly while a metal element has been set inside the mold assembly. Accordingly, this results in increase of the number of manufacturing process steps, accompanied by increase of the cost and the weight.

No cage having a resistance to grease leakage and capable of being rotated at high speed have yet been made available.
A snap cage for a ball bearing is known from US 2004 141 670 A1. The snap cage is formed in a generally annular shape and has a plurality of pockets arranged in a circumferential direction to rollably hold a plurality of balls along a pitch circle. The pockets each have an inner peripheral surface comprising a radially inner section which is located inward of the pitch circle of the balls in the radial direction of the snap cage and has an inner diameter larger than the diameter of the balls, such that the gap between the radially inner section of the inner peripheral surface of the pockets and the rolling surface of the balls gradually increases toward the opening of the pockets on the inner side in the radial direction of the snap cage and that the maximum inscribing circle of the opening of the pockets on the outer side in the radial direction of the snap cage has a diameter smaller than the diameter of the balls. The pockets are provided with radially extending grooves to smoothly feed the grease inside the retainer to the outside.

### SUMMARY OF THE INVENTION

An object of the present invention is to provide a snap cage in a ball bearing assembly, in which the amount of grease tending to deposit inside the cage inner diametric portion is reduced to thereby avoid an undesirable leakage of the grease and also to provide such ball bearing assembly having such cage assembled therein.

Another important object of the present invention is to provide the snap cage in the ball bearing assembly, which has a resistance to grease leakage and is capable of withstanding a high speed rotation as compared with the conventional cage, and also to provide such ball bearing assembly.

In order to accomplish those objects, the present invention provides a snap cage for a ball bearing assembly as defined in claim 1, which includes an annular body having one side face opened at a plurality of circumferential locations to define respective pockets each for retaining a ball and having an inner face, and recessed areas defined in the inner face of the respective pocket so as to extend from a pocket open edge on a cage inner diametric side towards a cage outer diametric side.

According to the cage of the structure described above, since the inner side face of each of the pockets is provided with the recessed areas so as to extend from the pocket open edge on the cage inner diametric side towards the cage outer diametric side, the amount of grease sticking to each of the balls and scraped by an inner diametric surface of the cage decreases. Accordingly, since the deposition of the grease onto the inner ring outer diametric portion is avoided, flow of the grease towards a seal groove in the inner ring is avoided and, as a result, the leakage of the grease from the ball bearing assembly can be avoided.

In the present invention, an axial position of the recessed areas in each of the pockets may be a position substantially coinciding with a shoulder portion of a raceway surface of an inner ring. That is because the grease is carried up by the contact of the balls with the inner ring raceway to the raceway shoulder portion to accumulate on a portion of the cage inner diametric surface which portion lies in the vicinity of the axial position that substantially coincide with the raceway shoulder portion.

In the present invention, the recessed areas are provided at a plurality of locations while positioned on respective sides of a center of the pocket in a cage circumferential direction at the open edge of each of the pockets and the inner face of each of the recessed areas is of a substantially cylindrical surface shape following a surface of the imaginary cylinder having its center lying in a direction radially of the cage and is of such a shape that each of the recessed areas extends from the open edge on the cage inner diametric side towards a pitch circle of arrangement of a row of the balls and has a width gradually getting shallow and narrow from a cage inner diametric edge to the pitch circle of the row of the balls.

In the present invention, the recessed areas may be provided at two locations on respective sides of a center of the pocket in a cage circumferential direction at the open edge of each of the pockets so as to extend to a position proximate to a cage outer diametric edge and the inner face of each of the two recessed areas may be of a shape substantially following a surface of the imaginary ring, the imaginary ring having a sectional shape at any arbitrarily chosen circumferential position representing a round shape, a ring center being inclined relative to a cage center axis.

In the present invention, the inner face of the pocket may represent a concaved spherical surface shape and a bridge portion may be provided between the neighboring pockets. The bridge portion may have an end point on a side opposite to a pocket open side on a cage inner diametric surface in a section at a center position of the cage circumferential direction with an axial position of such end point lying at a position adjacent a center side of a raceway surface and remote from a shoulder of a raceway surface of an inner ring. By so doing, the leakage of the grease from the inner diametric surface of the bridge portion to the bearing outside can be avoided.

In the present invention, the pocket has a pocket bottom wall, and a portion of the pocket bottom wall at a center of the pocket in the cage circumferential direction may be of such a shape that the wall thickness of the pocket bottom wall portion is greater at an outer diametric side than at an inner diametric side. In a ball bearing assembly having a sealing plate fitted thereto, the distance between a cage, employed therein, and the sealing plate is large on the outer diametric side and small on the inner diametric side. In such case, it is difficult to expand the cage as a whole in the axial direction. In view of this, the wall thickness of the pocket bottom wall portion on the outer diametric side is chosen to be greater than the wall thickness on the inner diametric side so that the maximum stress imposed on the cage and the amount of displacement can be reduced without allowing the sealing plate and the cage contacting with each other. Accordingly, the above described object to enable a high speed operation can be accomplished.

In the present invention, a pair of pawls opposed to each other in a circumferential direction are employed, in which case the pair of pawls are to be provided on the open side of the pocket so as to protrude in an axial direction. According to this construction, the ball can be stably retained within the respective pocket by the pawls.

The distance between respective tip portions of the pair of the pawls in the pocket on the cage outer diametric side is smaller than the distance between the tip portions of the pair of the pawls in the pocket on the cage inner diametric side. According to this construction, since the distance between respective tip portions of the pair of the pawls in the pocket on the cage outer diametric side is smaller than the distance between the tip portions of the pair of the pawls in the pocket on the cage inner diametric side, the grease adhering to the balls is not permitted to approach from the outer ring side towards the outer diametric portion of the inner ring. On the other hand, the grease from the inner ring side can be scraped by the cage inner diametric side of the pawls distant from the outer diametric portion of the inner ring. Consequently, the leakage of the grease from the ball bearing assembly can be avoided.

Alternatively, respective tip portions of the pair of the pawls in the pocket on the cage inner diametric side are spaced a distance from each other, opened but respective tip portions of the pair of the pawls in the pocket on the cage outer diametric side are connected together. According to this construction, since the respective tip portions of the pair of the pawls in the pocket on the cage inner diametric side are opened, but respective tip portions of the pair of the pawls in the pocket on the cage outer diametric side are connected together, the grease adhering to the balls is not permitted to approach from the outer ring side towards the outer diametric portion of the inner ring. On the other hand, the grease from the inner ring side can be scraped by the cage inner diametric side of the pawls distant from the outer diametric portion of the inner ring. Consequently, the leakage of the grease from the ball bearing assembly can be avoided.

Also, in order to increase the grease leakage preventive effect, it is preferred that the pair of pawls are provided on the cage inner and outer diametric sides, respectively, and assuming that the total width of the pawl, when projected onto a straight line extending a cage radial direction across the center of each of the pockets in a cage circumferential direction, is expressed by It, the width Ie of a pawl portion of the pawl on a cage outer diametric side, when projected onto the straight line, is of a value not greater than 2/3It.

In addition, in order to increase the grease leakage preventive effect, it is also preferred that the angle in a cage circumferential direction from a pocket center equivalent position in the section, taken along the cage circumferential direction, to a pawl tip portion on a cage outer diametric side is chosen to be of a value not smaller than 1.5 times the corresponding angle of the pawl tip portion on a cage inner diametric side.

The ball bearing assembly of the present invention is a ball bearing assembly having incorporated therein the cage designed and constructed in accordance with the present invention.

In a single row ball bearing assembly, the behavior of the grease towards the pocket opened side makes no difference from that exhibited in the ball bearing assembly having the standard snap cage incorporated therein and no grease leakage preventive effect can therefore be expected. However, the ball bearing assembly is often utilized in a pair and, hence, in most cases leakage of the grease towards both end sides of the pair of the ball bearing assemblies are not called for. In such case, if the back face side of the cage of the present invention is incorporated while being oriented towards the side where a countermeasure to avoid the grease leakage is taken, the grease sealing function of the final pair product can be maintained.

In the ball bearing assembly of the present invention, a plurality of balls interposed between inner and outer rings are retained by the cage; a grease composition is filled in a bearing space delimited between the inner and outer rings; and a sealing member provided in the outer ring or the inner ring for closing the bearing space; and in which the grease composition is filled in the bearing space; the grease composition is prepared by blending an additive to a base grease containing a base oil and a thickener; the additive is at least an aluminum series additive selected from the group consisting of an aluminum powder and an aluminum compound; and the aluminum series additive is blended in a quantity within the range of 0.05 to 10 parts by weight relative to 100 parts by weight of the base grease.

According to the above described construction, since the snap cage is adopted in the ball bearing assembly and the inner face of each of the pockets in the cage is provided with the recessed areas extending from the pocket open edge on the cage inner diametric side towards the cage outer diametric side, the amount of the grease sticking to the balls and scraped by the inner diametric surface of the cage is reduced. Accordingly, the grease leakage from the cage pocket back face side is suppressed and the deposition of the grease on the inner ring outer diametric portion can be avoided. Therefore, the flow of the grease into the seal groove can be avoided and, hence, the grease leakage from the ball bearing assembly can be avoided.

Also, since the grease composition filled in this bearing space is of a composition including the additive mixed in the base grease prepared by mixing the base oil and the thickener, which additive contains at least one aluminum series additive selected from the group consisting of the aluminum powder and the aluminum compound and since the amount of the aluminum series additive added is within the range of 0.05 to 10 parts by weight relative to 100 parts by weight of the base grease, the occurrence of the peculiar exfoliation caused by the hydrogen brittleness can be suppressed. Accordingly, the service lifetime of the ball bearing assembly filled with this grease composition can be increased.

Since the grease leakage can be avoided owning to the above described cage, there is no need to change the design and the shape of the seal groove in the inner ring and, also, to axially arrange, for example, a slinger or the like in the bearing assembly. Accordingly, without the number of component parts being increased, space saving can be accomplished.

Since by adopting the cage of the type described above and the grease composition of the kind described above, the bearing assembly can be operated under a feasible condition without the hydrogen brittleness and there is no grease leakage occurring, the lubricating duration characteristic possessed by the grease filled in the bearing space can be sufficiently exhibited. Also, contamination of the external environment resulting from the grease leakage and obnoxious noises generated as a result of corrosion and/or slippage of, for example, an engine auxiliary machine belt or the like can be avoided. Also, as compared with the conventional case, the manufacturing cost reduction can be achieved as a result of reduction in number of component parts.

The aluminum compound may include at least one compound selected from the group consisting of aluminum carbonate and aluminum nitrate.

The ball bearing assembly of the present invention may be a ball bearing assembly dedicated to a rotary encoder equipped motor for supporting a rotary shaft of a rotary encoder equipped motor, which includes a plurality of balls interposed between an inner ring and an outer ring and retained by a cage, and a sealing member fitted to the outer ring or the inner ring for sealing a bearing space.

According to the construction described above, since the inner face of each of the pockets in the snap cage is provided with the recessed areas extending from the pocket open edge on the cage inner diametric side towards the cage outer diametric side, the flow of the grease towards a sensor of the rotary encoder or the seal groove in the inner ring can be avoided and, hence, the grease leakage from the ball bearing assembly for the rotary encoder equipped motor can be avoided.

Accordingly, deposition of the grease on the sensor or the like of the rotary encoder is avoided and the rotational condition can be accurately detected. Also, since the grease leakage can be avoided, the non-contact sealing member can be adopted and, hence, a low torque can be achieved. Even when this non-contact sealing member is adopted, the dust proofing property can be increased by the cage of the construction referred to above.

The ball bearing assembly of the present invention may include a plurality of balls interposed between inner and outer rings and retained by the cage and a sealing member provided in the outer ring for closing the bearing space; in which a seal groove is formed in an outer diametric surface of the inner ring in a circumferential direction; the sealing member having an outer peripheral edge fixed to an outer ring inner diametric surface opposed to the seal groove; the sealing member also having an inner peripheral portion provided with primary and auxiliary sealing lips, the primary sealing lip being held in contact with the seal groove to thereby form a contact seal whereas the auxiliary sealing lip being held proximate to the seal groove or its neighborhood to thereby form a labyrinth seal, and in which a branched portion is provided at a position of the sealing member proximate to a level of the inner ring outer diametric surface; the primary sealing lip being formed by a portion protruding from the branched portion in an inner diametric direction and having a tip portion held in contact with an outer side groove wall of the seal groove to thereby form the contact seal; and the auxiliary sealing lip is formed by a portion protruding from the branched portion in the axially inward direction, the labyrinth seal being formed between a tip portion of the auxiliary sealing lip and an inner side groove wall of the seal groove.

According to the construction described above, since the snap cage is provided with the recessed areas, the grease leakage from the cage back face side can be suppressed. Accordingly, deposition of the grease onto the inner ring outer diametric portion can be avoided. Also, in the sealing member, the labyrinth seal, formed by the auxiliary sealing lip, and the contact seal formed by the primary sealing lip are sealed to avoid an undesirable leakage to the outside. Intrusion of foreign matters from the outside can also be avoided by the contact seal and the labyrinth seal.

Since the outer diametric surface of the auxiliary sealing lip spreads axially at the height about equal to that of the inner ring outer diametric surface neighboring the seal groove, the grease purged from the raceway groove side smoothly move towards the outer diametric surface of the auxiliary sealing lip. Therefore, the amount of grease passing through the labyrinth seal can be reduced. Since the internal pressure of the bearing assembly is relieved by the auxiliary sealing lip, the internal pressure acting on the primary sealing lip is reduced. Therefore, the tightening allowance of the contact seal formed by the primary sealing lip can be reduced to achieve the low bearing torque. Thus, when the sealing member is used in this way, a low torque and a high sealing characteristic can be realized owing to the labyrinth structure. In such case, the necessity of a space for installation of a slinger or the like is eliminated and the manufacturing cost can be reduced with no number of component parts increased.

The ball bearing assembly of the present invention may also include a plurality of balls interposed between inner and outer raceway rings and retained by the cage and a sealing member provided in the outer ring or the inner raceway ring for closing the bearing space; in which the sealing member has circumferential edges opposite to each other, one of the circumferential edges of the sealing member being slidingly engaged in a seal groove formed in an end of one of the raceway rings and the other of the circumferential edges of the sealing member being fixed to an end of the other of the raceway rings; and in which the peripheral edge of the sealing member slidingly engaged in the seal groove is rendered to be a sealing lip and has an inner side face formed with a projection, the projection being capable of displacing between a first condition, in which when as a result of development of a pressure difference occurring in the inside of the bearing assembly and the outside of the bearing assembly that are divided by the sealing member, the projection contacts the inner side face of the seal groove and, as a result of this contact of the projection, the sealing lip in proximity to the contact is partially elastically defomed to form an air passage that communicate between the inside of the bearing assembly and the outside of the bearing assembly, and a second condition, in which in the absence of the pressure difference referred to above, the projection is held in a non-contact with the inner side face of the seal groove.

According to the construction described above, since the snap cage is provided with the recessed areas, the grease leakage from the cage back face side can be suppressed. Accordingly, deposition of the grease onto the inner ring outer diametric portion can be suppressed. Also, in the sealing member, although occurrence of the suction or attachment phenomenon makes the sealing lip urged inwardly, the projection on the inner face of the sealing lip is urged against the seal groove inner side face simultaneously with the sealing lip being so urged. At this time, due to the presence of the projection, the sealing lip at a location in the vicinity of the position of contact of the projection with the seal groove inner side face is elastically partially deformed relative to the other portion. In other words, the sealing lip in the vicinity of the position of contact of the projection is incapable of contacting the inner side face of the seal groove and, due to its non-contact, the air passage is formed for communicating the bearing inside and the bearing outside.

In a condition, in which the projection and the sealing lip tip portions are held in contact with the inner side face of the seal groove, the sliding resistance of the projection tip portion becomes higher than that of the tip portion of the sealing lip, depending on the difference in contact pressure between the projection and the sealing lip tip portion. When the bearing assembly is rotated under this condition, the sealing lip tip portion will be twisted, having been undulated in a wavy fashion, resulting in formation of the air passage. For this reason, the suction phenomenon of the sealing member can be avoided with the balance in pressure between the bearing inside and outside instantly maintained uniformly. The air passage necessary to maintain this pressure balance is immediately closed if the balance in pressure between the bearing inside and outside is maintained, that is, no pressure difference is developed, and the sealing lip assumes a normal condition. At this time, the projection is in non-contact with the inner side face of the seal groove. Accordingly, intrusion of foreign matters from the bearing outside is minimized and, since the air passage therefor is narrow, there is no possibility that the grease within the bearing assembly leaks.

The ball bearing assembly of the present invention may include a plurality of balls interposed between inner and outer rings and retained by the cage and a sealing member provided in the outer ring for closing the bearing space; in which a shoulder portion is formed between a seal groove, formed at a location laterally of a raceway in the inner ring; the sealing member is mounted on an inner peripheral surface of the outer ring opposed to the seal groove and has an inner periphery side tip portion provided with a primary sealing lip and a labyrinth lip protruding above the shoulder portion; and in which the primary sealing lip is provided with an inner peripheral face opposed to the seal groove; and the labyrinth lip is provided with an inclined face having its diameter gradually increasing towards a tip portion of the labyrinth seal.

According to the construction described above, since the snap cage is provided with the previously described recessed areas, the grease leakage from the cage back face side can be suppressed. Accordingly, deposition of the grease onto the cage outer diametric portion or the like can be avoided. Also, since the inner peripheral portion of the sealing member is provided with the primary sealing lip and the labyrinth lip and since the primary sealing lip is provided with an inner peripheral face held in opposition to the seal groove and the inner periphery of the labyrinth lip is formed with an inclined face, the tip portion of the primary sealing lip, which is a contact seal, can be caused to contact the raceway side groove wall of the seal groove at a contact position lower than the upper end position of the shoulder portion side groove wall opposed to the raceway side groove wall of the seal groove. Accordingly, muddy water when scattered will not directly reach the tip portion of the sealing lip. Therefore, even when this bearing assembly is used under the environment in which muddy water or the like scatters, the tip portion of the sealing lip can be brought into stable contact with the raceway side groove wall of the seal groove, allowing the sealing property of the contact seal to be exhibited sufficiently. Thus, not only can the grease leakage within the bearing assembly be prevented, but the resistance to muddy water can also be obtained. Therefore, since there is no need to increase the tightening force of the sealing lip or the like, the low bearing torque can be accomplished.

A method of making a cage of the present invention for a ball bearing assembly as defined in claim 14 includes the steps of forming a pawl component separately from and independent of a cage body, the pawl component having pawl tip portions of pawls protruding at least from pawl portions on a cage inner diametric side of respective pawl portions on a cage outer diametric side; and bonding, fusion bonding or mounting the pawl component on the cage body after the cage body has been assembled in inner and outer rings and balls of the ball bearing assembly.

According to the method described above, at the time of incorporation of the cage, occurrence of the blanching and/or the fracture at the root of the pawls can be avoided.

A method of manufacturing the cage of a different construction according to the present invention for a ball bearing assembly as defined in claim 15 includes the steps of manufacturing a half-finished cage component, in which pawl tip portions of pawls protruding at least from pawl portions on a cage inner diametric side of respective pawl portions on a cage outer diametric side are spaced from a center of each of pockets an extent larger than those assumed when completed, to assume an opened posture; and effecting a thermal deformation or a secondary processing to allow the pawl tip portions to assume a closed posture to follow a corresponding ball surface after the cage body has been assembled in inner and outer rings and balls of the ball bearing assembly.

According to the method described above, during incorporation of the cage, occurrence of the blanching and/or fracture at the root of the pawls can be avoided.

### BRIEF DESCRIPTION OF THE DRAWINGS

In any event, the present invention will become more clearly understood from the following description of preferred embodiments of the invention as well as embodiments not in accordance with the invention illustrating some features of the invention and preferred features thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a fragmentary perspective view, with a portion cut out, of a ball bearing assembly having a cage assembled therein in accordance with a first embodiment;
Fig. 2 is a partially enlarged sectional view of the ball bearing assembly shown in Fig. 1;
Fig. 3 is a schematic perspective view of the cage in the ball bearing assembly according to the first embodiment;
Fig 4A is a partially enlarged perspective view of the cage shown in Fig. 3;
Fig. 4B is a partially enlarged perspective view of the cage, in which the imaginary cylinders are added;
Fig. 4C is a partially enlarged longitudinal sectional view of the cage shown in Fig. 4B;
Fig. 5A is a partially enlarged perspective view showing a modified form of the cage;
Fig. 5B is a perspective view of the modified form of the cage, with the imaginary polygonal columns added thereto;
Fig. 6A is a partially enlarged perspective view showing another modified form of the cage;
Fig. 6B is a perspective view of the modified form of the cage, with the imaginary ring added thereto;
Fig. 7 is an explanatory diagram showing the relation between each of pockets and the imaginary ring in a sectional representation;
Fig. 8 is a fragmentary perspective view of the cage in the ball bearing assembly in accordance with a second embodiment;
Fig. 9 is a fragmentary perspective view of the cage in the ball bearing assembly in accordance with a third embodiment;
Fig. 10 is a partially enlarged perspective view showing a portion of the cage in the ball bearing assembly in accordance with a fourth embodiment;
Fig. 11 is a partially enlarged perspective view showing a portion of the cage in the ball bearing assembly in accordance with a fifth embodiment;
Fig. 12 is a partially enlarged perspective view showing a portion of the cage in the ball bearing assembly in accordance with a sixth embodiment;
Fig. 13 is an explanatory diagram used to explain the relation in axial position between each of the pockets in the cage in the ball bearing assembly and an inner ring raceway surface;
Fig. 14A is an explanatory diagram used to explain the result of a grease leakage test conducted on the ball bearing assembly utilizing the cage of the structure shown in Figs. 4A to 4C;
Fig. 14B is a partially enlarged view showing a portion of Fig. 14A;
Fig. 15A is an explanatory diagram used to explain the result of a grease leakage test conducted on the ball bearing assembly utilizing the standard snap cage;
Fig. 15B is a partially enlarged view showing a portion of Fig. 15A;
Fig. 16A is a partially enlarged perspective view of the cage in the ball bearing assembly according to a seventh embodiment;
Fig. 16B is a perspective view of the cage of Fig. 16A with the imaginary cylinder added thereto;
Fig. 17 is a sectional view of a double row ball bearing assembly utilizing the cage of the structure according to the seventh embodiment;
Fig. 18 is a partially enlarged perspective view of the cage in the ball bearing assembly according to an eighth embodiment;
Fig. 19 is a fragmentary longitudinal sectional view of the cage viewed as cut in a plane containing a bearing axis;
Fig. 20 is a fragmentary top plan view showing the cage as viewed in a direction from a cage outer diametric side;
Fig. 21 is a diagram of the cage in the ball bearing assembly according to a ninth embodiment, showing one example thereof in which a plate member of a size effective to avoid intrusion of pawls on an counter side is provided in a reinforcement portion of the bottom of each of the pockets;
Fig. 22 is a perspective view of the cage shown in Fig. 21;
Fig. 23 is a perspective view of the cage in the ball bearing assembly according to a tenth embodiment, showing an example of the cage of a kind in which an outer diametric toric portion is used as a wall face;
Fig. 24 is a perspective view showing an example, in which the wall face shown in Fig. 23 is inclined;
Fig. 25 is a perspective view of the cage in the ball bearing assembly according to an eleventh embodiment, showing an example, in which an outer diametric toric portion is used as a wall face and a portion of the cage outer diametric surface excluding a cage rear face is removed;
Fig. 26A is a diagram showing a stress distribution appearing when a centrifugal force acts on the standard snap cage;
Fig. 26B is a diagram showing a displacement distribution appearing in the standard cage;
Fig. 27A is a diagram showing the stress distribution appearing when the centrifugal force acts on the snap cage of a type having recessed areas defined in each of pocket inner faces;
Fig. 27B is a diagram showing the displacement distribution appearing in the snap cage shown in Fig. 27A;
Fig. 28A is a diagram showing the stress distribution appearing when the centrifugal force acts on the snap cage of a type in which the recessed areas are provided in each of the pocket inner faces and a toric portion is removed;
Fig. 28B is a diagram showing the displacement distribution appearing in the snap cage shown in Fig. 28A;
Fig. 29A is a diagram showing the stress distribution appearing when the centrifugal force acts on the snap cage of a type having the shape shown in Figs. 28A and 28B, but having each of the pockets increased in wall thickness;
Fig. 29B is a diagram showing the displacement distribution appearing in the snap cage shown in Fig. 29A;
Fig. 30A is a diagram showing the stress distribution appearing when the centrifugal force acts on the snap cage of a type having the shape shown in Figs. 28A and 28B, but having an outer diametric portion reinforced;
Fig. 30B is a diagram showing the displacement distribution appearing in the snap cage shown in Fig. 30A;
Fig. 31A is a diagram showing the stress distribution appearing when the centrifugal force acts on the snap cage of a type, in which the shapes shown respectively in Figs. 29A and 29B and Figs. 30A and 30B are combined;
Fig. 31B is a diagram showing the displacement distribution appearing in the snap cage shown in Fig. 31A;
Fig. 32A is a diagram showing the stress distribution appearing when the centrifugal force acts on the snap cage of a type, in which a reinforcement portion is formed in a toric shape;
Fig. 32B is a diagram showing the displacement distribution appearing in the snap cage shown in Fig. 32A;
Fig. 33A is a diagram showing the stress distribution appearing when the centrifugal force acts on the snap cage of a type, in which an outer diametric toric portion is rendered to be a wall face;
Fig. 33B is a diagram showing the displacement distribution appearing in the snap cage shown in Fig. 33A;
Fig. 34A is a diagram showing the stress distribution appearing when the centrifugal force acts on the snap cage of a type, in which the wall face shown in Figs. 33A and 33B is inclined;
Fig. 34B is a diagram showing the displacement distribution appearing in the snap cage shown in Fig. 34A;
Fig. 35A is a diagram showing the stress distribution appearing when the centrifugal force acts on the snap cage of a type, in which a cage outer diametric side is removed;
Fig. 35B is a diagram showing the displacement distribution appearing in the snap cage shown in Fig. 35A;
Fig. 36 is a diagram showing the stress distribution appearing as a result of analysis when a displacement simulating a delayed advance of rolling elements is applied to the standard snap cage;
Fig. 37 is a diagram showing the stress distribution appearing as a result of analysis when a displacement simulating a delayed advance of rolling elements is applied to the standard snap cage;
Fig. 38 is a diagram showing the stress distribution appearing as a result of analysis when a displacement simulating a delayed advance of rolling elements is applied to the cage of the type shown in Figs. 31A and 31B;
Fig. 39 is a diagram showing the stress distribution appearing as a result of analysis when a displacement simulating a delayed advance of rolling elements is applied to the cage of the type shown in Figs. 31A and 31B;
Fig. 40A is a fragmentary perspective view showing the shape of each of the pockets in the cage;
Fig. 40B is a fragmentary enlarged view of the perspective view shown in Fig. 40A;
Fig. 41A is a sectional view of the ball bearing assembly having the standard sealing member employed therein;
Fig. 41B is a sectional view of the ball bearing assembly of a type, in which an outer diametric portion of the cage is reinforced;
Fig. 42 is a diagram showing the manner in which when the cages are overlapped, the pocket bottom side engages in the counter pawl side;
Fig. 43 is a perspective view showing an example of analysis when a cage cut face is constrained in a θ-direction relative to half the circumference of the cage and one of the pockets is forcibly displaced in the θ-direction in a surface area in which the rolling elements contact;
Fig. 44 is a sectional view of the ball bearing assembly of a type in which any one of the snap cages shown in Figs. 29A and 29B to Figs. 35A and 35B is incorporated;
Fig. 45 is a sectional view showing the use of the bearing assembly of the present disclosure in an idler pulley;
Fig. 46 is a sectional view showing the use of the bearing assembly of the present disclosure in an alternator;
Fig. 47 is a sectional view showing the use of the bearing assembly of the present disclosure in a motorcycle reduction gear unit;
Fig. 48 is a sectional view showing the use of the bearing assembly of the present disclosure in an automatic transmission;
Fig. 49 is a sectional view showing a planetary gear mechanism which is an important part of Fig. 48;
Fig. 50 is a sectional view showing the use of the bearing assembly of the present disclosure in a continuously variable transmission;
Fig. 51 is a perspective view showing the cage in the ball bearing assembly according to a twelfth preferred embodiment which is in accordance with the present invention;
Fig. 52 is an explanatory diagram showing a method of making the cage for use in the ball bearing assembly;
Fig. 53 is an explanatory diagram showing a modified form of the method of making the cage for use in the ball bearing assembly;
Fig. 54 is an explanatory diagram used to explain the angle of a pawl tip of the cage for use in the ball bearing assembly as measured from the center of each of the pockets;
Fig. 55 is an explanatory diagram used to explain the width of each of the pawls used in the cage for use in the ball bearing assembly;
Fig. 56A and 56B are explanatory diagrams used to explain the behavior of the grease in the cage for use in the ball bearing assembly;
Fig. 57 is a chart showing results of tests conducted to determine the relation between the angle of the pawl tip on a cage outer diametric side of the cage for use in the ball bearing assembly and the rate of leakage of the grease;
Fig. 58 is a chart showing results of tests conducted to determine the relation between the width of the pawl on the cage outer diametric side of the cage for use in the ball bearing assembly as measured from the center of the pocket and the rate of leakage of the grease;
Fig. 59 is an explanatory diagram used to explain results of a grease leakage test conducted on the ball bearing assembly having the cage assembled therein;
Fig. 60 is an explanatory diagram used to explain results of a grease leakage test conducted on the ball bearing assembly having the standard snap cage assembled therein;
Fig. 61 is a side view showing a modified form of the pawl employed in the cage for use in the ball bearing assembly;
Fig. 62 is a side view showing a further modified form of the pawl employed in the cage for use in the ball bearing assembly;
Fig. 63 is an explanatory diagram showing the method of making the cage shown in Fig. 62;
Fig. 64 is a partially enlarged sectional view showing an angular contact ball bearing assembly according to a thirteenth embodiment;
Fig. 65 is a sectional view showing an important portion of the angular contact ball bearing assembly as enlarged;
Fig. 66A is an enlarged sectional view showing a small groove in a slidable contact area of a sealing structure;
Fig. 66B is an enlarged sectional view showing a contact sealing member at the slidable contact area;
Fig. 67 is a chart showing result of actual measurement of the torque value;
Fig. 68 is a chart showing results of actual measurement of the amount of leakage from the seal;
Fig. 69 is a fragmentary enlarged sectional view showing the angular contact ball bearing assembly according to a fourteenth embodiment;
Fig. 70 is a fragmentary enlarged sectional view showing the angular contact ball bearing assembly according to a fifteenth embodiment;
Fig. 71 is a fragmentary enlarged sectional view showing the double row angular contact ball bearing assembly according to a sixteenth embodiment;
Fig. 72A is a fragmentary enlarged sectional view of a sealing member in accordance with a seventeenth embodiment;
Fig. 72B is a partially enlarged sectional view of a comparative example;
Fig. 73A is a partially enlarged sectional view showing a suggested example 1 presented for the purpose of reference;
Fig. 73B is a partially enlarged sectional view showing a suggested example 2 presented for the purpose of reference;
Fig. 74 is a fragmentary enlarged sectional view showing the angular contact ball bearing assembly according to an eighteenth embodiment;
Fig. 75 is a perspective view showing a portion of the sealing lip segment employed in the angular contact ball bearing assembly shown in Fig. 74;
Fig. 76 is a sectional view showing the sealing lip segment held in a normal condition;
Fig. 77 is a sectional view showing the sealing lip segment held in a sucked condition;
Fig. 78A is a sectional view showing a primary sealing lip and a projection in the sealing lip segment held in contact with the seal groove;
Fig. 78B is a cross sectional view taken along the line A-A in Fig. 78A;
Fig. 78C is a sectional view showing a condition of a sealing lip tip portion when the inner ring is rotated;
Fig. 79 is a partially enlarged sectional view showing the angular contact ball bearing assembly according to a nineteenth embodiment;
Fig. 80 is a partially enlarged sectional view showing the angular contact ball bearing assembly according to a twentieth embodiment;
Fig. 81 is a partially enlarged sectional view showing the double row angular contact ball bearing assembly according to a twenty first embodiment;
Fig. 82A is a perspective view showing a portion of the sealing lip segment employed in the rolling bearing assembly according to a twenty second embodiment;
Fig. 82B is a sectional view showing the sealing lip segment, employed in the rolling bearing assembly of Fig. 82A, held in the normal condition;
Fig. 82C is a sectional view showing the seal lip segment employed in the rolling bearing assembly of Fig. 82A, held in the sucked condition;
Fig. 83A is a sectional view showing the condition in which the primary sealing lip and the projection are held in contact with the seal groove;
Fig. 83B is a cross sectional view taken along the line B-B in Fig. 83A;
Fig. 83C is a sectional view showing the condition of the sealing lip tip portion when the inner ring is rotated;
Fig. 84 is a partially enlarged sectional view showing the angular contact ball bearing assembly according to a twenty third embodiment;
Fig. 85 is a sectional view showing the sealing member in the angular contact ball bearing assembly of Fig. 84 before it is incorporated in the bearing assembly;
Fig. 86 is a sectional view of a portion of Figs. 82A to 82C shown on an enlarged scale;
Fig. 87 is a sectional view of that portion of Figs. 82A to 82C shown on a further enlarged scale;
Fig. 88 is a chart showing results of a foreign matter intrusion test;
Fig. 89 is a partially enlarged sectional view showing the angular contact ball bearing assembly according to a twenty fourth embodiment;
Fig. 90 is a partially enlarged sectional view showing the angular contact ball bearing assembly according to a twenty fifth embodiment;
Fig. 91A is a partially enlarged sectional view of the double row angular contact bearing assembly according to a twenty sixth embodiment;
Fig. 91B is a sectional view showing the double row angular contact bearing assembly of Fig. 91A before the sealing member is assembled therein;
Fig. 92 is a partially enlarged sectional view showing the bearing assembly for use with a rotary encoder equipped motor according to a twenty seventh embodiment; and
Fig. 93 is a partially enlarged sectional view of the bearing assembly shown in Fig. 92.

### [Reference Numerals]

- 1:: Ball bearing assembly
- 2:: Inner ring
- 2a:: Raceway surface
- 2D:: Inner ring outer diametric surface
- 3:: Outer ring
- 4:: Ball
- 5:: Cage
- 5A:: Cage body
- 5B:: Half-finished cage
- 6:: Sealing member (Contact sealing member)
- 8Ab:: Branched portion
- 8Ac:: Primary sealing lip
- 8Ad:: Auxiliary sealing lip
- 10:: Seal groove
- 11:: Pocket
- 12:: Annular cage body
- 14:: Tip portion (Pawl) of the pocket
- 14a:: Pawl on a cage inner diametric side
- 14b:: Pawl on a cage outer diametric side
- 14ba:: Pawl component (Pawl tip portion)
- 14A:: Pawl component
- 16:: Recessed area
- Ln:: Labyrinth lip
- Lna:: Inclined face
- Lm:: Primary sealing lip
- Lmb:: Inner peripheral surface
- Ls:: Labyrinth seal
- S1:: Contact sealing member
- SL:: Sealing lip segment
- Tk:: Projection
- V1:: Bearing space

### DESCRIPTION OF THE EMBODIMENTS

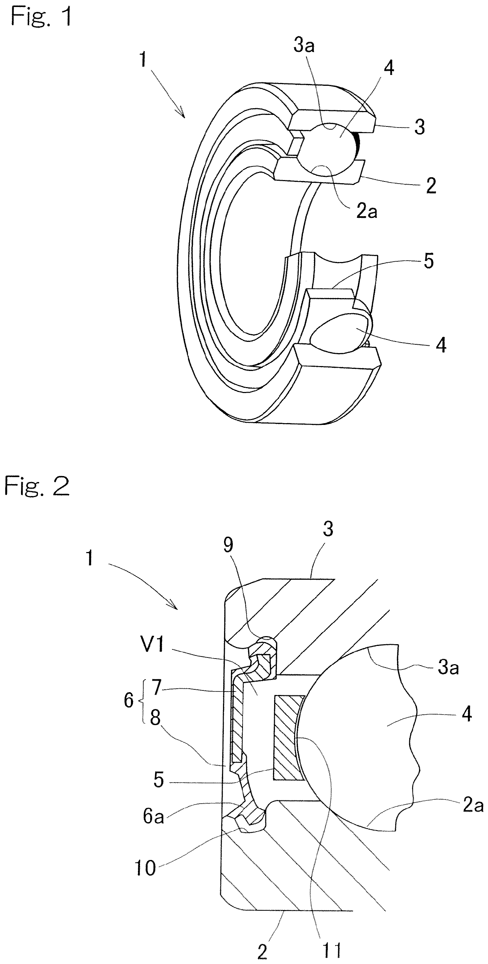

A first embodiment be described in detail with particular reference to some of the accompanying drawings. Figs. 1 and 2 illustrate a perspective view, with a portion cut out, of and a fragmentary enlarged sectional view of a ball bearing assembly to which a cage for use in a ball bearing assembly according to the first embodiment is applied. This ball bearing assembly 1 is in the form of a sealed deep groove ball bearing and includes a plurality of bearing balls 4 interposed between raceway surfaces 2a and 3a defined in inner and outer rings 2 and 3, respectively, a cage 5 for retaining those balls 4 in a circular row and a contact sealing member 6 for sealing each of the opposite open ends of an annular bearing space VI delimited between the inner and outer rings 2 and 3. A grease composition as will be described later may be filled within the bearing space VI. The bearing balls 4 are employed in the form of steel balls. The contact sealing member 6 includes an annular core metal 7 and a rubber-like member 8 secured firmly to the core metal 7 and has its outer peripheral portion engaged in a seal mounting groove 9 defined in an inner peripheral surface of the outer ring 3. The inner ring 2 has a seal groove 10 in the form of a circumferentially extending groove defined therein at a location corresponding to an inner peripheral portion of the respective contact sealing member 6. The contact sealing member 6 also has a sealing lip 6a formed in an inner peripheral edge thereof for sliding engagement with the sealing groove 10 defined in the inner ring 2.

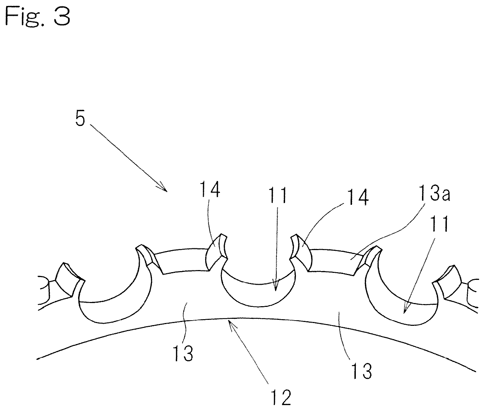

As best shown in Fig. 3, the cage 5 is a so called snap cage of a crown shaped configuration and includes an annular cage body 12 having pockets 11 defined in a row in a direction circumferentially thereof to freely rotatably accommodate the bearing balls 4 therein. Each of the pockets 11 is axially opened in part at one axial end (side edge) of the annular cage body 12 and has an inner face representing a concave curve conforming to the curvature of an outer surface of each of the bearing balls 4. The annular cage body 12 has bridge portions 13 each defined therein at a location between the neighboring pockets 11 and 11. The annular cage body 12 also has a pair of pawl-like tip segments (pawls) 14 and 14 employed for each of the pockets 11 and formed in that axial end of the annular cage body 12 adjacent the opening of the respective pocket 11 so as to protrude axially of the annular cage body 12. The pair of pawls 14 and 14 confront each other in the circumferential direction. It is to be noted that in the specification herein presented, an axial side face on the side, where the pockets 11 are opened in the direction axially of the annular cage body 12 is referred to as a pocket side whereas the axial side face opposite to the axial side face now referred to as the pocket side is referred to as a back face side.

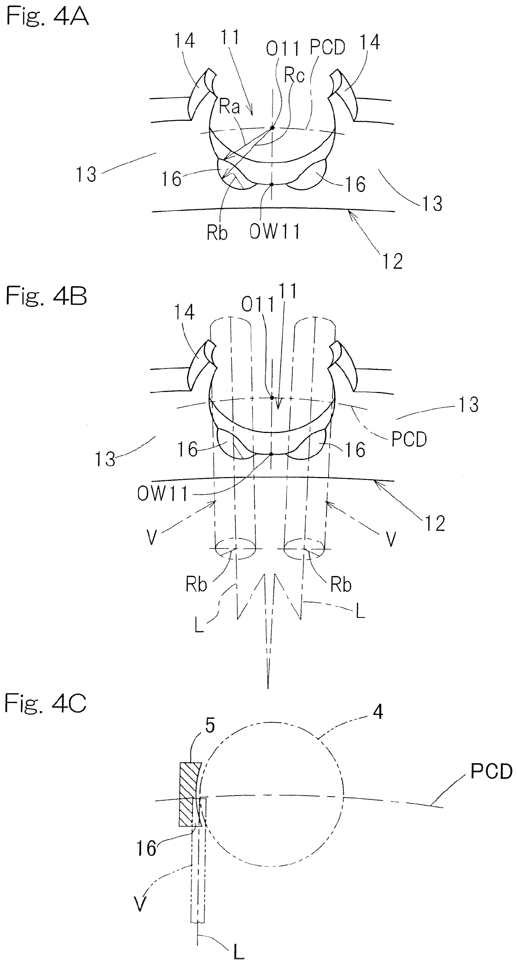

A portion of the cage 5 is shown in a perspective view in Fig. 4A on an enlarged scale. Fig. 3 is a view of a portion of the annular cage body 12, which corresponds to that shown in Figs. 4A to 4C, in which each of the pocket inner faces is represented by a monotonous spherical face. The inner face of each of the pockets 11 employed in the cage 5 in this embodiment is provided with a plurality of recessed areas 16 each extending from the corresponding pocket open edge on a cage inner diametric side towards a cage outer diametric side as best shown in Fig. 4A. The provision of the recessed areas 16 is effective to reduce the amount of grease depositing on the balls 4, but scraped off therefrom by the inner diametric surface of the cage 5 to thereby avoid an undesirable deposition of the grease on an outer diametric portion of the inner ring 2. In the illustrated instance, two recessed areas 16 are employed for each of the pockets 11 and are positioned at open edges of the pockets 11 on respective sides of a center OW11 of each open edge in a direction circumferentially of the cage 5.

Each of the recessed areas 16 has an inner face of such a shape that the sectional shape taken along the direction circumferentially of the cage 5 (that is, the sectional shape in a plane perpendicular to the cage center axis) represents an arcuate shape of a radius of curvature Rb, which is smaller than the radius of curvature Ra of the concave spherical surface defining the inner face of each of the pockets 11 and, more specifically, represents, as best shown in Fig. 4C, a shape of a cylindrical surface substantially parallel to the surface of the imaginary cylinder V having its center lying on the straight line L drawn in a direction radially of the cage 5. As shown in Fig. 4B, each of the recessed areas 16 is of such a shape as to extend in the radial direction of the cage 5 from the pocket open edge on the cage inner diametric side to a position proximate to the pitch circle PCD depicted by the circular row of the bearing balls 4, gradually decreasing from the cage inner diametric edge towards the ball row pitch circle PCD, that is, gradually becoming narrow in width. It is to be noted that the pitch circle PCD depicted by the circular row of the bearing balls 4 referred to above may also be called the "pocket PCD".

That pair of the recessed areas 16 are positioned symmetrically relative to each other at respective positions so selected that the angle of orientation in the circumferential direction of the cage 5 relative to the center OW11 of the cage circumferential direction at the open edge of each pocket 11 is within the range of 40° ± 15°. Each of those recessed areas 16 has a depth so selected that the distance Rc from the center Oil of the spherical surface depicted by each of the pocket inner faces to the deepest position of each of the recessed areas 16 is preferably equal to or greater than 1.05 times of the radius of each of the bearing balls 4.

It is to be noted that although in the illustrated embodiment reference has been made to the use of the pair of the recessed areas 16, three or more recessed areas may be employed.

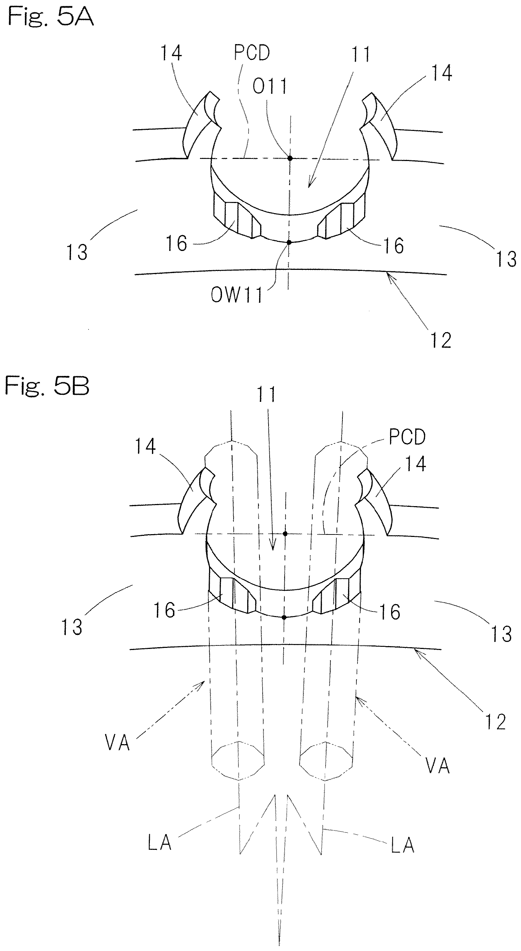

Figs. 5A and 5B illustrate a modified example of the shape of the inner face of each of the pockets 11 in the cage 5. Instead of the arcuate shape represented by the sectional shape (the sectional shape along the cage circumferential direction) of each of the recessed areas 16 in the embodiment shown in and described with particular reference to Figs. 4A to 4C, a polygonal shape is employed. More specifically, as best shown in Fig. 5B, the inner face of each of the pockets 11 has a substantially polygonal shape along the surface of the polygonal column (the regular decagonal column) having its center lying on the straight line LA extending in a direction radially of the cage 5. Each of the recessed areas 16 is of such a shape as to extend in the radial direction of the cage 5 from the open edge on the cage inner diametric side to a position proximate to the pitch circle PCD, gradually decreasing from the cage inner diametric edge towards the ball row pitch circle PCD, that is, gradually becoming narrow in width. Other structural features in this modified example than those described above are similar to those shown and described in connection with the example of Figs. 4A to 4C.

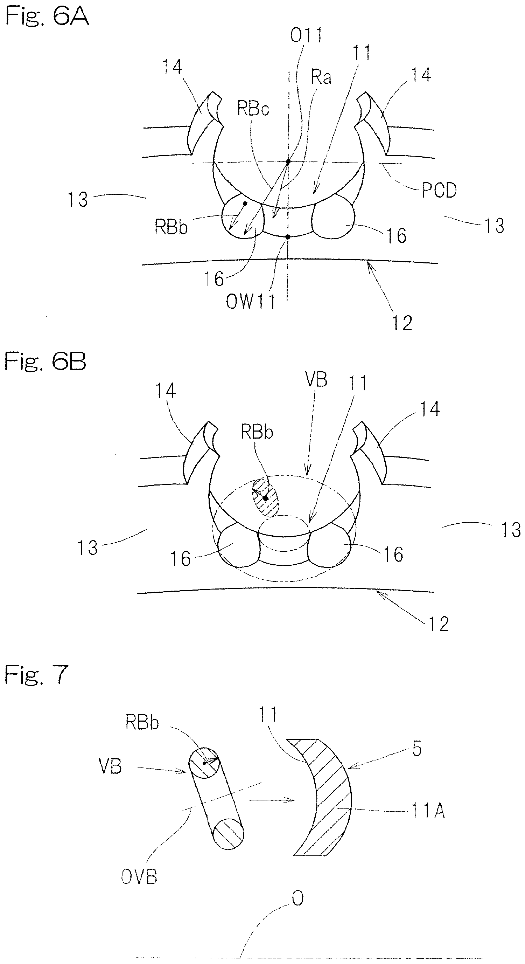

Figs. 6A and 6B illustrate a further modified example of the inner face of each of the pockets 11 in the cage 5. According to this further modified example, although the recessed areas 16 defined in the inner face of each of the pockets 11 are provided at the two locations on opposite sides of the center OW11 at the open edge of the associated pocket 11 in the cage circumferential direction in a manner similar to those shown and described with reference to Figs. 4A to 4C, each of the recessed areas 16 extends to a portion proximate to a cage outer diametric edge. The sectional shape of the inner face of each of those recessed areas 16 as viewed in the cage circumferential direction is an arcuate shape having a radius of curvature RBb, which is smaller than the radius of curvature Ra of the spherical surface defining the inner face of each of the pockets 11 and, more specifically, as best shown in Fig. 6B, a shape substantially parallel to the surface of the imaginary ring VB. This imaginary ring VB may be an outer surface of a grindstone that is used to process each of those recessed areas 16. The imaginary ring VB is represented by a ring shape of a diameter sufficient to allow it to be accommodated within the respective pocket 11, whose sectional shape at any arbitrary circumferential position represents a round shape and, as shown in Fig. 7, the ring center OVB is inclined relative to the cage center axis O.

It is to be noted that in the practice of the present disclosure, the sectional shape of each of the recessed areas 16 along the cage circumferential direction may not be necessarily limited to that described in connection with any one of the respective examples shown in and described with reference to Figs. 4A to 4C, Figs. 5A and 5B and Figs. 6A and 6B, a partially oval shape, a rectangular groove shape, a trapezoidal groove shape or any arbitrarily chosen sectional shape may be employed therefor. It is also to be noted that the sectional shape of each of the recessed areas 16 may be of a asymmetrical shape with respect to the center of the respective recessed area 16. In addition, the shape of the inner face of each of the pockets 11 in the cage 5 may not be necessarily limited to the spherical shape as described above, but may be of any suitable shape, provided that a portion thereof on the inner diametric side of the ball row pitch circle PCD attains a small diameter as it approaches the open edge on the cage inner diametric side and, for example, the inner face of each of the pockets 11 may be so shaped that a portion thereof on an outer diametric side of the ball row pitch circle PCD may represent a cylindrical surface shape while a portion thereof on the inner diametric side may represent a conical surface shape.

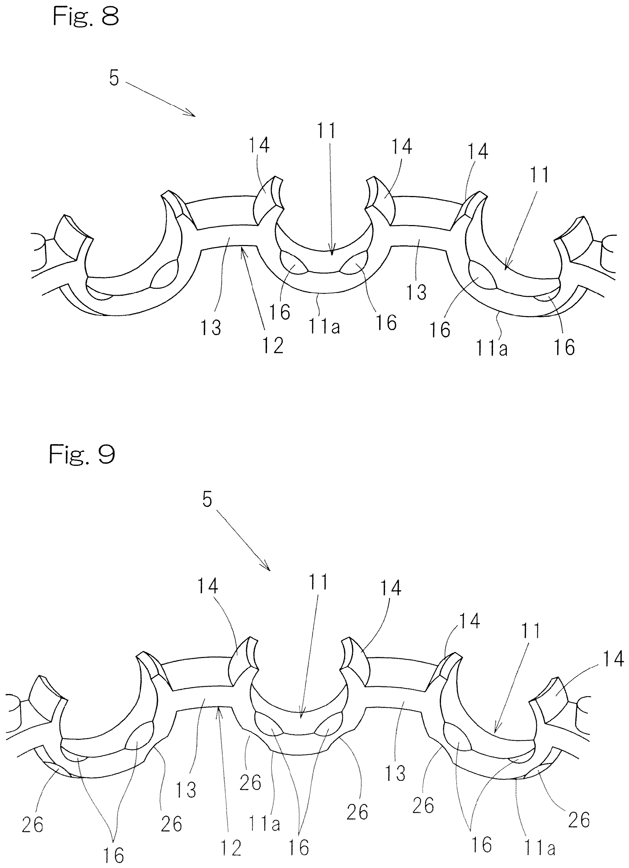

Fig. 2 illustrates a second embodiment. The cage 5 for the ball bearing assembly shown therein is of such a structure that in the cage described in connection with any one of the respective examples shown in and described with reference to Figs. 4A to 4C, Figs. 5A and 5B and Figs. 6A and 6B, the back face side of an inner diametric surface of each of the bridge portions 13 is removed. By so doing, in each of the pockets 11, the rear face thereof comes to represent such a shape as surrounded by a corresponding arcuate shell portion 11a. Although in any one of the respective examples shown in and described with reference to Figs. 4A to 4C, Figs. 5A and 5B and Figs. 6A and 6B, the amount of grease deposited on or adhering to the bearing balls 4, but scraped off therefrom by the inner diametric surface of the cage 5 can be reduced, an increase of the amount of the grease deposited leads to an undesirable leakage of grease in the event that even a slight amount of the grease deposits. In other words, in such case, the grease will deposit also on the inner diametric surfaces of the bridge portions 13 and the grease deposited there will not move in any direction other than the axial direction. If the axial range of those bridge portions 13 overlaps the region where the outer diametric portion of the inner ring 2 exists, that is, where the inner diametric surfaces of those bridge portions 13 are positioned on one side adjacent a bearing end face and remote from the raceway surface 2a of the inner ring 2, the grease will leak from the inner diametric surfaces of the bridge portions 13 to the outside of the bearing assembly. In view of this, if the back face side of the inner diametric surface of each of the bridge portions 13 is removed as shown in Fig. 8, it is possible to prevent the grease from leaking from the inner diametric surface of each of the bridge portions 13 to the outside of the bearing assembly.

It is to be noted that although in the embodiment shown in Fig. 8, the example has been shown and described, in which on the back face side of each of the bridge portions 13, a portion ranging from the inner diametric surface to the outer diametric surface has been removed, the amount of that portion removed is preferably as small as possible when the strength of the cage 5 is taken into consideration. Considering that suppression of the grease from depositing on or adhering to the outer diametric portion of the inner ring 2 is effectively accomplished if the distance between the outer diametric surface of the inner ring 2 and the inner diametric surface of the cage 5 is increased, only the inner diametric side of each of the bridge portions 13 may be removed partially while a wall face such as found in the conventional example may be left on the outer diametric side.

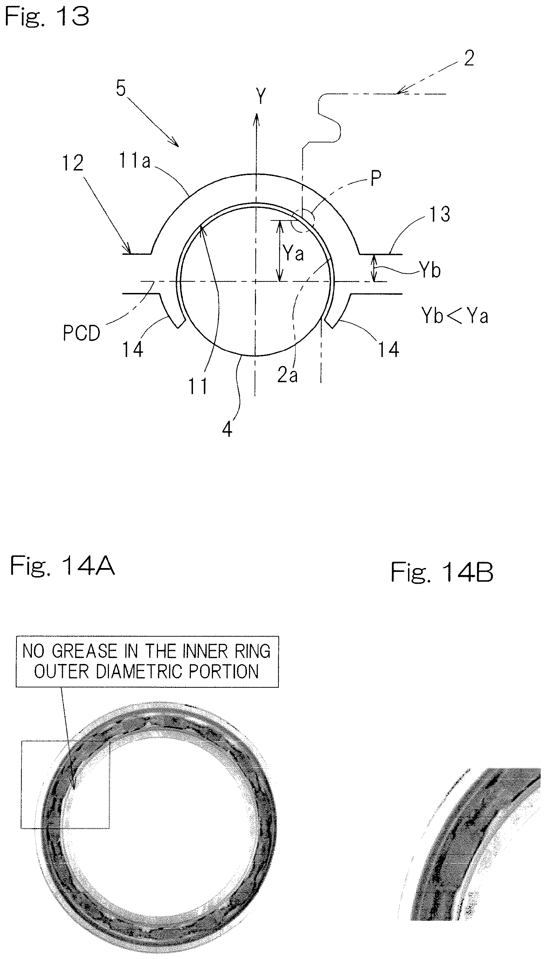

In avoiding the grease leakage, it is important that the axial position of one end on the back face side of the inner diametric surface of each of the bridge portions 13, which is left unremoved, should lie on an intermediate side of the raceway surface 2a of the inner ring 2, rather than a shoulder of the raceway surface 2a of the inner ring 2, as viewed in the section at the intermediate position in the circumferential direction of the bridge portions 13 each defined between the neighboring pockets 11 and 11. This is shown in Fig. 13 as a schematic diagram, in which the sectional representation of the inner ring 2, shown by the phantom line, is superimposed on the cage 5 of Fig. 8 to show the positional relation in the axial direction Y. In other words, referring to Fig. 13, the axial position or distance Yb of each of the bridge portions 13 from the PCD suffices to be positioned on the intermediate side of the raceway surface 2a of the inner ring 2, rather than the axial position Ya of the shoulder of the raceway surface 2a of the inner ring 2 (Yb < Ya).

Also, the position of Yb in that figure is the position on the back face side where the inner diametric surface of the bridge portion 13 may exist, and an outer wall face extending to the same position as the axial position on the back face side at the center of each pocket 11 may exist on an outer diametric side thereof. Similarly, it may be so shaped that the axial thickness of each bridge portion 13 as measured from the position of Yb to the outer diametric side may gradually or stepwise increase towards the back face side.

Fig. 9 illustrates a third embodiment. The cage 5 for the ball bearing assembly shown therein is of a structure, in which in the embodiment shown in and described with reference to Fig. 8, the thickness of the shell portion 11a of each of the pockets 11 is rendered to be relatively large. Increase of the thickness of the shell portion 11a in this case is effective to increase the strength of the cage itself, but it will result in increase of the surface area of the inner diametric surface of the cage 5 and, therefore, there is the possibility that the grease leakage may be promoted. Above all, in the inner diametric surface of the cage 5, since the position at which the amount of grease deposited becomes large will be in the vicinity of the axial position (as indicated by P), which coincides with the shoulder of the raceway surface 2a of the inner ring 2 shown in Fig. 13, it is important to reduce the surface area of the inner diametric surface of the cage 5 in the vicinity of this axial position. Accordingly, in this embodiment, the use of recessed areas 26 is also made on an outer surface of the shell portion 11a of each of the pockets 11 to thereby reduce the surface area of the inner diametric surface of the respective shell portion 11a. By so doing, not only can the amount of the grease deposited on the inner diametric surface of the cage 5 be reduced, but the strength of the cage itself can also be increased.

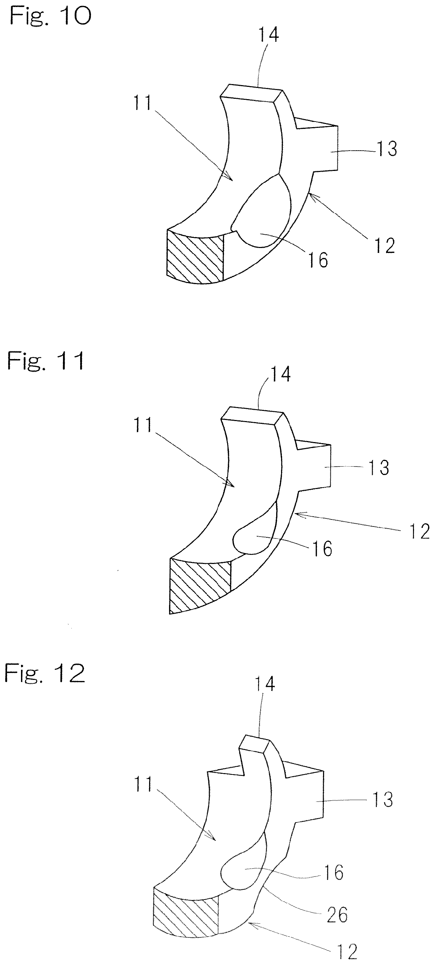

It is to be noted that in order to reduce the surface area of the inner diametric surface of the cage 5, each of the recessed areas 16 employed in the inner surface of the corresponding pocket 11 may be increased as shown in Fig. 10 in a partially enlarged perspective view illustrating a fourth embodiment.

It is also to be noted that as shown in Fig. 11 in a partial enlarged perspective view illustrating a fifth embodiment, the annular cage body 12 forming a part of the cage 5 may be so designed and so shaped that the axial thickness on the inner diametric side thereof is chosen to be small and, at the same time, the thickness increases gradually towards the outer diametric side, to thereby reduce the surface area of the inner diametric surface of the cage 5. Similarly, the axial thickness of the annular cage body 12 may be stepwise increased from the inner diametric side towards the outer diametric side.

A sixth embodiment is shown in Fig. 12. The cage 5 for the ball bearing assembly shown therein is of a structure, in which in the embodiment shown in and described with reference to Fig. 9, the pair of the tip segments 14 of each of the pockets 11, which protrude towards the open side of such pocket 11, are partly removed to reduce the weight. In the case where the ball bearing assembly 1 is used at high speed rotation, influences brought about by a centrifugal force acting on the cage 5 will become considerable. In order to reduce the stress imposed on the cage 5 as a result of the centrifugal force, reduction in weight of the cage 5 is effective. In view of this, in this embodiment, the shape is so chosen that each of the tip segments 14 is partially removed at an outer diametric side thereof. During the high speed rotation, since the tip segments 14 in the cage 5 tend to be deformed to incline towards the outer diametric side relative to the axial center portion of the corresponding pocket 11, the associated bearing ball 4 will be guided on the inner diametric side of the tip segments 14. Accordingly, even though the outer diametric side of each of the tip segments 14 is partially removed as hereinabove described, no adverse effect will occur in bearing functionality.

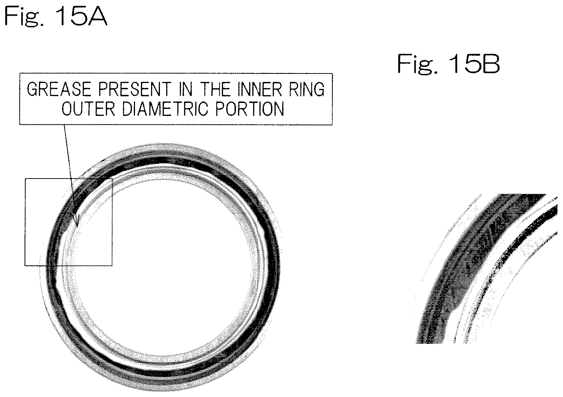

Figs. 14A and 14B and Figs. 15A and 15B illustrate respective results of tests conducted to ascertain the presence or absence of grease deposited on the inner ring inner diametric portions. During those tests, the ball bearing assembly assembled therein the cage 5 of the structure according to the embodiment of Fig. 8 and the ball bearing assembly assembled therein the standard snap cage were operated under the same conditions and were then compared with each other. Figs. 14A and 14B illustrate the condition of the grease deposition on the ball bearing assembly of the structure utilizing the cage 5 according to the embodiment of Fig. 8 whereas Figs. 15A and 15B illustrate the condition of the grease deposition on the standard snap cage.

The results of the tests shown respectively in Figs. 14A and 14B and Fig. 15A and 15B show that in the ball bearing assembly incorporating the standard snap cage (Fig. 15A and 15B), a substantial amount of grease was found existing between the cage inner diametric surface and the outer diametric portion of the inner ring and, hence, a portion of the grease was found leaking towards the inner ring seal groove in a direction forwardly of a sheet plane. If the sealing member is mounted, the grease will flow between the seal groove and the sealing tip and will then leak to the outside of the bearing assembly as the temperature inside the bearing assembly increases. In the ball bearing assembly (Figs. 14A and 14B) incorporating therein the cage 5 according to the embodiment, it has been found that no grease deposition occurred in the inner ring outer diametric portion although a very small amount of grease deposited on the inner diametric portion of the cage 5.

As can readily be understood from the results of those tests, in the cage 5 for the ball bearing assembly according to this embodiment, as a result that the recessed areas 16 extending from the pocket open edge on the cage inner diametric side towards the cage outer diametric side are provided on the inner faces of the pockets 11, the amount of grease deposited on the balls 4 and scraped therefrom by the inner diametric surface of the cage 5 decreases. Accordingly, it is possible to avoid the grease deposition onto the outer diametric portion of the inner ring 2. Absent the grease deposition onto the outer diametric portion of the inner ring 2, flow of the grease into the seal groove 10 (Fig. 1) in the inner ring 2 can be avoided and, as a result, the grease leakage from the ball bearing assembly 1 can be avoided.

If in the snap cage is adopted the grease leakage preventive structure of the prior art cage (disclosed in the Patent Document 4 referred to previously), in which the radius of the inner diameter of a circumferential portion, where each of the pockets is defined, as measured from the cage center is chosen to be greater than the radius of a circumferential portion, which is delimited between the neighboring pockets, as measured from the cage center, the shape of a circumferential intermediate bottom portion of each of the pockets need be removed partially. For this reason, the strength of the cage is considerably lowered, making it possible to be placed on practical use. More specifically, when the centrifugal force brought about by rotation of the cage works, the strain at the intermediate bottom portion of some of the pockets will become large, resulting in fracture of that portion or an increase of the amount of displacement towards the outer diametric side of the corresponding bridge portion between the neighboring pockets, to such an extent as to result in an undesirable contact with the outer ring. In contrast thereto, the recessed areas 16 employed in the cage 5 according to this embodiment are effective to minimize the decrease of the strength of the cage 5 since they do not exist at the bottoms of the pockets 11, and, therefore, it can withstand the practical use.

In each of the various embodiments hereinabove described, the preferred position where the recessed areas 16 are defined in the inner face of each of the pocket 11 is that indicated by the symbol P in Fig. 13. In other words, the position of the recessed areas 16 in the bearing axial direction is where it generally coincides with the shoulder of the inner ring raceway surface 2a when the cage 5 is assembled into the ball bearing assembly 1. That is because the increased amount of grease deposited on the inner diametric surface of the cage 5 occurs in the vicinity of the axial position coinciding with the raceway shoulder to where the grease is carried up by the contact between the balls 4 and the inner ring raceway surface 2a.

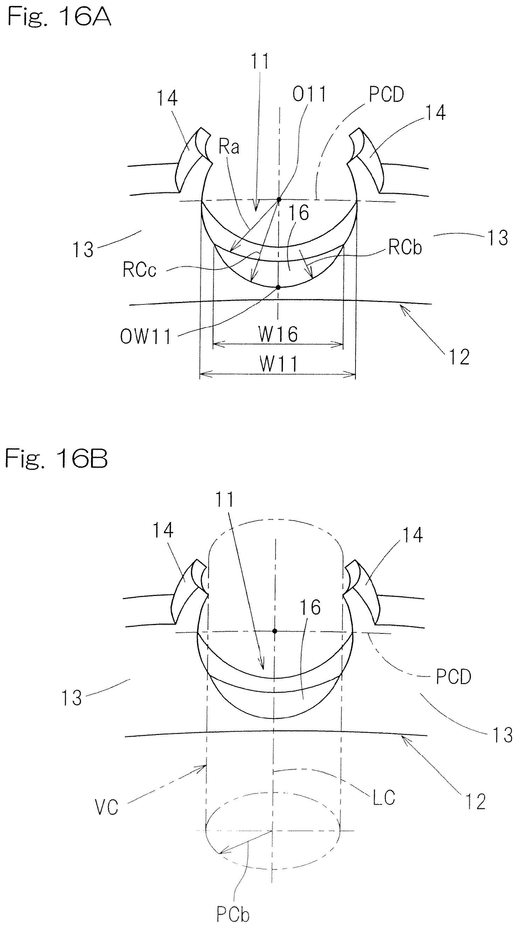

Figs. 16A and 16B illustrate a seventh embodiment. The cage 5 for the ball bearing assembly shown therein is of a structure, in which the two recessed areas 16 defined in the inner face of each of the pockets 11, which are employed in any one of the embodiments shown in and described with reference to Figs. 4A to 4C, Figs. 5A and 5B and Figs. 6A and 6B, are replaced with one recessed area 16 which is not in accordance with the invention. Even in the case of the use of the single recessed area 16, it extends from the open edge on the cage inner diametric side to the cage outer diametric side and has such a sectional shape of an inner face thereof along the cage circumferential direction (that is, a sectional shape cut in a plane perpendicular to the cage center axis) as to represent an arcuate shape of a radius of curvature RCb that is smaller than the radius of curvature Ra of the spherical surface defining the inner face of each of the pockets 11. This recessed area 16 is provided at one location at which it expands on both sides of the center OW11 of the cage circumferential direction at the open edge of each of the pockets 11, with the width W16 of such recessed area 16 being equal to the generally whole of the width W11 of the respective pocket 11 in the cage circumferential direction. The width W16 of the recessed area 16 is preferably greater than half the width W11 of the respective pocket 11 and, more preferably, 2/3 or greater or 3/4 or greater of the width W11.

The inner face shape of the recessed area 16 is represented by a cylindrical surface extending substantially along the imaginary cylinder VC having its center lying on the straight line LC extending radially of the cage 5 as best shown in Fig. 16B. The imaginary cylinder VC referred to above may be a surface of a grindstone used to process the recessed area 16. This recessed area 16 extends in the cage radial direction from the open edge on the cage inner diametric side to the ball row pitch circle PCD, gradually decreasing, that is, gradually getting shallow, with its width decreasing, as it extends from the cage inner diametric edge towards the ball row pitch circle PCD. Although in this embodiment the recessed area 16 extends just to the ball row pitch circle PCD, it may extend somewhat to the cage outer diametric side rather than to the ball row pitch circle PCD or may extend to a position not somewhat reaching the ball row pitch circle PCD.

The recessed area 16 preferably has such a depth that the distance RCc from the center O11 of the spherical surface defining the pocket inner face to the deepest position of the recessed area 16 is of a value equal to or greater than 1.05 times the radius of each of the balls 4. The radius of curvature Ra of the spherical surface defining the inner face of each of the pocket 11 is slightly greater than the radius of each of the balls 4 and is not greater than 1.05 times the radius of each of the balls 4.

In a single row deep groove ball bearing assembly 1 (Fig. 1) having assembled therein the cage 5 according to any one of the foregoing embodiments described hereinbefore, the behavior of the grease towards the pocket open side makes no difference from that observed in the ball bearing assembly having the standard snap cage assembled therein and, hence, no effect of avoiding the grease leakage can be expected. However, the ball bearing assembly is often generally used in a pair and the leakage of grease towards opposite end sides of the pair of the ball assemblies is often disliked. In such case, if the back face side of the cage 5 according to any one of the foregoing embodiments described above is incorporated having been oriented towards the side where the countermeasure to avoid the grease leakage is desired to be applied, the grease sealing function of the final product can be obtained.

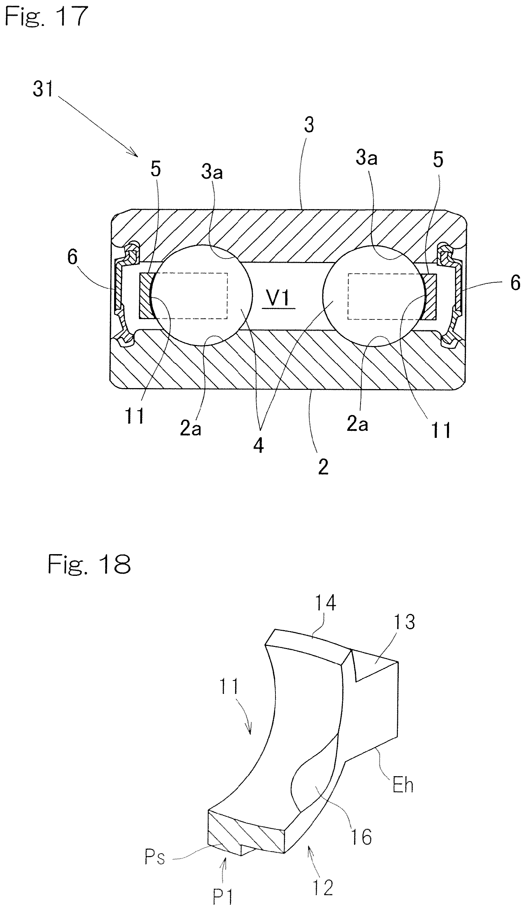

Fig. 17 illustrates a double row deep groove ball bearing assembly 31 having the cage 5 for the ball bearing assembly according any one of the foregoing embodiment incorporated therein. In this ball bearing assembly 31, double rows of raceway surfaces 2a and 2a are formed in the outer diametric surface of the inner ring 2 and double rows of raceway surfaces 3a and 3a opposed to those raceway surfaces 2a and 2a are formed in the inner diametric surface of the outer ring 3, with double rows of balls 4 interposed between the raceway surfaces 2a and 2a in the inner ring 2 and the raceway surfaces 3a and 3b in the outer ring 3, respectively. Opposite annular open ends of an annular space VI delimited between the inner and outer rings 2 and 3 are sealed by respective contact sealing members 6. The balls 4 of each row are retained by the corresponding cage 5 designed according to any one of the foregoing embodiments described hereinbefore. In this case, each of the cages 5 is so incorporated with its back face side oriented towards the contact sealing member 6. Other structural features are similar to those of the single row ball bearing assembly 1 shown in Fig. 1.

According to this double row ball bearing assembly 31, since the cage 5 according to the embodiment of the present disclosure is incorporated therein with the rear side having the grease leakage preventive function oriented towards the contact sealing member 6, it is possible to suppress the leakage of the grease from both sides of the ball bearing assembly 31.

Hereinafter, the cage for the ball bearing assembly of a type, which can be used under a higher speed rotation than that of the conventional case while the grease leakage is suppressed, will be discussed. In the description that follows, component parts similar to those described in connection with any one of the foregoing embodiments described hereinbefore are designated by like reference numeral and the details thereof are not reiterated for the sake of brevity. In the case that only a part of structures is explained, other structural features are similar to those of the forgoing embodiments. Not only can a combination of the component parts specifically described in connection with any one of the foregoing embodiments described hereinbefore be employed, but also a combination of some of the foregoing embodiments described hereinbefore can be partially employed provided that such combination poses no problem.

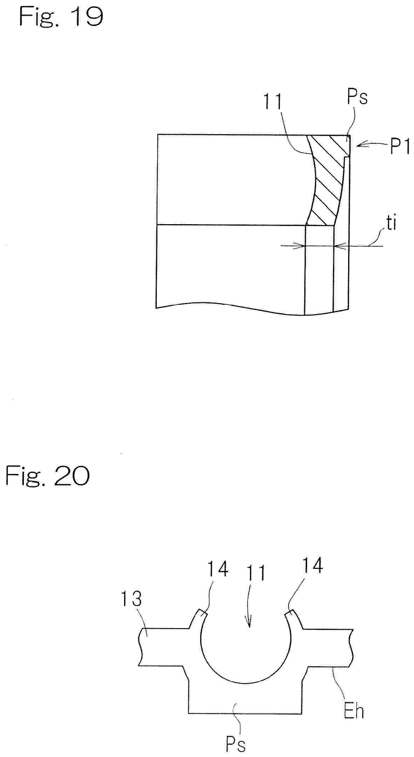

The snap cage according to an eighth embodiment shown in Figs. 18 to 20 will now be described. Fig. 18 is a partially enlarged perspective view of the snap cage, Fig. 19 is a fragmentary longitudinal sectional view of the snap cage of Fig. 18, with a portion cut out in a plane containing the bearing axis, and Fig. 20 is a fragmentary top plan view of the snap cage of Fig. 18 as viewed from the cage outer diametric side. The illustrated snap cage is so designed and so shaped that the recessed areas 16 (Fig. 18) are provided in the inner face of each of the pockets 11, a portion of a toric portion wall face Eh is removed and a pocket bottom wall portion Ps at the center of the respective pocket 11 in the cage peripheral direction has a wall thickness that is greater at the cage outer diametric side than that at the cage inner diametric side. In other words, the wall thickness of a portion PI at the rear side pocket bottom in the cage outer diametric side is increased to a value greater than the wall thickness ti of the inner diametric side. Where this snap cage is incorporated in the ball bearing assembly, the maximum stress acting on the cage and the amount of displacement can be both reduced with no possibility of the sealing member and the cage contacting with each other.

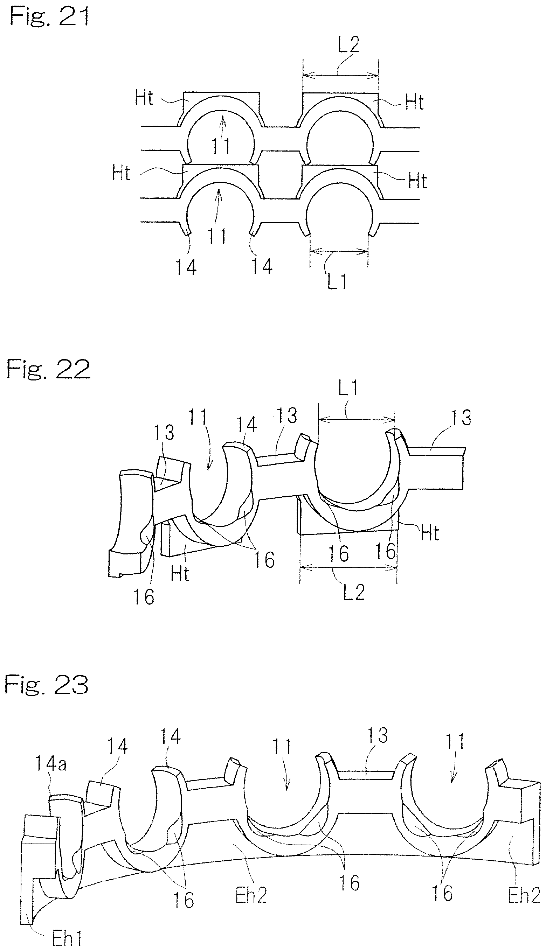

The snap cage according to a ninth embodiment shown in Figs. 21 and 22 is of a type, in which a reinforcement portion at the pocket bottom is provided with a plate member Ht of a size sufficient to avoid intrusion of the counterpart pawl. In other words, the wall thickness of that portion of the back face side pocket bottom in the cage outer diametric side is increased to a value greater than the wall thickness in the inner diametric side. The reinforcement portion, of which wall thickness has been increased, is rendered to be of a plate shape, and the length L2 of one side of the reinforcement portion is chosen to be greater than the distance L1 between the tip portions 14 and 14 of the pair of the pawls in each of the pockets 11. By so doing, entry of the pawls into the counter back face side pocket bottom, which would otherwise occur when a plurality of the cages are stacked in the cage axial direction, is avoided. According to this snap cage, the use of the recessed areas 16 for each pocket 11 is effective to suppress the grease leakage, allowing the cage to be used under a higher speed rotation than that in the conventional case, while the amount of displacement and the maximum stress acting on the cage can be both reduced due to the plate member Ht, which defines the reinforcing portion. Also, the convenience, which is afforded by the plate member Ht, employed for each pocket 11, when the plural cages are stacked in the cage axial direction, can be enhanced.

The snap cage according to a tenth embodiment shown in Fig. 23 is of a type, which has a toric wall face Eh1 in the cage outer diametric side and in which the inner diametric surface of the inner diametric side is provided with a depression Eh2. In this case, since the greater distance between the toric wall face Eh1 and the inner ring outer diametric surface than that in the standard snap cage can be secured, the grease will hardly deposit on the inner ring outer diametric surface and as a result, the resistance of the cage to the grease leakage can therefore be maintained. When the plural cages of this kind are stacked in the cage axial direction, the tip portions 14 of the pawls are brought into contact with the toric wall face Eh1, thus preventing the pawls from entering the counter back face side pocket bottom. Also, it can be used under a higher speed rotation than that in the conventional case, while the grease leakage is suppressed.

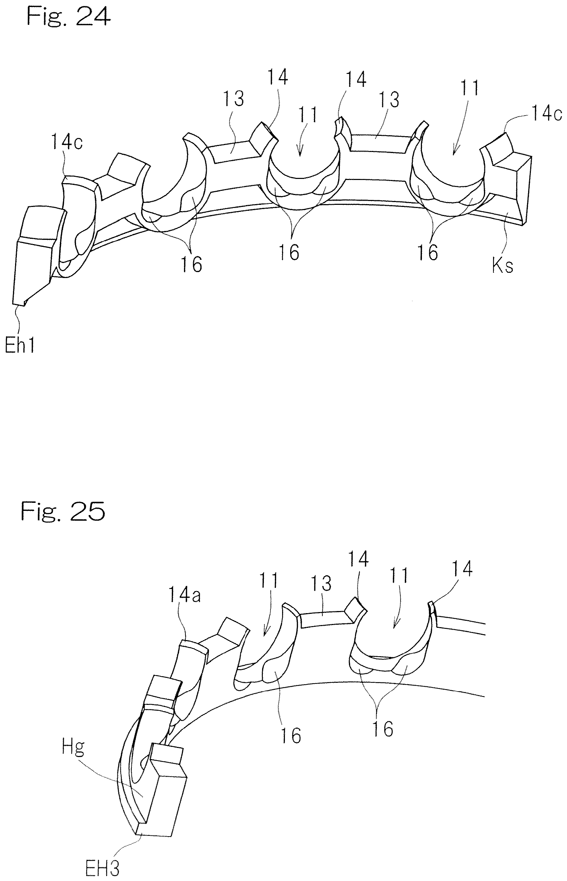

The snap cage shown in Fig. 24 is of such a shape that the toric wall face Eh1 shown in Fig. 23 is inclined. An inclined portion Ks of this toric wall face Eh1 has a wall thickness gradually increasing from the cage rear face towards a cage front face and is so shaped as to continue to the bridge portions 13. By the provision of this inclined portion Ks, the grease deposited on or adhering to the wall face Eh1 can be easily moved towards the outer diametric side by the effect of the centrifugal force acting on the ball bearing. Accordingly, the grease will hardly pool on the inner ring outer diametric surface, allowing the resistance of the cage to the grease leakage to be maintained. Also, it can be used under a higher speed rotation than that in the conventional example.

The snap cage according to an eleventh embodiment shown in Fig. 25 is of such a structure that it has a toric wall face EH3 and, at the same time, the cage outer diametric surface Hg excluding the cage rear face is removed. Where the distance between the cage and the seal groove is small enough to hamper an expansion of the back face side of the cage in the cage axial direction, the cage outer diametric side, which will considerably affect to the centrifugal force, is removed. By so doing, a stress concentration can be relieved. In the standard snap cage, when it is operated under a high speed rotation, the tip portions 14 of each of the pawls on the outer diametric side will be deformed in the bearing outer diametric direction to such an extent as to possibly contact the outer ring inner diametric surface. However, by the use of such a shape as shown in Fig. 25, a necessarily sufficient distance between the cage outer diametric surface Hg and the outer ring inner diametric surface can be secured. Even when under the high speed rotation the outer diametric side tip portions 14c of the pawls are deformed in the bearing outer diametric direction, an undesirable contact of the outer diametric side tip portions 14c of those pawls with the outer ring inner diametric surface can be avoided beforehand due to the fact that the distance referred to above is secured. Accordingly, it can be rotated at a high speed. Also, due to the presence of the recessed areas 16, the grease leakage can be suppressed.

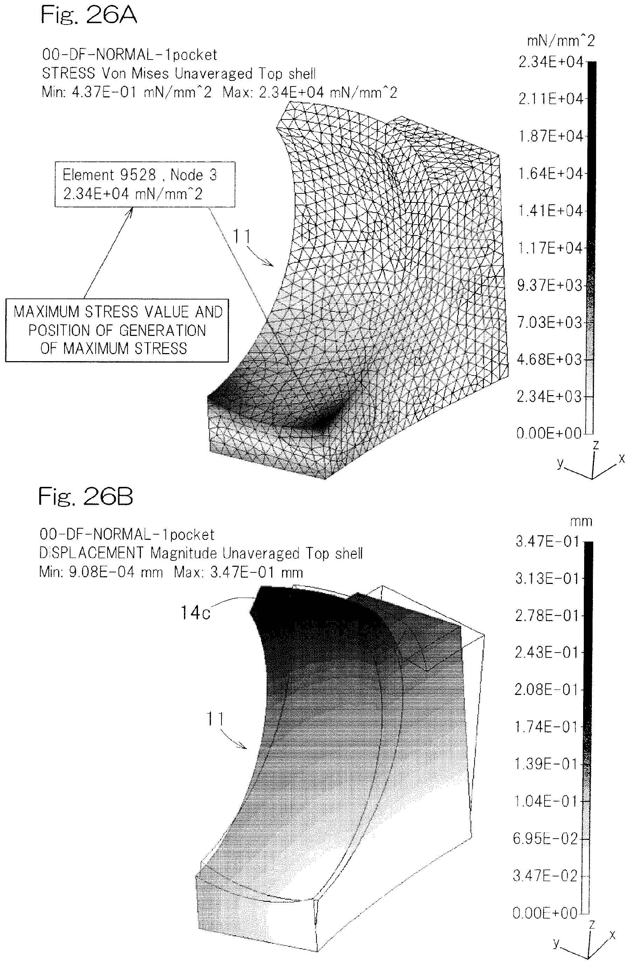

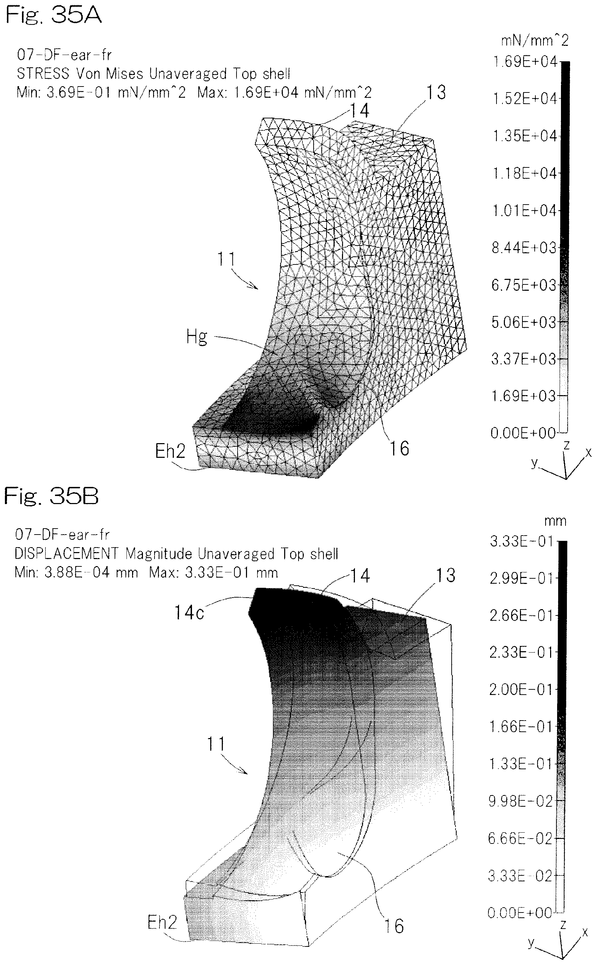

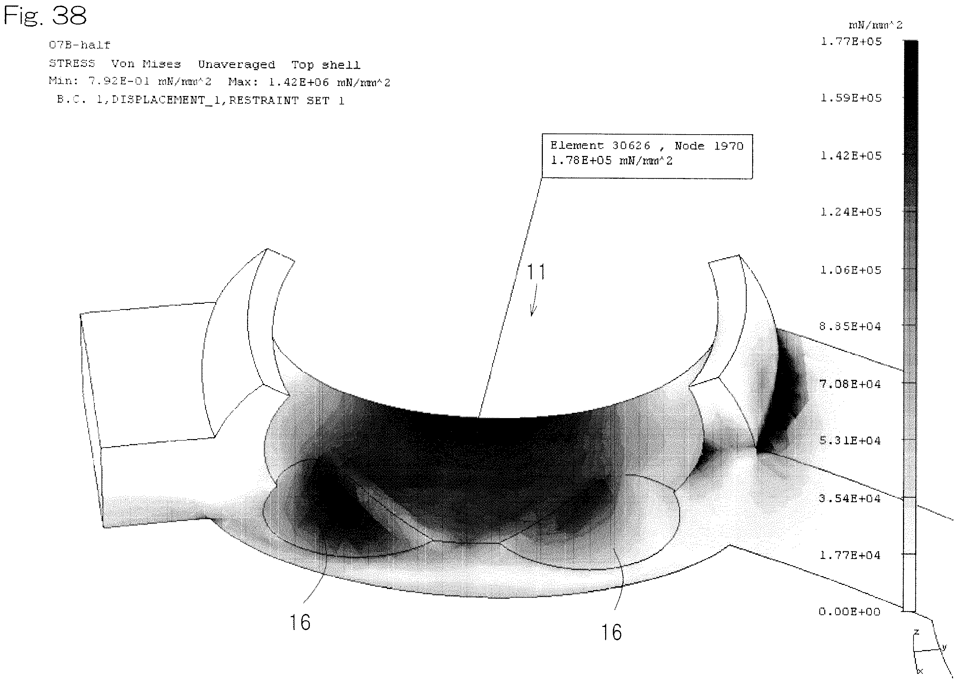

Figs. 26A and 26B to Figs. 35A and 35B illustrate stress distributions and displacement distributions when the centrifugal force is caused to act on the snap cage of any one of the various shapes. Those figures illustrate the shape in which in view of the symmetry of analysis, one of the pockets in the cage is cut into halves in the imaginary plane containing the cage axial direction (See Fig. 38). The boundary condition for the centrifugal force analysis is such that using the cylindrical coordinate system with the cage radial direction, the cage axial direction and the cage circumferential direction taken respectively in the x-axis, the z-axis and the θ, the centrifugal force was applied about the z-axis around the cage center while the cage sectional plane was constrained in the θ direction and, at the same time, one point on the inner diametric side of the pocket bottom was constrained in the z direction.

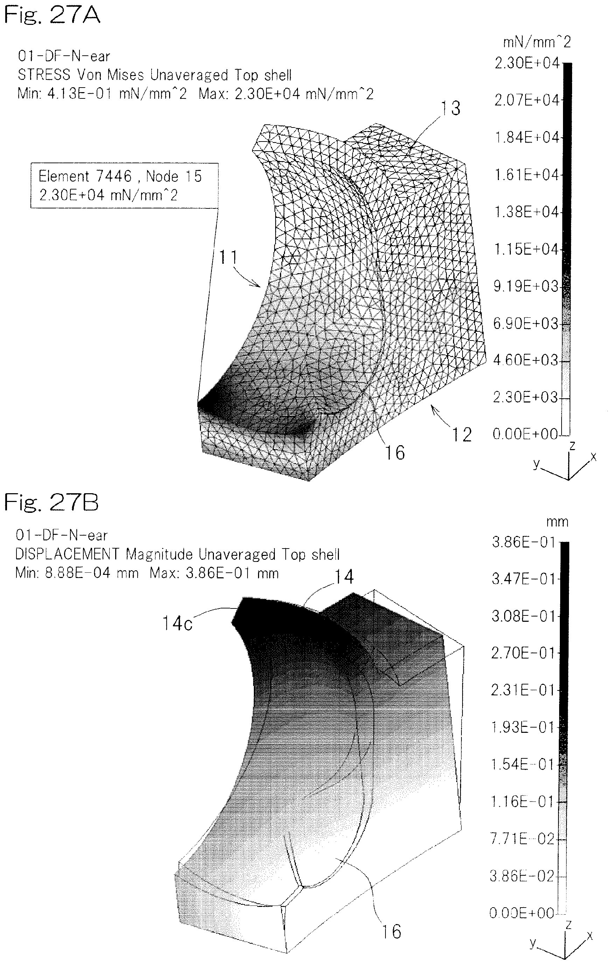

Figs. 26A to 35A are respective diagrams showing the stress distribution whereas Figs. 26B to 35B are respective diagrams showing the distribution of displacement. In the stress distribution diagram shown in each of Figs. 26A to 35A, the position indicated by one end of the lead line represents the position at which the maximum stress is generated, and the rectangular block at the opposite end of the lead line represents the value of the maximum stress. In the displacement distribution shown in each of Figs. 26B to 35B, the indication "MAX" at upper left column represents a maximum value of displacement. As shown in Fig. 26A, in the case of the standard snap cage, the stress concentration takes place at the bottom of the pocket 11 which is the minimum sectional portion of the cage. The maximum stress at this time is, for example, 2.34 x 10⁴ mN/mm² (= KPa). In this standard snap cage, the position at which the displacement is maximum is the outer diametric side tip portion 14c of the pawl, as shown in Fig. 26B. The maximum value of the displacement at this time is 3.47 x 10⁻¹ mm. As shown in Figs. 27B to 35B, in all of those shapes, the outer diametric side tip portion 14c of the pawl exhibited the maximum displacement.

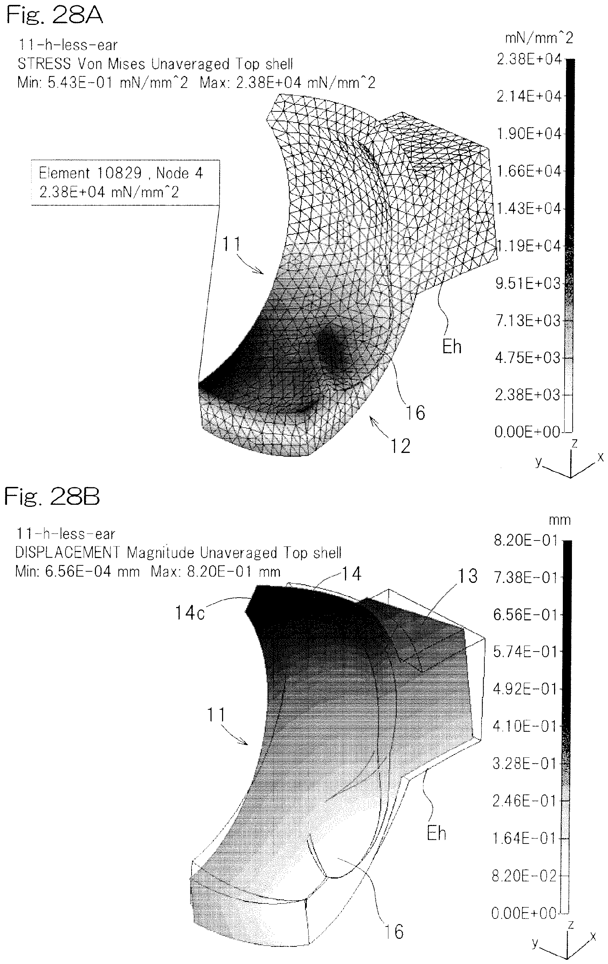

As shown in Fig. 27A, in the case where the recessed areas 16 are formed in the inner face of each of the pockets 11 of the snap cage, the provision of the recessed areas 16 can result in shift of the position of the pocket bottom, at which the maximum stress generates, from the cage inner diametric side to the cage outer diametric side, with the stress distribution expanding slightly larger than that exhibited by the standard snap cage of the kind referred to above. The maximum stress at this time attains, for example, 2.30 x 10⁴ mN/mm². Also as shown in Fig. 27B, the maximum value of the displacement attains, for example, 3.86 x 10⁻¹ mm. In the snap cage shown in Figs. 28A and 28B, not only are the recessed areas 16 provided in the inner face of each of the pockets 11, but the toric portion wall face Eh is removed. By so doing, not only can the resistance to the grease leakage exhibited by the cage be increased, but also the concentrated stress acting in the cage can be dispersed. The maximum stress at this time attains, for example, 2.38 x 10⁴ mN/mm². However, as shown in Fig. 28B, the maximum value of the displacement attains, for example, 8.20 x 10⁻¹ mm. The maximum displacement amount exhibited by the snap cage of the type shown in Figs. 27B and 28B increases to a value larger than the maximum displacement amount exhibited by the standard snap cage shown in Fig. 26B.

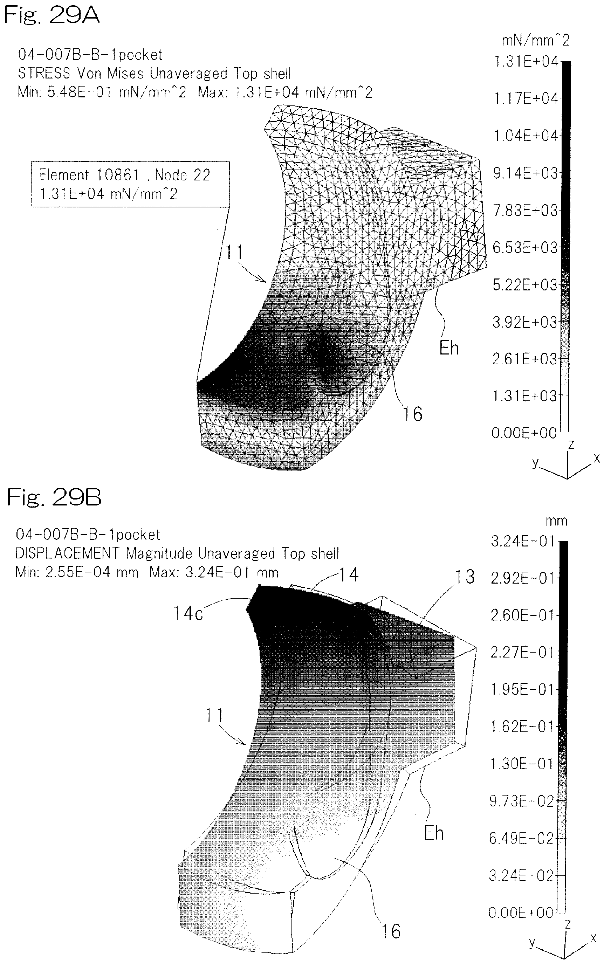

The snap cage shown in Figs. 29A and 29B is so designed and so shaped that the recessed areas 16 are provided in the inner face of each of the pockets 11, the toric portion wall face Eh is removed and the pocket portion has a wall thickness greater than that in the snap cage shown in Figs. 28A and 28B. In this case, increase of the minimum sectional portion of the cage is effective to result in reduction in stress concentration and the displacement. In other words, as shown in Fig. 29A, the maximum stress attains, for example, 1.31 x 10⁴ mN/mm². As shown in Fig. 29B, the maximum value of the displacement attains, for example, 3.24 x 10⁻¹ mm.

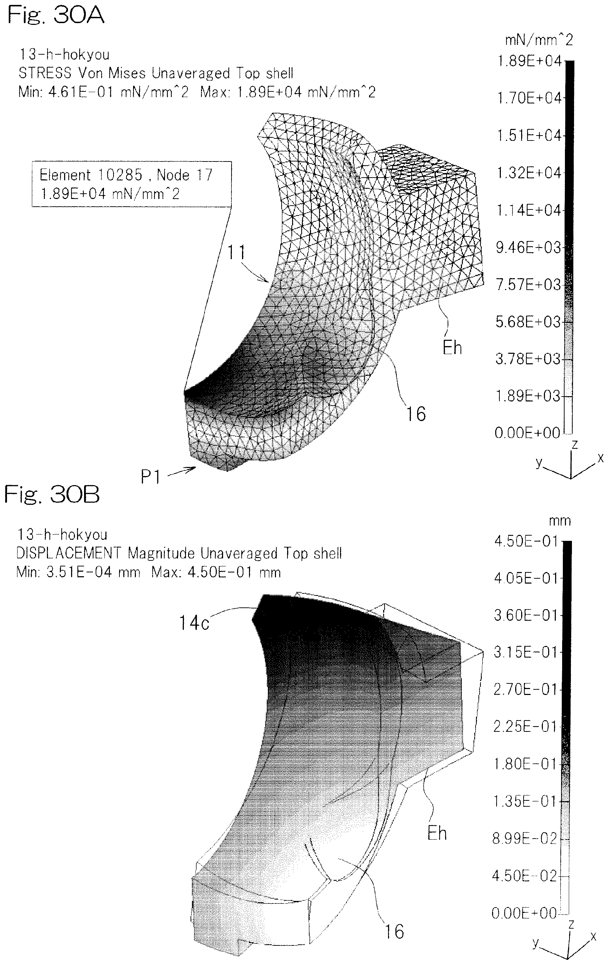

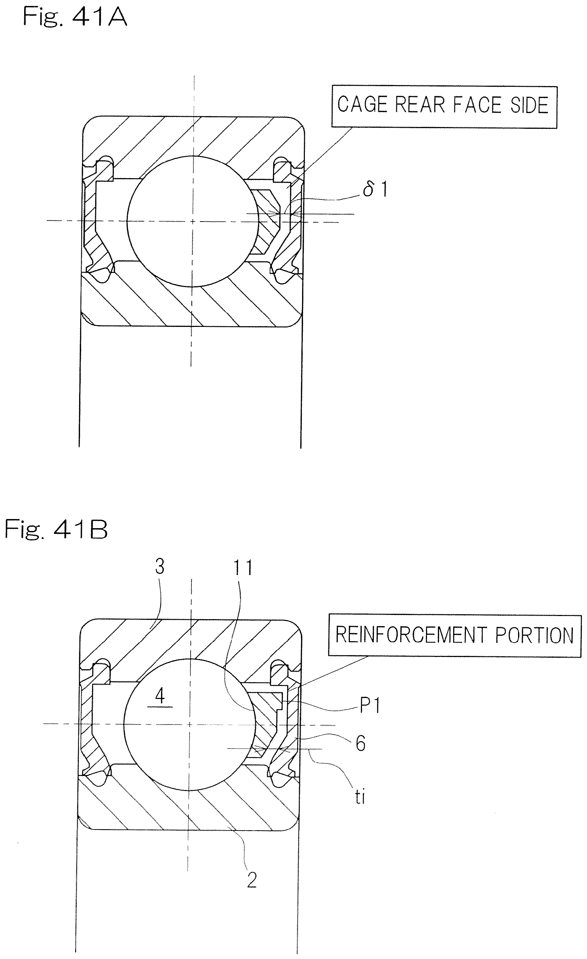

Here, a sectional view of the ball bearing assembly provided with the standard sealing members is shown in Fig. 41A. As shown therein, the distance δ1 between the cage and the adjacent sealing member is large on the cage outer diametric side, that is, in an upper portion of the drawing of Fig. 41A and small on the cage inner diametric side. In this case, it is difficult to enlarge the entire cage in the axial direction, that is, in a leftward and rightward direction as viewed in Fig. 41A. Accordingly, as shown in Fig. 41B, the wall thickness of a portion PI of the back face side pocket bottom on the cage outer diametric side is increased rather than the wall thickness ti on the inner diametric side. By so doing, the amount of displacement and the maximum stress acting in the cage can be reduced without allowing the sealing member and the cage to contact with each other. The maximum stress at this time attains, for example, 1.89 x 10⁴ mN/mm as shown in Fig. 30A. As shown in Fig. 30B, the maximum value of the displacement attains, for example, 4.50 x 10⁻¹ mm. It is to be noted that if the distance between the sealing member 6 and the cage is too small, there is the possibility that the grease deposited on the cage back face side may be dragged between it and the sealing member 6 and the bearing rotation torque may consequently increase.

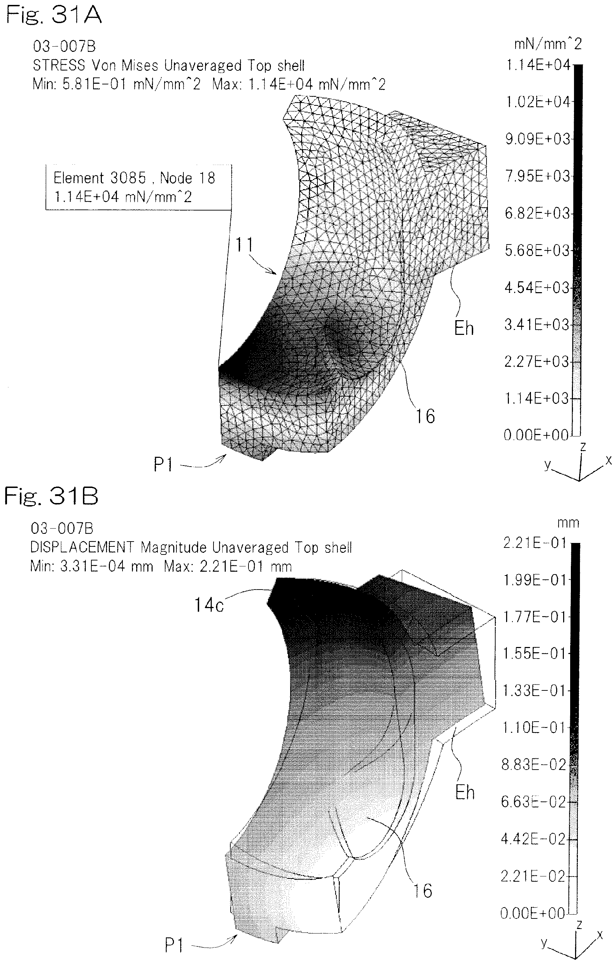

In order to further reduce the stress concentration and the displacement, as shown in Figs. 31A and 31B, it is recommended to combine together the respective shapes shown in Figs. 29A and 29B and Figs. 30A and 30B. More specifically, the cage is so designed and so shaped that the cage minimum sectional portion is increased and the wall thickness on the cage outer diametric side, in which the distance to the sealing member is large, is increased. In the cage of the shape shown in Figs. 31A and 31B, the maximum stress attains, for example, 1.14 x 10⁴ mN/mm² as shown in Fig. 31A. As shown in Fig. 31B, the maximum value of the displacement attains, for example, 2.21 x 10⁻¹ mm.

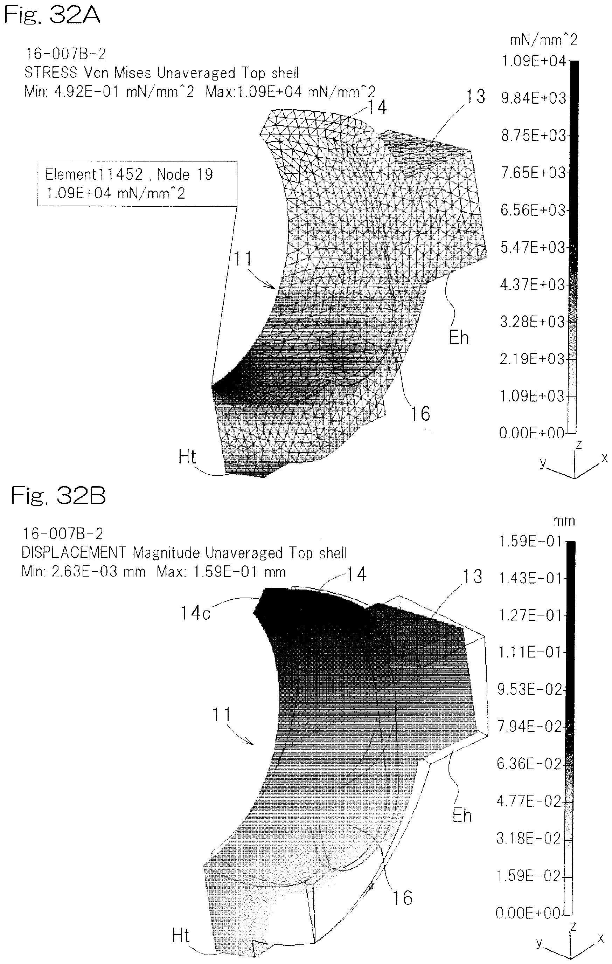

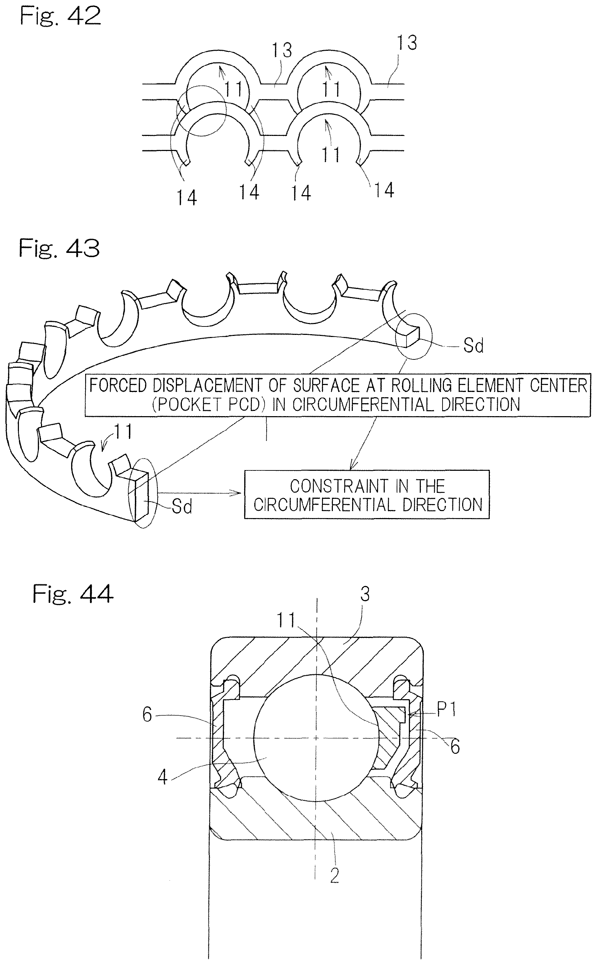

In the meantime, with the shape shown in Figs. 31A and 31B, it may occur that as shown in Fig. 42, when the cages are overlapped, a counter pocket 11 bottom side may enter a pawl side. In such case, since tilt occurs when the cages are stacked in an overlapped relation, it may occur that the handling of a large number of cages will become difficult during a cage assembling step onto the bearing assembly. In contrast thereto, if the cage is so designed and so shaped as shown in Figs. 21 to 24, it is possible to avoid an undesirable entry of the counter pocket 11 bottom when the plural cages are stacked in the cage axial direction, while the resistance of the cage to the grease leakage and the function of reducing the stress concentration on the pocket center portion are preserved. In the case of the cage, in which the plate member Ht is provided at the reinforcement portion of the pocket 11 bottom, the maximum stress attains, for example, 1.09 x 10⁴ mN/mm² as shown in Fig. 32A. As shown in Fig. 32B, the maximum value of the displacement attains, for example, 1.69 x 10⁻¹ mm.

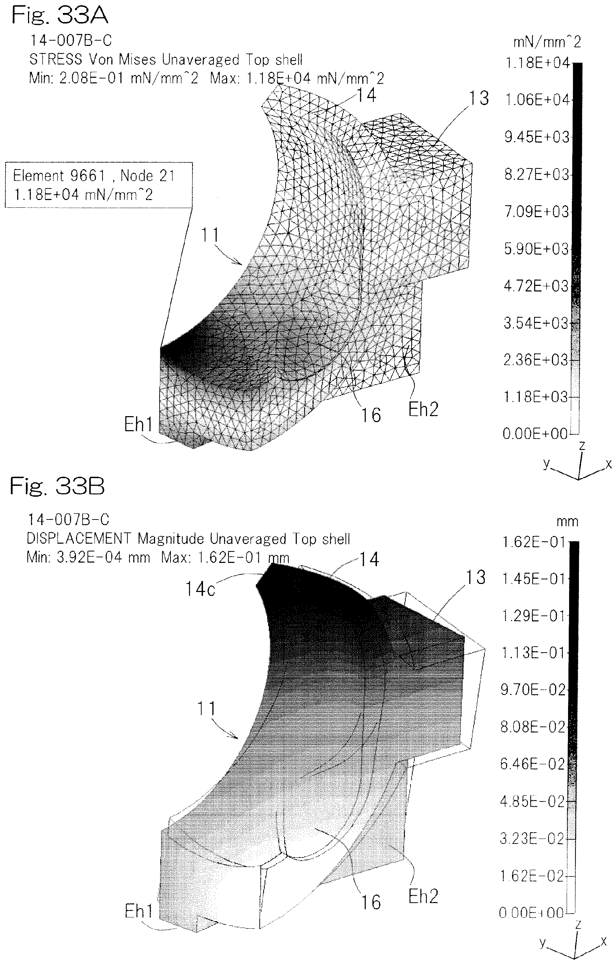

In the cage shown in and described with particular reference to Fig. 23, the maximum stress attains, for example, 1.18 x 10⁴ mN/mm² as shown in Fig. 33A. As shown in Fig. 33B, the maximum value of the displacement attains, for example, 1.62 x 10⁻¹ mm. As described above, the cage shown in and described with reference to Fig. 23 exhibits both of the stress concentration, caused by the centrifugal force, and the displacement, which are smaller than those exhibited by the standard snap cage and can therefore be operated at a high speed.

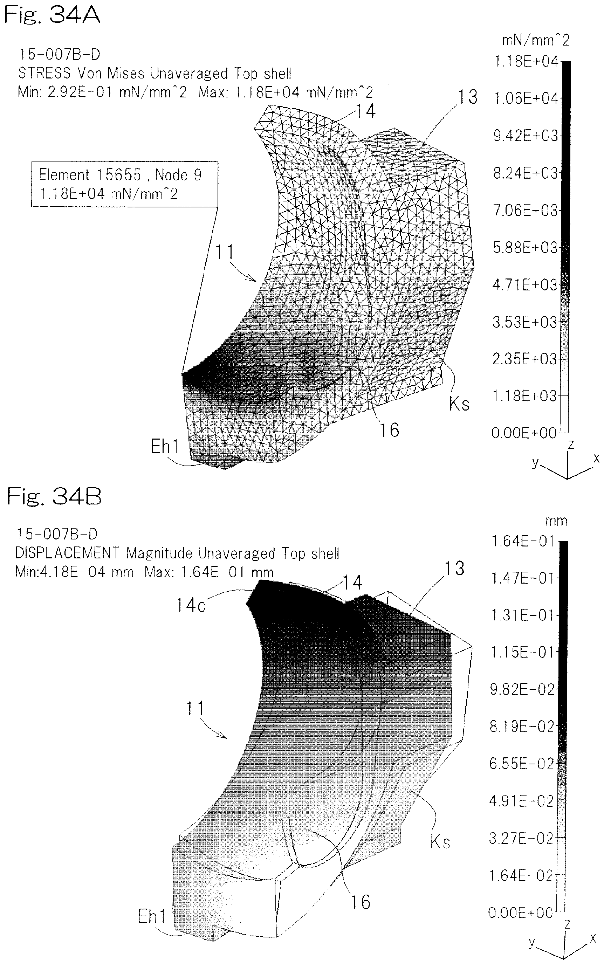

In the case of the cage shown in and described with reference to Fig. 24, the maximum stress attains, for example, 1.18 x 10⁴ mN/mm² as shown in Fig. 34A. As shown in Fig. 34B, the maximum value of the displacement attains, for example, 1.64 x 10⁻¹ mm. Even the cage shown in and described with reference to Fig. 24 exhibits both of the stress concentration, caused by the centrifugal force, and the displacement, which are smaller than those exhibited by the standard snap cage and can therefore be operated at a high speed.

In the case of the cage shown in and described with reference to Fig. 25, the maximum stress attains, for example, 1.69 x 10⁴ mN/mm² as shown in Fig. 35A. As shown in Fig. 35B, the maximum value of the displacement attains, for example, 3.33 x 10⁻¹ mm.

In the next place, the analysis on the rolling element delayed advance will be discussed.

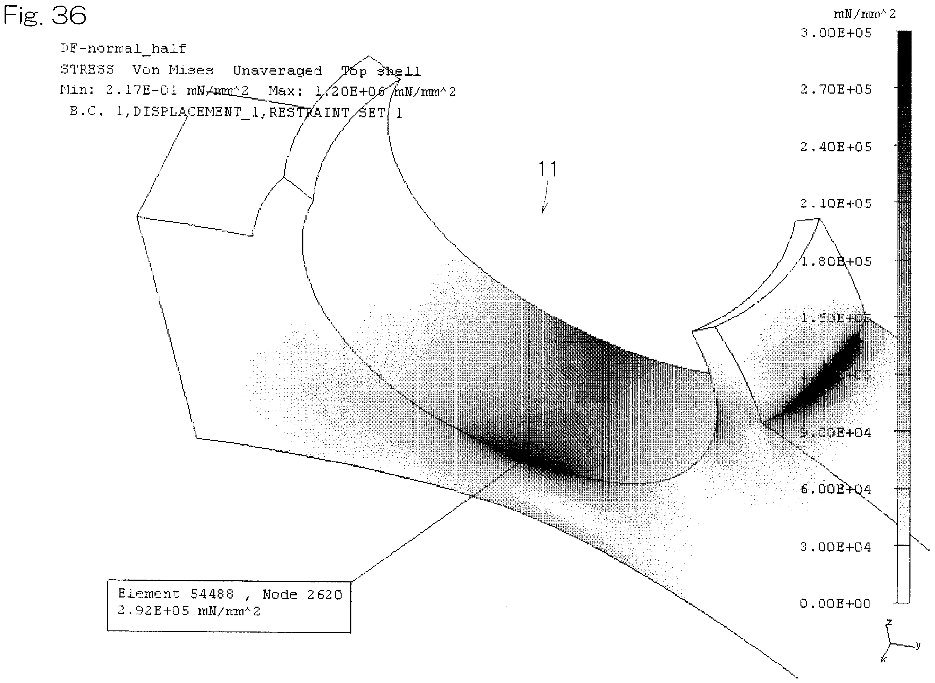

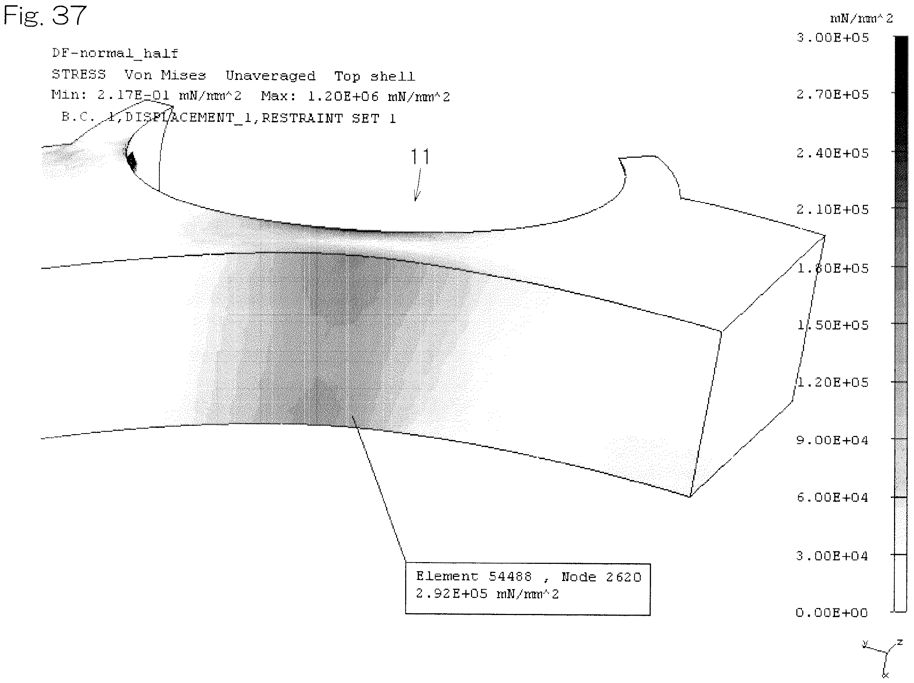

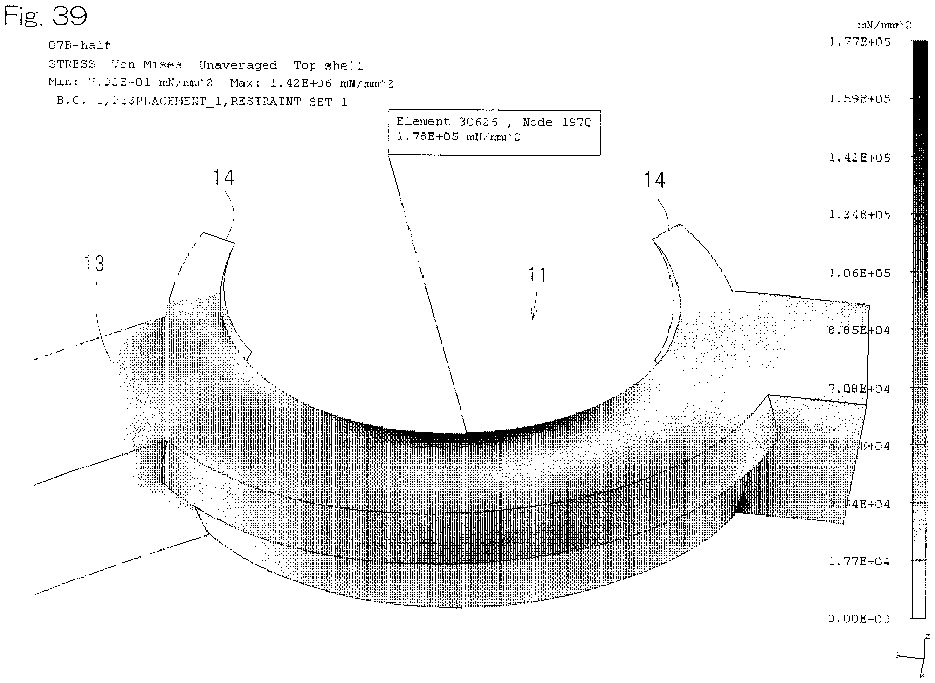

The configuration of the cage capable of a high speed rotation is effective to relieve the stress concentration even when the delayed advance of the rolling elements occurs. Figs. 36 and 37 illustrate results of analysis obtained when a displacement simulating the delayed advance of the rolling elements is given to the standard snap cage. The boundary condition thereof is such that as shown in Fig. 43, with respect to half the cage circumference, the cage cut plane Sd is constrained in the θ direction and a forced displacement is applied to the surface area, at which the rolling elements contact, in the θ direction for each of the pockets 11. The analysis was conducted on the half of the cage circumference, but the result of analysis illustrates one of the pockets 11 to which the forced displacement had been applied. Figs. 38 and 39 illustrates results of analysis exhibited when the displacement simulating the delayed advance of the rolling element is applied to the cage of the configuration shown in and described with reference to Figs. 31A and 31B. As shown in Figs. 38 and 39, in the cage shown in and described with reference to Figs. 31A and 31B, as a result of the use of the recessed areas 16 in each of the pockets 11 and the removal of the toric portion wall face Eh, the stress acting on the cage pocket bottom is dispersed.

Also, the increased wall thickness of the pocket bottom face and the use of the reinforcement portion lead to reduction of the maximum value of the stress concentration, accompanied by reduction of the displacement amount. Since the stress occurring in the pawl portion shown in Figs. 38 and 39 are generated by the effect of the displacement constraint simulating the delayed advance of the rolling elements, they may be negligible. In this instance, attention should be centered on the stress occurring in the pocket bottom portion. The maximum stress in the standard cage shown in Figs. 36 and 37 attains, for example, 2.29 x 10⁵ mN/mm² whereas the maximum stress in the cage shown in Figs. 38 and 39 attains, for example, 1.78 x 10⁵ mN/mm².

As shown in Fig. 44, where the ball bearing assembly makes use of the snap cage of the kind shown in and described with particular reference to any of Figs. 29A and 29B to Figs. 35A and 35B (although the cage shown in Fig. 44 makes use of the cage of the type shown in Figs. 31A and 31B), not only can the grease leakage from this ball bearing assembly be avoided, but also it can withstand a higher speed rotation than that in the ball bearing assembly utilizing the standard snap cage. Even in the case of the snap cage made of a resinous material, the use of the shape shown in and described with reference to any of Figs. 29A and 29B to Figs. 35A and 35B is effective to reduce the maximum stress and the displacement amount. Accordingly, the high speed orientation can be planned. The grease filling percentage in the ball bearing assembly shown in Fig. 44 is not greater than 100%. In such case, the grease filled can be prevented undesirably from the ball bearing assembly through a radial gap delimited between a seal inner diametric surface and the inner ring.

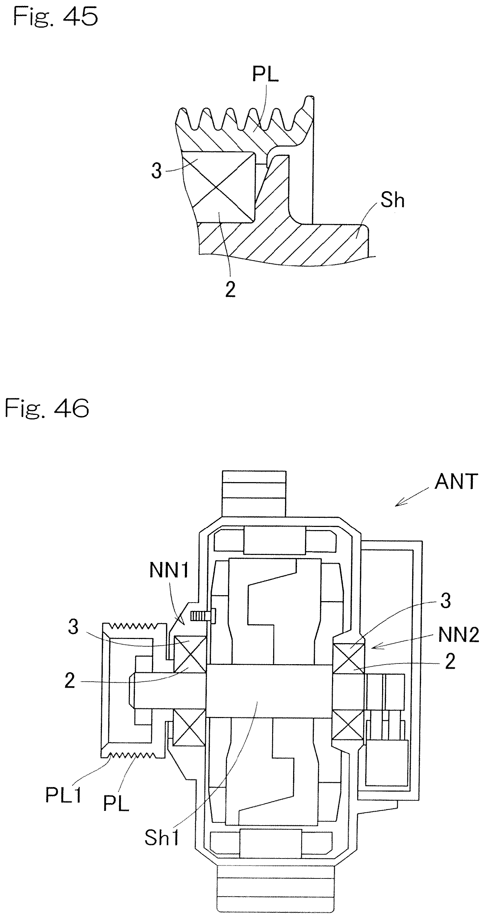

The ball bearing assembly of the present disclosure may be adopted in an automobile auxiliary equipment. Fig. 45 illustrates a longitudinal sectional view showing the structure in which the ball bearing assembly referred to above is provided in an idler pulley which is an automobile auxiliary equipment. In this embodiment, the ball bearing assembly is mounted around an outer periphery of a shaft Sh so that a pulley PL can be rotatably supported by such ball bearing assembly. According to the ball bearing assembly for the idler pulley, the use of the previously described cage for the ball bearing assembly is effective to avoid the grease leakage. In particular, when the cage for the ball bearing assembly shown in and described with reference to any of Figs. 29A and 29B to Figs. 35A and 35B is employed, not only can the grease leakage be avoided, but also the high speed operation of the ball bearing assembly is made possible.

Fig. 46 is a sectional view showing the ball bearing assembly provided in an alternator which is an automobile auxiliary equipment. In this embodiment, in the alternator ANT, a shaft Sh1 is inserted in alternator bearing assemblies NN1 and NN2 with a pulley PL mounted on one end of such shaft sh1 protruding outwardly. The pulley PL is provided with an engagement groove PL1 around which a drive transmission belt (not shown) is trained. According to these alternator bearing assemblies NN1 and NN2, the use of the previously described cage is effective to avoid the grease leakage. In particular, when the cage for the ball bearing assembly shown in and described with reference to any of Figs. 29A and 29B to Figs. 35A and 35B is employed, not only can the grease leakage be avoided, but also the high speed operation of the ball bearing assembly is made possible.

The ball bearing assembly of the present disclosure may also be adopted in a motorcycle gear reduction unit.

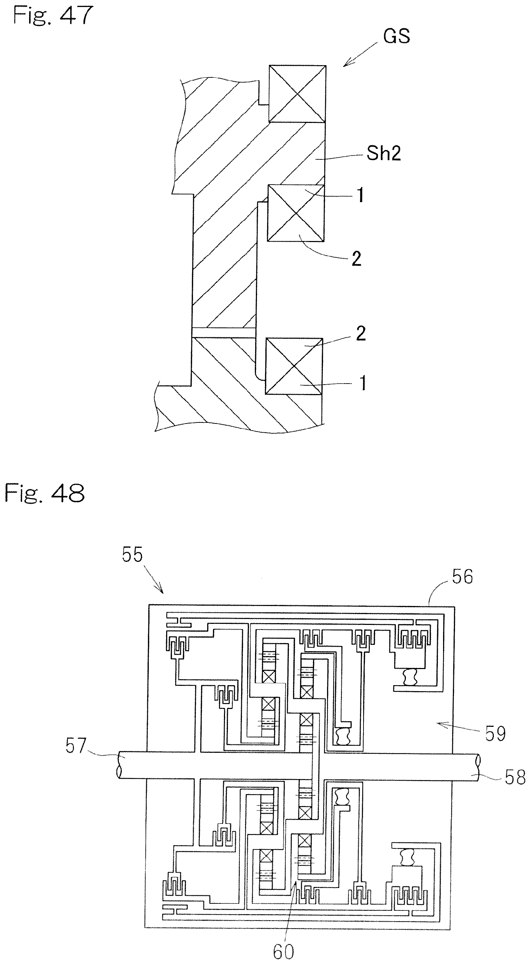

For example, as shown in Fig. 47, in the motorcycle reduction gear unit GS, the ball bearing assemblies may be mounted on opposite end portions of an axle Sh2 so that the axle Sh2 can be driven by a drive source (not shown). According to the ball bearing assemblies used in association with the reduction gear unit GS, the use of the previously described cage is effective to avoid the grease leakage and, also, to prolong the service lifetime of each of the ball bearing assemblies. In particular, when the cage for the ball bearing assembly shown in and described with reference to any of Figs. 29A and 29B to Figs. 35A and 35B is employed, not only can the grease leakage be avoided, but also the high speed operation of the ball bearing assembly is made possible.

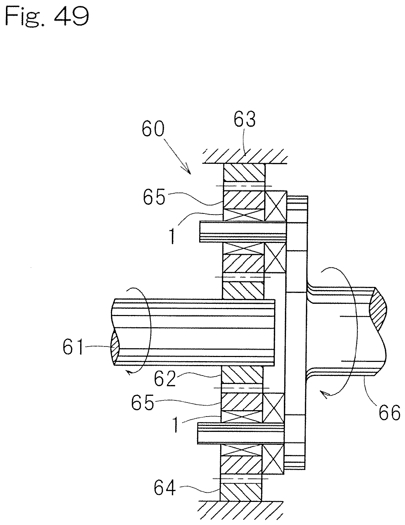

Fig. 48 illustrates a sectional view of the ball bearing assembly of the present disclosure used in an automatic transmission. Fig. 49 illustrates a sectional view showing a planetary gear mechanism which is an important part of Fig. 48. As shown in Fig. 48, the automatic transmission identified by 55 includes a casing 56, an input shaft 57, an output shaft 58 and a speed changing mechanism 59. The input shaft 57 is passed through the casing 56 and via this input shaft 57 the rotation of an engine (not shown) is transmitted to the automatic transmission 55 through a torque converter or the like. The output shaft 58 is passed through the casing 56 and then coupled with a drive wheel (not shown). The speed changing mechanism 59 transmits the rotation of the input shaft 57 to the output shaft 58 after it has been converted at an arbitrarily chosen rotational ratio.

A planetary gear mechanism 60, shown on an enlarged scale in Fig. 49, of the speed change mechanism 59 referred to above is of a structure including a sun gear 62 fixed on a first rotary shaft 61, an internal gear 64 fixed on a second rotary shaft 63, a plurality of planetary gears 65 arranged between the sun gear 62 and the internal gear 64, and a planetary carrier 66 connected with a plurality of planetary gears 65 through a bearing assembly 1. For the bearing assembly 1 or the like, the bearing assembly according to the present disclosure is adopted.

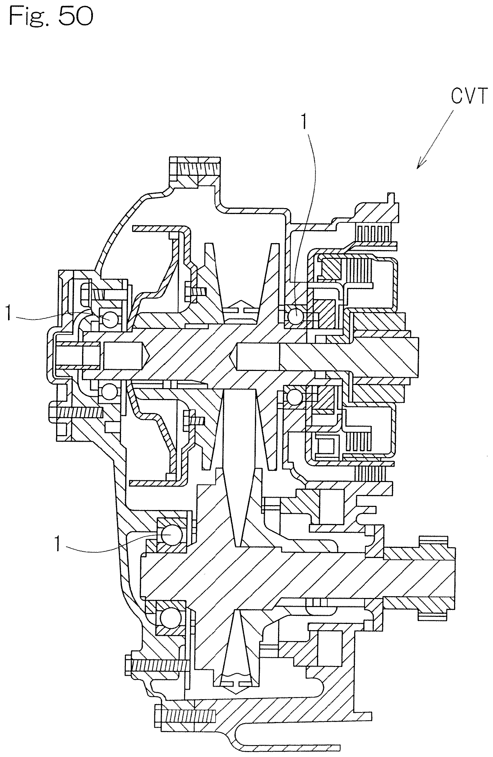

Also, as shown in Fig. 50, the bearing assembly 1 of the present disclosure may be provided in a continuously variable transmission CVT.

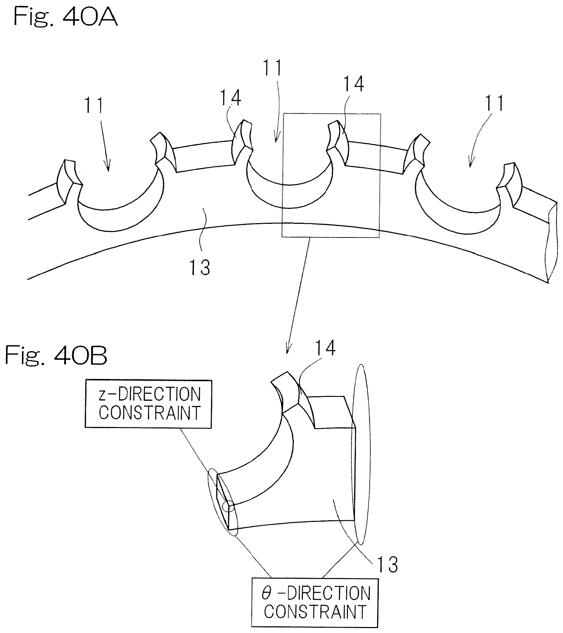

The following summarizes the various embodiments of the present disclosure which have been shown in and described with reference to Figs. 1 to 50.

The cage for the ball bearing assembly, which forms a basic construction in each of the following modes, is of such a design that in the snap cage for the ball bearing assembly including the annular cage body having one side face opened partly for holding the balls within the respective pockets, the inner face of each of those pockets is provided with the recessed areas each extending from the pocket open edge on the cage inner diametric side towards the cage outer diametric side.

### Mode A1)

In the basic construction described above, the inner face of each of the pockets represents a concaved spherical shape and the sectional shape of the inner face of each of the recessed areas sectioned in the cage circumferential direction may be an arcuate shape of a radius of curvature smaller than the radius of curvature of the concaved spherical surface defining the inner face of each of the pocket is.

### Mode A2)

In the basic construction described above, the sectional shape of the inner face of each of the recessed areas sectioned in the cage circumferential direction may be a polygonal shape.

### Mode A3)

In the basic construction described above, the inner face of each of the pockets may represent a concaved spherical shape and each of the recessed areas may have a depth so chosen that the distance from the center of the concaved spherical surface of the pocket inner face to the deepest position of the respective recessed area may be equal to or greater than 1.05 times the radius of each of the balls.

### Mode A4)

In the basic construction described above, the axial thickness of each of the bridge portions on the cage outer diametric side in the section at the position intermediate of the cage circumferential direction may be so chosen as to be greater than the axial thickness on the cage inner diametric side. By so doing, it is possible to secure the strength of the cage while the surface area of the inner diametric surface of each of the bridge portions is reduced.

### Mode A5)

In the construction described above, there may be provided the recessed areas in the rear face of each of the pockets, each area extending from the cage inner diametric edge to the cage outer diametric side. By so doing, the surface area of the inner diametric surface in each of the pockets can be reduced to increase the effect of avoiding the grease leakage.

### Mode A6)

In the basic construction described above, the axial thickness of each of the pocket shells at the cage outer diametric side may be greater than the axial thickness at the cage inner diametric side. By so doing, while the surface area of the inner diametric surface at each of the pocket shells is reduced, the strength of the cage can be secured.

### Mode A7)

In the basic construction described above, the amount of projection of the cage outer diametric side tip portion at the open edge tip portion of each of the pockets in the axial direction may be shorter than the amount of projection of the cage inner diametric tip portion in the axial direction. By so doing, the cage can have a reduced weight and, when the ball bearing assembly is used at the high speed rotation, the stress of the cage caused by the centrifugal force can be reduced. During the high speed rotation, the tip portion of the cage tends to be deformed so as to tilt towards the outer diametric side relative to the center portion of each of the pockets and thus, the balls are guided at the inner diametric side of the tip portion and, therefore, the bearing functionality will not be adversely affected even when the outer diametric side of the tip portion is partly removed.

### Mode A8)

The cage with the basic construction described above may be used in a ball bearing assembly that is employed in an automobile auxiliary equipment.

In the case of the single row ball bearing assembly, the behavior of the grease towards the pocket open edge side makes no difference with that observed in the ball bearing assembly of the type employing the standard snap cage and, therefore, the effect of avoiding the grease leakage cannot be expected. However, it is quite often that the ball bearing assembly is generally employed in a pair and the grease leakage towards the opposite end side of the pair of the ball bearing assemblies is often disliked. In such case, if the cage of the above described construction for use in the ball bearing assembly is incorporated with the back face side thereof oriented towards the side where the grease countermeasure is desired to be applied, the grease sealing function of the final product can be maintained.

### Mode A9)

In the ball bearing assembly equipped with the cage of the basic construction described above, where a double rows are employed, the cage for the ball bearing is preferably incorporated in the plural row ball bearing assembly in such a manner that the back face side having the grease leakage preventive function may be oriented towards the bearing outer side. By so doing, the grease leakage from the opposite sides of the double row ball bearing assembly can be suppressed.

### Mode A10)

In the ball bearing assembly including the cage of the basic construction described above, the grease filling percentage may not greater than 100% relative to the space bound by a sealed plate inner side of the ball bearing assembly and the inner and outer rings thereof. Assuming that the space bound by the sealed plate inner side and the inner and outer rings of the ball bearing assembly is the total spatial capacity, a space represented by the total spatial capacity excluding the space, within which the balls and the cage undergo rotation during rotation of the ball bearing assembly, is referred to as a "stationary space". If the grease filling percentage is not greater than 100% relative to the stationary space between the inner and outer rings, the possibility of the filled grease undesirably leaking from the radial gap delimited between the sealed plate inner diametric surface and the outer ring inner diametric surface can be suppressed.

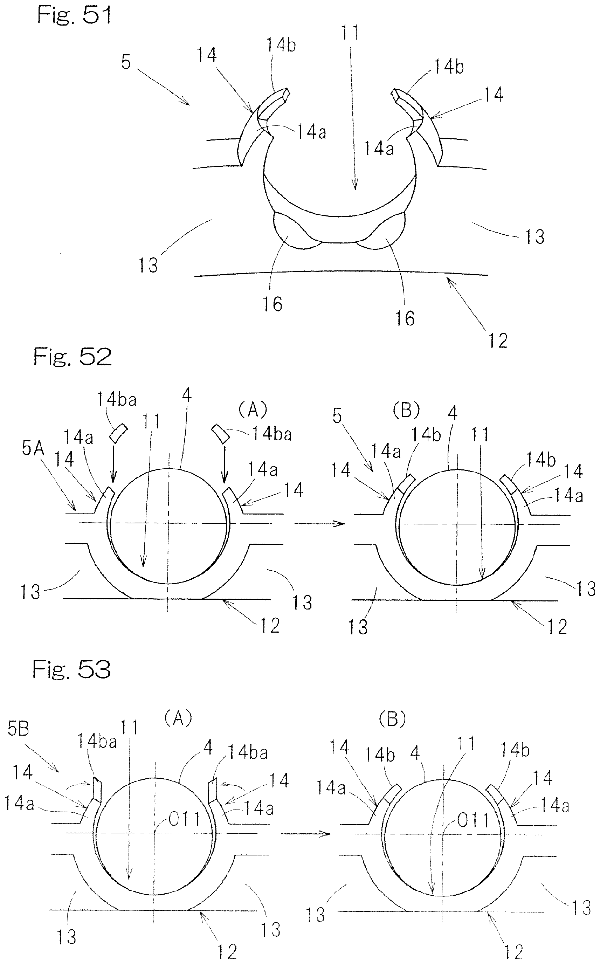

Fig. 51 illustrates a twelfth preferred embodiment which is in accordance with the present invention. In this twelfth embodiment, the pair of the pawls 14 and 14 of each of the pockets 11 includes first pawl portions 14a and 14a on the cage inner diametric sides and second pawl portions 14b and 14b on the cage outer diametric side and between them, the distance of spacing between tips of the respective second pawl portions 14b and 14b on the cage outer diametric side is chosen to be smaller than the distance of spacing between the first pawl portions 14a and 14a on the cage inner diametric side. In this embodiment, the distance of spacing between the respective tips of the pair of the pawls 14 and 14 is reduced in a stepwise fashion from the cage inner diametric side towards the cage outer diametric side.

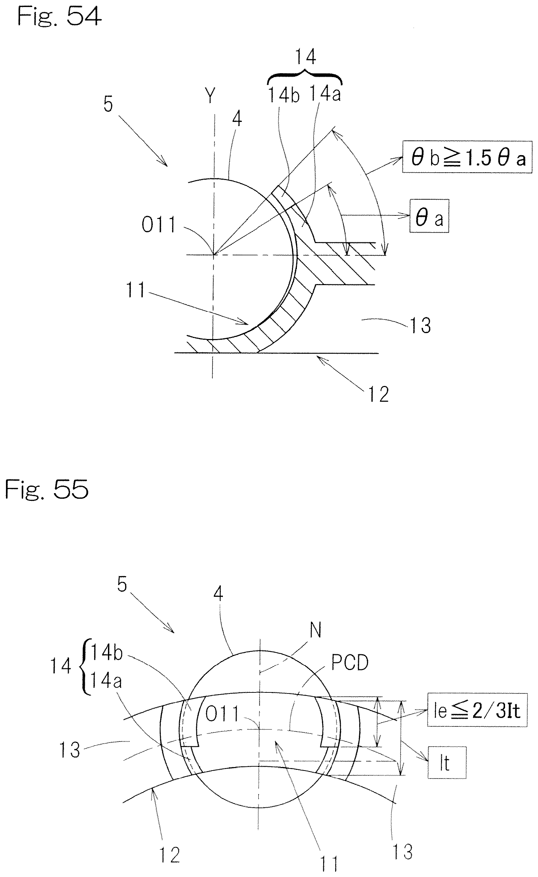

The amount of projection of each of the first pawl portions 14a on the cage inner diametric side is chosen to be equal to the amount of projection of the pawl found in the standard snap cage, but the amount of projection of the respective second pawl portion 14b on the cage outer diametric side is chosen to be longer than that of each first pawl portion 14a on the cage inner diametric side. More specifically, as shown in Fig. 54 showing the section (section along the pitch circle PCD of the ball row) of the pawl 14 taken in the cage circumferential direction, the first and second pawl portions 14a and 14b have respective tip angles θa and θb, and the second tip angle θb is preferably so chosen as to be equal to or greater than 1.5 times the first angle θa (θb ≥ 1,5θa). The first angle θa is defined between a circumferential direction line at the pocket center O11 and a line connecting the pocket center O11 with a tip of the first pawl portion 14a. The second angle θb is defined between a circumferential direction line at the pocket center O11 and a line connecting the pocket center O11 with a tip of the second pawl portion 14b.

Also, the width of the second pawl portion 14b on the cage outer diametric side in the cage radial direction is preferably so chosen as shown in Fig. 55. More specifically, assuming that the total width (pocket width) of the pawl 14, which is projected on the straight line N extending in the cage radial direction so as to pass across the center of each of the pockets 11 in the cage circumferential direction, is expressed by It, the width Ie of the second pawl portion 14b on the cage outer diametric side, similarly projected on the straight line N referred to above, is so chosen as to be preferably of a value equal to or smaller than 2/3 of the total width It, that is, (Ie ≤ 2/3It).

In general, assemblage of the ball bearing assembly utilizing the standard snap cage is carried out by incorporating the cage into the ball bearing assembly after the balls have been positioned between the inner and outer rings. Where the snap cage is made of a resinous material, and if the distance between the respective tips of the pair of the pawls in each of the pockets is equal to or smaller than 90% of the radius of each of the balls, a contorted force will act on the pawls during assemblage of the balls into the cage and, therefore, there is a high possibility that blanching and/or fracture will occur at respective roots of the pawls. In this embodiment, the distance between the respective tips of the second pawl portions 14b on the cage outer diametric side will become narrower than 90% of the radius of each of the balls 4. For this reason, it will be difficult to incorporate the cage 5, as completed, after the balls 4 have been assembled into the ball bearing assembly 1.

In view of the above, in this embodiment, the cage 5 for use in the ball bearing assembly is manufactured by means of process steps shown in any one of Figs. 52 and 53. The manufacturing method shown in Fig. 52 is such that as shown in Fig 52A, pawl components 14ba, comprised of pawl tip portions of the second pawl portions 14b of the pawls 14 on the cage outer diametric side, which protrude beyond the first pawl portions 14a on the cage inner diametric side, are formed separate from and independently of a cage body 5A. Then, after the cage body 5A has been assembled in the inner and outer rings 2 and 3 of the ball bearing assembly 1 (Fig. 1) and the balls 4, the pawl components 14ba are bonded, or fusion bonded by means of a hot press, or mounted to the cage body 5A as shown in Fig. 52B. By so doing, the undesirable blanching and/or fracture at the roots of the pawls 14 can be avoided during the assemblage. It is to be noted that each of the pawl component 14ba may be of a size corresponding to a pawl tip portion protruding beyond the first pawl portions 14a on the cage inner diametric side, but may be of a size corresponding to a major portion or the whole of each of the second pawls 14b on the cage outer diametric side.

The manufacturing method shown in Fig. 53 is such that as shown in Fig. 53A, each of pawl tip portions 14ba (pawl components) of the second pawl portion 14b of the corresponding pawl 14 on the cage outer diametric side, which protrudes beyond the adjacent first pawl portion 14a on the cage inner diametric side, are manufactured as a half-finished cage component 5B which assumes an opened posture diverting away from the pocket center O11 as compared with the finished cage component. Then, after the half-finished cage component 5B has been assembled in the inner and outer rings 2 and 3 of the ball bearing assembly 1 (Fig. 1) and the balls 4, the pawl tip portions 14ba is bent and thermally deformed by the application of heat or is effected a secondary processing, as shown in Fig. 53B, to thereby allow it to assume a closed posture along the surface of the ball 4. By so doing, the undesirable blanching and/or fracture at the roots of the pawls 14 can be avoided during the assemblage.

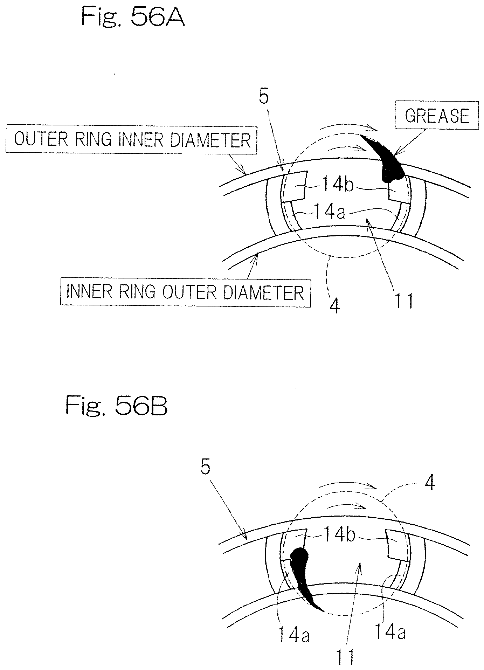

The behavior of the grease in the ball bearing assembly utilizing the cage 5 for the ball bearing assembly according to this embodiment will now be described with particular reference to Figs. 56A and 56B. As shown in Fig. 56A, the grease from the outer ring 3 is scraped by an outer diametric segment of the second pawl portion 14b of the corresponding pawl 14 on the cage outer diametric side, to avoid the deposition of the grease on the inner ring 2. The grease from the inner ring 2 is also scraped by an inner diametric segment of the second pawl portion 14b on the cage outer diametric side as shown in Fig. 56B, resulting in reduction in amount of the grease depositing on each of the balls 4, wherefore formation of a so-called "grease cap (hat)", in which the grease is collected in the vicinity of the axis of rotation (pole of rotation) of the ball 4 and subsequently stays on the surface of the balls, can be suppressed. The grease scraped is held at a position remote from the outer diametric surface of the inner ring 2 and, therefore, there is no possibility that the scraped grease may deposit on the outer diametric surface of the inner ring 2.

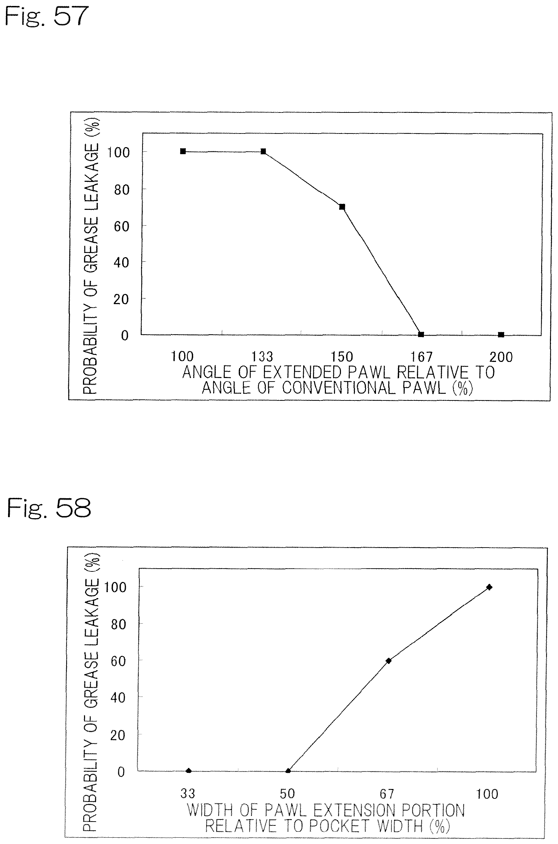

Figs. 57 and 58 illustrate respective charts showing results of grease leakage tests each conducted on the cage 5 according to this embodiment with the width Ie (Fig. 54) and the angle θb (Fig. 54) of the second pawl portion 14b of the pawl 14 on the cage outer diametric side being varied. Test conditions employed during those tests are tabulated in Table 1 below.

**Table 1**

| | |
|---|---|
| Bearing Assembly | 6203 |
| Amt. of Grease Filled (g) | 0.4 |
| Rotating Speed (rpm) | 3600 |
| Rotated Duration (s) | 10 |
| Direction of Load | Loaded on the inner ring on the cage pocket side |

Referring now to Fig. 57, the axis of ordinate represents the proportion of the grease leakage and the axis of abscissas represents the proportion of the angle θb of the second pawl portion 14b on the cage outer diametric side relative to the angle θa of the first pawl portion 14a (corresponding to the conventional pawl) on the cage inner diametric side. In this test, the width Ie of the pawl portion 14b on the cage outer diametric side as shown in Fig. 55 is set to be 1/2 of the total width (pocket width) It of the pawl 14, that is, (Ie = 1/2It). From the results of the test shown in Fig. 57, it can readily be understood that if the amount of projection of the second pawl portion 14b on the cage outer diametric side is short, the grease adhering to the balls 4 cannot be sufficiently scraped.

Referring to Fig. 58, the axis of ordinate represents the proportion of the grease leakage and the axis of abscissas represents the proportion of the width Ie of the second pawl portion 14b on the cage outer diametric side relative to the total width (pocket width) of the pawl 14. In this test, the angle θb of the second pawl portion 14b on the cage outer diametric side as shown in Fig. 54 is set to be 1.67 times the angle θa of the first pawl portion 14a on the cage inner diametric side, that is, (θb = 1.67θa). From the results of the test shown in Fig. 58, it can readily be understood that if the width Ie of the second pawl portion 14b on the cage outer diametric side is as large as possible, an inner diametric portion of the second pawl portion 14b approaches the outer diametric surface and, therefore, the grease scraped off from the inner ring 2 side as shown in Fig. 56B tends to be deposited directly on the outer diametric surface of the inner ring 2.

From the foregoing results of the tests, it is preferred that as the shape of the pawl 14 effective to exert an effect of suppressing the grease leakage, the angle θb of the second pawl portion 14b on the cage outer diametric side as shown in Fig. 54 be equal to or greater than 1.5 times the angle θa of the first pawl portion 14a on the cage inner diametric side. Also, the width Ie of the second pawl portion 14b on the cage outer diametric side as shown in Fig. 55 is so chosen to be preferably of a value equal to or smaller than 2/3 of the total width (pocket width) It of the pawl 14.

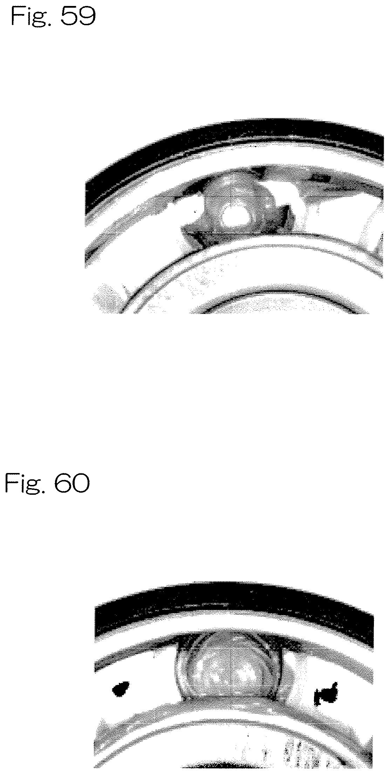

Figs. 59 and 60 illustrate respective results of tests conducted to ascertain the presence or absence of the grease deposition. In those tests, the ball bearing assembly, filled with grease after the cage 5 according to the twelfth embodiment which is in accordance with the present invention had been assembled thereinto, and the ball bearing assembly, filled with grease after the standard snap cage had been assembled thereinto, were operated under the same conditions and then compared with each other. As an operating condition during those tests, an axial load was loaded on the inner ring in a direction perpendicular to the plane of the sheet and the outer ring was rotated in a direction shown by the arrow-headed line in Figs. 56A and 56B. Fig. 59 illustrates the state of the grease deposited in the ball bearing assembly utilizing the cage according to the twelfth embodiment whereas Fig. 60 illustrates the state of the grease deposited in the ball bearing assembly utilizing the standard snap cage.

From the results of those tests shown respectively in Figs. 59 and 60, it is clear that in the ball bearing assembly (Fig. 60) utilizing the standard snap cage, the grease deposited on the outer diametric portion of the inner ring and also on the surface of the balls, forming the grease cap there. On the other hand, in the ball bearing assembly (Fig. 59) utilizing the cage designed according to the twelfth embodiment which is in accordance with the present invention, the grease was scraped off by the second pawl portion 14b of the pawl 14 on the cage outer diametric side and, accordingly, no grease deposited on the outer diametric portion of the inner ring and, hence, no grease cap formed on the surface of the balls.

As can readily be understood from those results of the tests, with the cage 5 designed according to the twelfth embodiment which is in accordance with the present invention, in view of the fact that the distance between the tips of the respective second pawl portions 14b of the pair of the pawls 14 of each of the pockets 11 on the cage outer diametric side was chosen to be smaller than the distance between the tips of the respective first pawls 14a of the pair of the pawls 14 of each of the pockets 11 on the cage inner diametric side, the grease deposited on the corresponding ball 4 was not allowed to flow from the outer ring side towards the outer diametric portion of the inner ring and even the grease from the inner ring side could be scraped by the second pawl portions 14b on the cage outer diametric sides that are distant from the outer diametric portion of the inner ring and, as a result, the grease leakage from the ball bearing assembly 1 could be avoided.

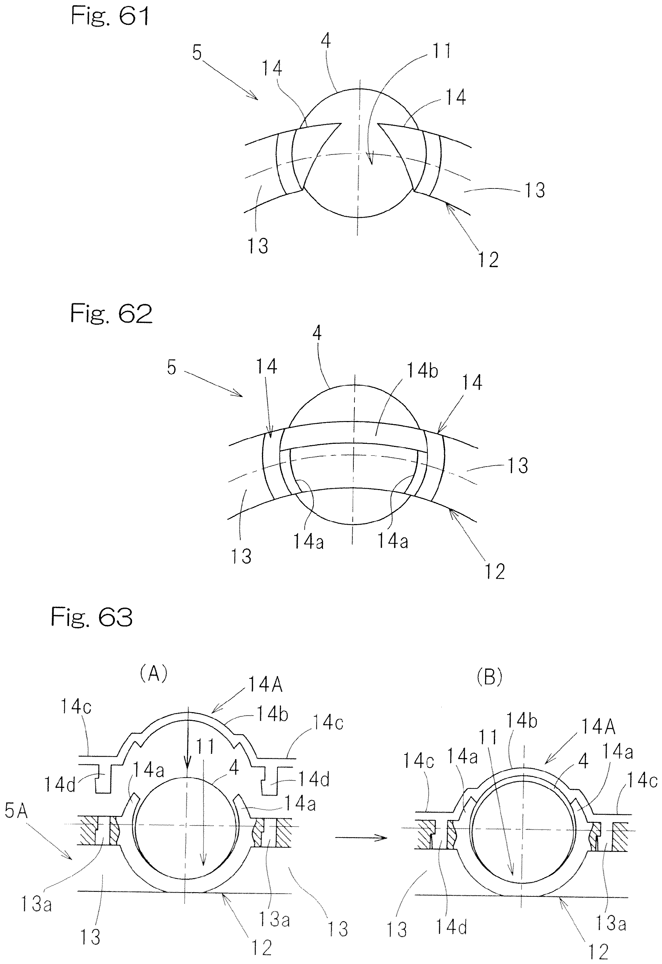

In the twelfth embodiment described hereinabove, as the shape of each of the pawls 14, reference has been to the amount of projection of the first pawl portion 14a on the cage inner diametric side and that of the second pawl portion 14b on the cage outer diametric side, which progressively change. If, however, the amount of projection of the pawl tip portion on the cage outer diametric side is longer than that of the pawl tip portion on the cage inner diametric side, the shape of each of the pawls 14 may be of any suitable shape, provided that it is held in non-contact relation with the inner and outer rings 2 and 3 and the contact sealing members 6 (Fig. 1). Fig. 61 illustrates a different example of the shape of one of the pawls 14 employed in the cage 5 according to this embodiment. In this example, the distance between the tips of the respective pawls 14 and 14 of each of the pockets 11 is so chosen as to continuously decrease from the cage inner diametric side to the cage outer diametric side.

Fig. 62 illustrates a further different example of the shape of one of the pawls 14 employed in the cage 5 according to this embodiment, which is in accordance with the present invention. In this example, a space between the tips of the pawls 14 and 14 in each of the pockets 11 on the cage inner diametric side is opened whereas the tip portion on the cage outer diametric side are connected together. In other words, in this example, in the pair of the pawls 14 and 14 in the cage 5 of the structure shown in and described with reference to Fig. 51, such a shape is employed in which the opposed second pawl portions 14b and 14b on the cage outer diametric sides are further extended so that they can be connected together.

Figs. 63A and 63B illustrates a method of manufacturing the cage 5 of the type shaped to represent the pawl shape shown in Fig. 62. In this manufacturing method, as shown in Fig. 63A, a pawl component 14A is formed separate from and independently of the cage body 5A. The pawl component 14A includes a second pawl portion 14b on the cage outer diametric side, which are connected between the pair of the pawls 14 and 14, connecting portions 14c extending from opposite ends of the second pawl portion 14b in the cage circumferential direction, respectively, and mounting projections 14d protruding from the associated connecting portions 14c in a direction towards the cage back face side. The pawl component 14A is of a toric shape continuously straddling the plural pockets 11 and has a plurality of second pawl portions 14b employed one for each of the pockets 11. The cage body 5A is of a structure, in which the bridge portions 13 of the annular cage body 12 are formed with respective mounting holes 13a for receiving therein the corresponding mounting projections 14d of the pawl component 14A.

Then, after the cage body 5A has been assembled in the inner and outer rings 2 and 3 and the balls 4 of the ball bearing assembly 1, as shown in Fig. 63B, the mounting projections 14d of the pawl component 14A are engaged respectively in the mounting holes 13a in the cage body 5A. In this way, since the single pawl component 14A is so designed and so shaped as to have the plural second pawl portions 14b corresponding to the plural pockets 11, component parts of a number smaller than the number of the pockets can afford the second pawl portions 14b on the cage outer diametric side, thus facilitating the assemblage along with reduction in manufacturing cost.

In the manufacturing method shown in and described with reference to Figs. 63A and 63B, in place of the pawl component 14A being engaged in the cage body 5A in the manner described above, the pawl component 14A may, after having been incorporated in the cage body 5A, be bonded, fusion bonded or engaged to the cage body 5A. In other words, where the pawl component 14A having the pawl tip portions 14ba of the second pawl portions 14b of the pawls 14 on the cage outer diametric side, which protrude at least from the first pawl portions 14a on the cage inner diametric side, is formed separate from and independently of the cage body 5A, the pawl component 14A can, after the cage body 5A has been incorporated in the inner and outer rings 2 and 3 and the balls 4 of the ball bearing assembly 1, be bonded, fusion bonded or engaged to the cage body 5A.

In the manufacturing method of the kind discussed above, the pawl component may be a component of a toric shape straddling continuously over the plural pockets. In the case of this construction, with component parts of a number smaller than the number of the pockets, a portion on the cage outer diametric side can be afforded, facilitating the assemblage along with reduction in manufacturing cost.

In the next place, the composition of grease filled in the bearing space VI (Fig. 2) will now be described. Filling of this grease composition can be applied to any one of the previously described embodiments shown in Fig. 1 to Figs. 63A and 63B. As a result of intensive studies on an effective method of avoiding exfoliation at the raceway surface because of hydrogen brittleness in the rolling bearing assembly, it has been found that when a rapid acceleration and deceleration test was carried out using the rolling bearing assembly filled with a grease composition mixed with at least one aluminum series additive selected from the group consisting of an aluminum powder and an aluminum compound, the bearing lifetime could be increased.

As a result of a surface analysis conducted on a bearing rolling surface, it has been revealed that addition of the additive of the aluminum series allows an aluminum compound to react in a frictionally worn surface or a newly existing surface of a metal that is exposed as a result of frictional wear to thereby generate an aluminum coating on a bearing rolling surface together with an ferric oxide. It appears that the ferric oxide and the aluminum coating, formed on the bearing rolling surface, are effective to suppress generation of hydrogen resulting from decomposition of the grease composition to thereby avoid a peculiar exfoliation, which would be caused by hydrogen brittleness and, therefore, the service lifetime of the rolling bearing assembly can be prolonged.

The aluminum series additive to be added to the grease composition is at least one selected from the group consisting of an aluminum powder and an aluminum compound. For the aluminum compound, examples include inorganic aluminum such as, for example, aluminum carbonate, aluminum sulfide, aluminum chloride, aluminum nitrate and hydrates thereof, aluminum sulfate, aluminum fluoride, aluminum bromide, aluminum iodide, aluminum oxide and hydrates thereof, aluminum hydroxide, aluminum selenide, aluminum telluride, aluminum phosphate, aluminum phosphide, lithium aluminate, magnesium aluminate, aluminum selenate, aluminum titanate, aluminum zirconate and so on; and organic aluminum such as, for example, aluminum benzoate, aluminum citrate and so on. One or two of those aluminum series additives may be mixed and then added to the grease. In the practice of the present disclosure, the use of the aluminum powder having a high extreme pressure effect is preferred because it has a high heat resistance and a high durability and is hard to be thermally decomposed.

The amount of the aluminum series additive to be added is within the range of 0.05 to 10 parts by weight relative to 100 parts by weight of the base grease. Specifically, (1) where the aluminum series additive is solely the aluminum powder, the aluminum powder is added in an amount within the range of 0.05 to 10 parts by weight relative to 100 parts by weight of the base grease; (2) where the aluminum series additive is solely the aluminum compound, the aluminum compound is added in an amount within the range of 0.05 to 10 parts by weight relative to 100 parts by weight of the base grease; and (3) where the aluminum series additive is a mixture of the aluminum powder and the aluminum compound, the total amount of the aluminum powder and the aluminum compound that are added is within the range of 0.05 to 10 parts by weight relative to the 100 parts by weight of the base grease. If the mixing proportion of the aluminum series additive is smaller than the lower limit referred to above, exfoliation, which would occur at the raceway surface as a result of the hydrogen brittleness, cannot be effectively avoided. On the other hand, no further effect of avoiding the exfoliation can be expected if the mixing proportion thereof exceeds the upper limit referred to above.

For a base oil of the above mentioned grease composition that can be employed in the practice of the present disclosure, examples include mineral oil such as, for example, a spindle oil, a refrigerator oil, a turbine oil, a machine oil, a dynamo oil and so on; a synthesized oil of the hydrocarbon series such as, for example, a high refined mineral oil, liquid paraffin, polybutene, a GTL oil synthesized by means of the Fisher-Tropsch process, a poly-α-olefin oil, alkylnaphthalene, alicyclic compounds and so on; and a synthesized oil of the non-hydrocarbon series such as, for example, natural fat and oil, a polyol ester oil, a phosphate ester oil, a polymer ester oil, an aromatic ester oil, a carbonic acid ester oil, a diester oil, a polyglycol oil, a silicone oil, a polyphenylether oil, an alkyl diphenylether oil, alkyl benzene oil, fluorinated oil and so on. Of them, the use of the alkyl diphenylether oil or the poly-α-olefin oil is preferred because it has an excellent heat resistance and an excellent lubricity.

Of the grease composition referred to above, the thickener that can be employed in the practice of the present disclosure includes benton; silica gel; fluorine compounds; soaps such as, for example, lithium soap, lithium complex soap, calcium soap, calcium complex soap, aluminum soap, aluminum complex soap and so on; and compounds of the urea series such as, for example, diurea compounds, a polyurea compounds and so on. Of those thickeners, the use of the compounds of the urea series is preferred in terms of the heat resistance and the cost. The compounds of the urea series can be obtained by reacting an isocyanate compound with an amine compound. In order to avoid leftover of an reactive free radical, it is preferred that the isocyanate group of the isocyanate compound and the amino group of the amine compound are blended in substantially equivalent weight.

The diurea compound referred to above can be obtained by reacting, for example, diisocyanate and monoamine with each other. For the diisocyanate, phenylene diisocyanate, tolylene diisocyanate, diphenyl diisocyanate, diphenylmethane diisocyanate, octadecane diisocyanate, decane diisocyanate, hexane diisocyanate and others can be enumerated. For the monoamine, octyl amine, dodecyl amine, hexadecyl amine, stearyl amine, oleyl amine, aniline, p-toluidine, cyclohexylamine and others can be enumerated. The polyurea compound can be obtained by reacting, for example, diisocyanate, monoamine and diamine with each other. For the diisocyanate and monoamine, compounds similar to those used in preparing the diurea compound can be enumerated, and for the diamine, ethylene diamine, propane diamine, butane diamine, hexane diamine, octane diamine, phenylene diamine, tolylene diamine, xylene diamine, diamino diphenylmethane and others can be enumerated.

When the thickener such as, for example, the compound of the urea series is blended in the base oil, the base grease necessary to blend the additive of the aluminum series referred to above can be obtained. The base grease of a kind, in which the compound of the urea series is used as the thickener, is prepared by reacting the isocyanate compound and the amine compound with each other in the base oil. The mixing proportion of the thickener in 100 parts by weight of the base grease is preferably within the range of 1 to 40 parts by weight and, more preferably, within the range of 3 to 25 parts by weight. If the amount of the thickener contained therein is smaller than the lower limit of 1 part by weight referred to above, the recruiting effect will be lowered and formation of the grease will become difficult, but if it exceeds the upper limit of 40 parts by weight, the resultant base grease will become hard and no expected effect can be obtained.

Also, in addition to the aluminum series additive, any known additive for use with the grease may be employed as necessary. For this additive, for example, organic zinc compounds, antioxidants such as, for example, compounds of the amine series or of the phenol series, a metal inert agent such as, for example, benzotriazole, a viscosity index increasing agent such as, for example, polymethacrylate or polystyrene, a solid lubricant such as, for example, molybdenum disulfide or graphite, antirust agent such as, for example, metal sulfonate or polyol ester, a friction reducing agent such as, for example, organic molybdenum, an oily agent such as, for example, ester or alcohol, and/or a frictional wear preventing agent such as, for example, compounds of the phosphorous series. Those additives may be employed singly or in combination of two or more of them. The grease composition of the present disclosure is effective to avoid an undesirable occurrence of the peculiar exfoliation caused by the hydrogen brittleness and, therefore, the service lifetime of the grease filled bearing assembly can be increased.

### [Examples 1 to 8]

4,4-diphenyl methane diisocyanate (tradenamed "MILLIONATE MT" manufactured by and available from Nippon Polyurethane Industry Co., Ltd.) (hereinafter referred to as "MDI") was dissolved in a quantity, listed in Table 2 below, into half the amount of the base oil listed also in Table 2, and a quantity of monoamine which is twice equivalent to MDI, was dissolved into the remaining amount of the base oil. Their blending proportions and types are as tabulated in Table 2. After a solution of monoamine dissolved therein had been added while the solution containing MDI dissolved therein was stirred, the resultant solution was reacted at a temperature within the range of 100 to 120°C for 30 minutes while being stirred, to form the diurea compound in the base oil. Respective proportions of the aluminum series additive and the antioxidant, as shown in Table 2, were then added to the base oil containing the diurea compound and stirred at a temperature within the range of 100 to 120°C for 10 minutes. The resultant solution was then cooled and homogenized with the use of three rolls to thereby provide the grease composition.

In Table 2, the synthetic hydrocarbon oil used as the base oil utilized "SYNFLUID 601" (manufactured by and available from Nippon Steel Chemical Co., Ltd.) having a dynamic viscosity of 30 mm²/sec. at 40°C and the alkyl diphenyl ether oil utilized "MORESCOHIGHLUB LB100" (manufactured by and available from Matsumura Sekiyu Kabushiki Kaisha) having a dynamic viscosity of 97 mm2/sec. at 40°C. Also, the antioxidant was employed in the form of "HINDERED PHENOL" (manufactured by and available from Sumitomo Chemical Co., Ltd. A rapid acceleration and deceleration test was conducted on the resultant grease composition. The test method and test conditions are discussed below. Results are shown in Table 2.

### <Rapid Acceleration and Deceleration Test>

The rapid acceleration and deceleration test was conducted by imitating an alternator, which is one example of auxiliary equipments for an electric appliance, and filling the grease composition in a deep groove ball bearing assembly 6303 of an inner ring rotating type used to support a rotary shaft. This test was conducted under test conditions in which the load loaded to a pulley fitted to a rotary shaft tip was 1960 N, the rotational speed was set to a value within the range of 0 to 18,000 rpm. while an electric current of 0.1A flowed inside the bearing assembly tested. Also, the length of time (exfoliation occurrence lifetime, h) during which a power generator halted as a result those vibrations in a vibration detector attained a value higher than a preset value subsequent to occurrence of an abnormal exfoliation within the bearing assembly, was measured. It is to be noted that the test was interrupted upon elapse of 500 hours.

### [Comparative Examples 1 to 3]

In a manner similar to the method in Example 1 above, using the blending proportions shown in Table 2, the base grease was adjusted by selecting the thickener and the base oil, followed by addition of the additive to obtain the grease composition. The resultant grease composition was tested and evaluated in a manner similar to that in Example 1 above. Results thereof are shown in Table 2.

**Table 2**

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| Mixing Ratio of Grease Composition (part by weight) | - | 15 | 63 | 15 | 15 | 15 | 15 | 15 | 15 | 15 | 15 |
| Base Grease | | | | | | | | | | | |
| Base Oil | | | | | | | | | | | |
| synthesized HC oil ⁽¹⁾ | | | | | | | | | | | |
| alkyl diphenyl ether oil⁽²⁾ | 80 | 63 | 15 | 63 | 63 | 63 | 63 | 63 | 63 | 63 | 63 |
| Thickener | - | - | - | 5.8 | - | - | - | - | - | - | - |
| amine : octylamine | | | | | | | | | | | |
| amine: p- toluidine | 9.2 | 10.1 | 10.1 | 4.9 | 10.1 | 10.1 | 10.1 | 10.1 | 10.1 | 10.1 | 10.1 |
| diisocyanate : MD1 ⁽³⁾ | 10.8 | 11.9 | 11.9 | 11.3 | 11.9 | 11.9 | 11.9 | 11.9 | 11.9 | 11.9 | 11.9 |
| (Total part by weight of Base Grease) | (100) | (100) | (100) | (100) | (100) | (100) | (100) | (100) | (100) | (100) | (100) |
| Additives | 1 | 1 | 1 | 1 | 1 | 1 | 1 | 1 | 1 | 1 | 1 |
| antioxidant ⁽⁴⁾ | | | | | | | | | | | |
| aluminum powder ⁽⁵⁾ | 1 | 1 | 1 | 1 | 0.1 | 5 | - | - | - | 0.02 | 15 |
| aluminum carbonate (6) | - | - | - | - | - | - | 1 | - | - | - | - |
| aluminum nitrate (7) | - | - | - | - | - | - | - | 1 | - | - | - |
| Exfoliation occurrence lifetime (hour) | >500 | >500 | 480 | 460 | >500 | >500 | 420 | 400 | 200 | 220 | 180 |

| | | | | | | | | | | | |
|---|---|---|---|---|---|---|---|---|---|---|---|
| (1): SYNFLUID 601 (of Nippon Steel Chemical Co., Ltd. and having a dynamic viscosity of 30 mm²/sec. at 40°C). (2): MORESCOHIGHLUB LB100 (of Matsumura Sekiyu Kabushiki Kaisha and having a dynamic viscosity of 97 mm²/sec. at 40°C. (3): MILLIONATE MT (of Nippon Polyurethane Industry Co., Ltd.) (4): HINDERED PHENOL (of Sumitomo Chemical Co., Ltd.) (5) ∼ (7): Reagent | | | | | | | | | | | |

As shown in Table 2, each of the Examples discussed above exhibited excellent test results (of the rapid acceleration and deceleration test), that is, 400 hours or more (exfoliation occurrence lifetime). This appears to have resulted from the fact that thanks to the addition of the predetermined amount of the aluminum series additive, the peculiar exfoliation accompanying a change in whitened texture occurring on the raceway surface could be avoided effectively.

According to the ball bearing assembly 1 having the grease composition filled in the previously described bearing space VI (Fig. 2), since the grease composition filled in this bearing space VI is of a composition including the additive mixed in the base grease prepared by mixing the base oil and the thickener, which additive contains at least one aluminum series additive selected from the group consisting of the aluminum powder and the aluminum compound and since the amount of the aluminum series additive added is within the range of 0.05 to 10 parts by weight relative to 100 parts by weight of the base grease, the occurrence of the peculiar exfoliation caused by the hydrogen brittleness can be suppressed. Accordingly, the service lifetime of the ball bearing assembly 1 filled with this grease composition can be increased.

Since with the cage of the type provided with the recessed areas 16 the leakage of the grease can be avoided, there is no need to change the shape of the seal groove 10 in the inner ring 2 and there is also no need to provide, for example, a slinger or the like in the axial direction of the bearing assembly. Accordingly, the space saving can be realized with no need to increase the number of component parts. Since by adopting the cage 5 of the type described above and the grease composition of the kind described above, the bearing assembly can be operated under a feasible condition without the hydrogen brittleness and there is no grease leakage occurring, the lubricating duration characteristic possessed by the grease filled in the bearing space VI can be sufficiently exhibited. Also, contamination of the external environment resulting from the grease leakage and obnoxious noises generated as a result of corrosion and/or slippage of, for example, an engine auxiliary machine belt or the like can be avoided. In addition, as compared with that in the conventional case, reduction in manufacturing cost brought about by reduction in number of component parts can be expected.

The following summarizes various preferred modes of the ball bearing assembly having the grease composition filled in the previously described bearing space V1 (Fig. 2).

The ball bearing assembly, which forms a basic construction in each of the following modes, is of a structure including the cage of the present disclosure, a plurality of balls retained by this cage and interposed between the inner and outer rings, the grease composition being filled in the bearing space between the inner and outer rings, and sealing members provided in the outer ring or the inner ring for sealing the bearing space, in which the grease composition is filled in the bearing space and is prepared by blending an additive in a base grease containing a base oil and a thickener, the additive containing at least one aluminum series additive which is selected from the group consisting of an aluminum powder and an aluminum compound, with the amount of the aluminum series additive being within the range of 0.05 to 10 parts by weight relative to 100 parts by weight of the base grease.

### Mode B1)

In the basic construction described above, as the thickener, a urea series thickener can be enumerated.

### Mode B2)

In the basic construction described above, the base oil referred to above is selected from the group consisting of an alkyldiphenyl ether oil and a poly-α-olefin oil.

### Mode B3)

The ball bearing assembly of the basic construction described above may be a double row angular contact ball bearing assembly including an outer ring having an inner periphery formed with double rows of raceway surfaces, an inner ring having raceway surfaces formed in an outer periphery thereof in face-to-face relation with the above described raceway surfaces, double rows of balls interposed between the raceway surfaces in the inner ring and the raceway surfaces in the outer ring, a cage for retaining the balls for each row, and sealing members provided in the outer ring or the inner ring for closing a bearing space delimited between the inner ring and the outer ring.

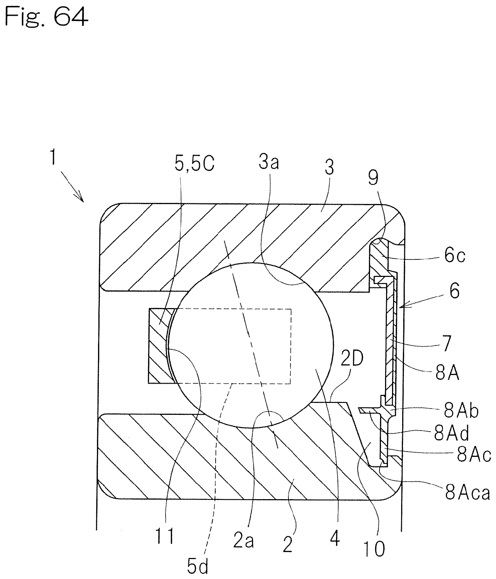

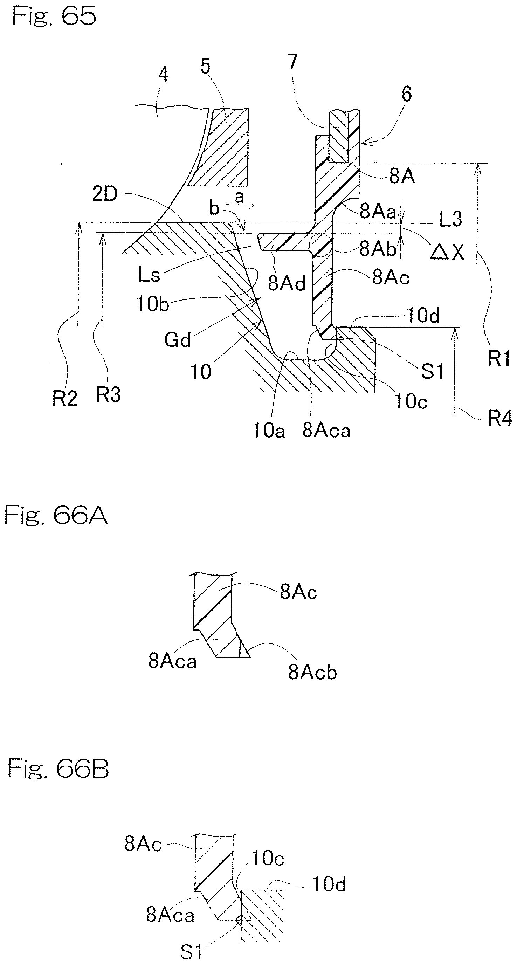

A thirteenth embodiment will now be described with particular reference to Figs. 64 to 68. The ball bearing assembly 1 according to this embodiment is a single row angular contact ball bearing assembly equipped with the cage 5 designed in accordance with the present disclosure. As shown in Fig. 64, this single row angular contact ball bearing assembly includes a plurality of balls 4 interposed between raceway surfaces 2a and 3a defined respectively in the inner and outer rings 2 and 3, a cage 5 (or a cage 5C as will be described later) for retaining those balls 4, and a sealing member 6, shown in Fig. 65 and Figs. 66A and 66B as will be mentioned later, for sealing one end of an annular space, delimited between the inner and outer rings 2 and 3, on the pocket open side. The raceway surfaces 2a and 3a are so formed as to form a predetermined contact angle shown by the single dotted chain line in Fig. 64.

A counterbore portion forming an inner ring outer diametric surface on the left side of Fig. 64, where there is no seal groove 10, is so formed to have a smaller diameter than that of an outer diametric portion 2D on the right side of Fig. 64. Accordingly, relative to the outer ring 3 and the balls 4, the inner ring 2 can be easily incorporated from the inner ring outer diametric surface on the left side. Also, the distance between the inner diametric surface 5d of the cage 5, 5C on the pocket back face side and the inner ring outer diametric surface can be increased. The grease is filled in the bearing space. In this angular contact ball bearing assembly, owing to the use of the sealing member 6 as will be described later and the cage 5 so constructed as hereinabove described, reduction in torque, resistance to the grease leakage, dust proofing and space saving can be achieved simultaneously and at low cost.

The sealing member 6 will be described in detail.

As shown in Fig. 64, on a right side portion of the inner ring outer diametric surface, an annular seal groove 10 is formed so as to extend in the circumferential direction. The outer ring inner diametric surface is formed with a sealing member anchoring groove 9 defined therein in opposition to the seal groove 10. An annular sealing member 6 is interposed between the seal groove 10 and the sealing member anchoring groove 9. This sealing member 6 is of a structure including a core metal 7 and a synthetic rubber 8A molded to such core metal 7 and has its peripheral edge 6c fixedly engaged in the sealing member anchoring groove 9. As shown in Fig. 65, the core metal 7 has an inner diameter R1 greater than the outer diameter R2 of the inner ring outer diametric surface (outer diametric portion) of the inner ring 2. At a location between the inner diameter of the core metal 7 and the axially extending line of extension L3 of the inner ring outer diametric surface 2D, a constricted area 8Aa is formed in a portion of the synthetic rubber 8A and the synthetic rubber 8A therefore has a wall thickness reduced at the site of the constricted area 8Aa.

A portion is so formed as to extend straight from the constricted area 8Aa in the inner diametric direction and a branched portion 8Ad is provided at a location partway thereof. A portion extending from the branched portion 8Ab in the inner diametric direction forms a primary sealing lip 8Ac and a portion parting therefrom in an inwardly oriented axial direction forms an auxiliary sealing lip 8Ad. The primary and auxiliary sealing lips 8Ac and 8Ad are continued to each other at the branched portion 8Ab so as to represent a shape similar to the inverted shape of a figure "L". The branched portion 8Ab referred to above lies within the range, in which a line of extension of the thickness of the primary sealing lip 8Ac and a line of extension of the auxiliary sealing lip 8Ad intersect with each other and is defined by a portion encompassed by the single dotted circle line in Fig. 65. This branched portion 8Ab is held at a position spaced a very small distance ΔX in a direction radially inwardly from a line of extension L3 of the inner ring outer diametric surface 2D. The presence of the space represented by the distance ΔX brings about a step between the inner ring outer diametric surface 2D and the auxiliary sealing lip 8Ad, which step is of a size corresponding to the difference between the radius R2 of the inner ring outer diametric surface 2D and the radius R3 of the outer periphery of the auxiliary sealing lip 8Ad.

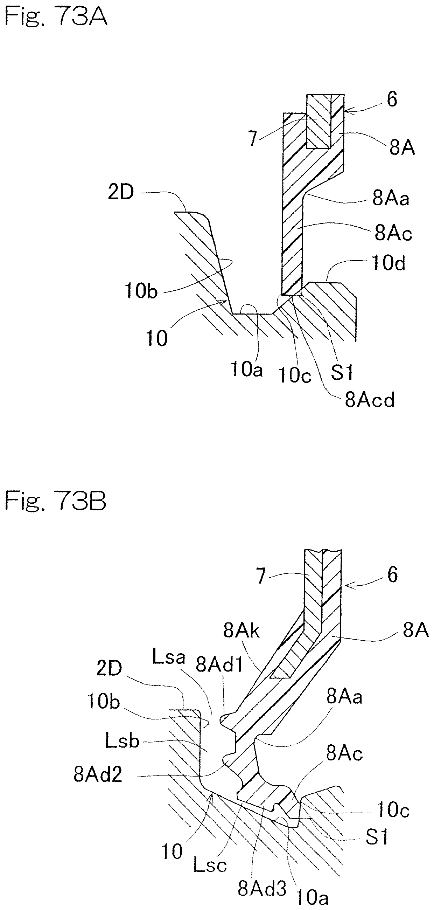

The step referred to above does not pose an obstruction to the grease then moving from the side of the inner ring outer diametric surface 2D towards the side of the auxiliary sealing lip 8Ad as shown by the arrow a in Fig. 65. It is, however, to be noted that since if the difference ΔX becomes large, the capacity of a grease reservoir Gd as will be described later will decrease, accompanied by reduction of an effect of relieving the leak pressure of the grease, the difference ΔX is limited to such a range that such effect of relieving the leak pressure will not be impaired. Where as a result that the position of the branched portion 9Ab is shifted radially inwardly of that described hereinbefore, the radius R3 becomes greater than the radius R2, that is, R3 > R2, with the previously described step posing a problem to the movement of the grease, it is preferred to provide such a tapered face 8Ada as shown in Fig. 73A as will be described later.

As shown in Fig. 65, the auxiliary sealing lip 8Ad has a tip portion formed to have an inclined face parallel to an inclined inner groove wall 10b of the seal groove 10, with a labyrinth seal Ls defined between it and the inner groove wall 10b. The seal groove 10 includes a groove bottom (bottom surface) 10a, an outer groove wall 10c and an outer land 10d. The radius R4 of the outer land 10d is smaller than the radius R2 of the inner ring outer diametric surface 2D. The tip portion of the primary sealing lip 8Ac has a sliding area 8Aca somewhat warped in a direction towards an outside face and a tip of that tip portion thereof is held in contact with the outer groove wall 10c of the seal groove 10 under a predetermined interference or tightening allowance. Accordingly, as shown in Fig. 66B, a contact seal S1 is so formed. Referring to Fig. 66B, the shape of that tip portion of the sliding area 8Aca under a natural condition is shown by the single dotted chain line and on the other hand, the shape of the tip portion of the sliding area 8Aca, when deformed as a result of its engagement with the outer groove wall 10c, is shown by the solid line. The contact seal S1 is shown as defined at this deformed portion. In other figures, only the shape of the contact seal S1 under the natural condition is shown for the sake of brevity.

While the primary and auxiliary sealing lips 8Ac and 8Ad in Fig. 65 are continued to each other at the branched portion 8Ab so as to represent a shape similar to the inverted shape of a figure "L" as hereinbefore described, a region bound by this inverted L shaped portion and an inner groove wall 10b of the seal groove 10 opposed thereto defines the grease reservoir Gd of a relatively large capacity. This grease reservoir Gd is communicated with the inside of the bearing assembly through the labyrinth seal Ls and is closed by the contact seal S1. As a countermeasure for the pressure reduction at the time of an abnormal increase of the bearing interior pressure, a small groove portion 8Acb in Fig. 66A is provided at two symmetrical locations of the entire circumference at the tip of the sliding area 8Aca. Since the leak pressure of the grease can be reduced by the labyrinth seal Ls positioned inwardly of the contact seal S1, the interference of the primary sealing lip 8Ac at the contact seal S1 can be set to a small value as compared with the model, in which such leak pressure is directly received, that is, the primary sealing lip is positioned inside. The interference can be adjusted by changing the wall thickness of the constricted area 8Aa and wall thicknesses of the primary sealing lip 8Ac and the sliding area 8Aca.

In this case, by the following reasons, the interference of the contact seal S1 can be further reduced. The first reason is that a portion of the grease purged from the raceway surface 2a towards the outside through the inner ring outer diametric surface 2D moves on the outer diametric surface of the auxiliary sealing lip 8Ad as shown by the arrow in Fig. 65. Since the auxiliary sealing lip 8Ad has an outer diametric surface that is parallel to the axis, the grease is prevented from being thrust backwards. In the conventional sealing structure, in which the outer diametric surface of the auxiliary sealing lip is inclined inwardly, there is a considerable tendency that the grease may be inwardly thrust backwards, accompanied by an increase of the pressure of the grease, but in this case, since the force necessary to thrust the grease backwards is relatively weak, the influence of the grease on the pressure is minimized and, hence, the movement of the grease towards the labyrinth seal Ls as shown by the arrow b in Fig. 65 is minimized. As a result, increase of the pressure inside the grease reservoir Gd is suppressed.

Another reason is that the grease reservoir Gd is formed by the primary and auxiliary sealing lips 8Ac and 8Ad, which are continued to each other through the branched portion 8Ab so as to represent a shape similar to the inverted shape of a figure "L" as hereinbefore described, and the inner groove wall 10b of the seal groove 10 opposed thereto and has a relatively large capacity. Accordingly, the internal pressure of the grease reservoir Gd can be further reduced.

In order to ascertain the function and effect described above, a test was conducted to compare the article of the thirteenth embodiment (an article having opposite seals) and the currently available article of the structure described subsequently.

### (1) Currently Available Article

The primary and auxiliary sealing lips are so designed and so shaped as to occupy respective arms formed by ramifying the tip portion of a synthetic rubber forming a sealing member. The currently available article is structured by positioning the primary sealing lip, which is defined by one of the ramified arms, on an inner side and positioning the auxiliary sealing lip, which is defined by the other of the ramified arms, on an outer side. (The article having opposite seals)

### (2) Test Particulars

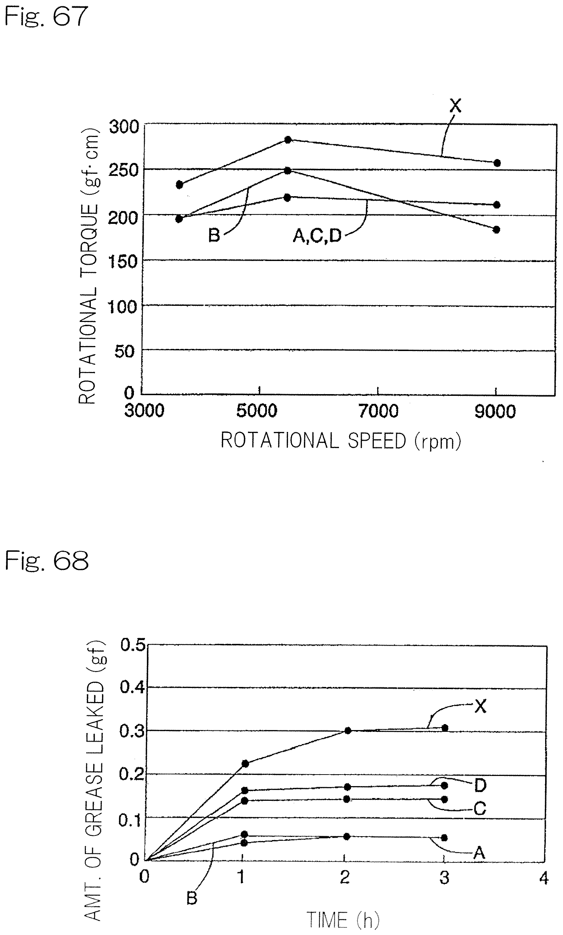

Using the article of the present embodiment and the currently available article of the structure described above, the torque value was measured under the axial loading of 4 kgf. Actually measured values are shown in Fig. 67. In Fig. 67, the symbol "X" denotes the torque value exhibited by the currently available article and the symbol "A" denotes the torque value exhibited by the article of the present embodiment. A test was conducted to determine the grease leakage under the radial loading of 20 kgf. Results of such test are shown in Fig. 68. In Fig. 68, the symbol "X" denotes the amount of leaked grease exhibited by the currently available article and the symbol "A" denotes the amount of leaked grease exhibited by the article of the present embodiment. .

Regarding the torque values shown in Fig. 67, the article A has exhibited about 40 gf•cm (20%) reduction on an average as compared with the currently available article X and, therefore, it is clear that in the article of the present embodiment, the low torque is attained. Regarding the amounts of the leaked grease shown in Fig. 68, the article A has exhibited the cumulative amount of grease leaked by the time stabilization was established after three hour, which is reduced down to about 1/4 of that exhibited by the currently available article X and it is clear that the sealing performance has been improved.

According to the ball bearing assembly 1 designed in accordance with the thirteenth embodiment, the recessed areas 16 are provided in the snap cage 5 and the amount of grease sticking to the balls 4 and scraped therefrom by the inner diametric surface 5d of the cage 5 can be reduced. Accordingly, deposition of the grease onto the outer diametric portion 2D of the inner ring 2 can be avoided. Therefore, deposition of the grease onto the seal groove 10 in the inner ring 2 can be avoided. There is no need to change the design and the shape of the seal groove 10 and, also, to secure a space for installation of a slinger or the like. Accordingly, the manufacturing cost can be reduced with the number of component parts reduced as compared with the conventional example.

Also, in the sealing member 6, the grease is sealed by the labyrinth seal Ls, formed by the auxiliary sealing lip 8Ad, and the contact seal S1 formed by the primary sealing lip 8Ac, and leakage thereof to the outside is prevented. Since the outer diametric surface of the auxiliary sealing lip 8Ad spreads axially to a height about equal to the inner ring outer diametric surface 2D, the grease thrust from the side of the raceway surface 2a smoothly move towards the outer diametric surface side thereof. Therefore, the amount of the grease passing through the labyrinth seal Ls can be reduced. The internal pressure of the bearing assembly is relieved by the auxiliary sealing lip 8Ad and the internal pressure acting on the primary sealing lip 8Ac is reduced. Therefore, the interference of the contact seal S1 formed by the primary sealing lip 8Ac can be reduced to achieve the low torque.

Because of the recessed areas 16, the amount of the grease sticking to the balls 4 and scraped therefrom by the cage inner diametric surface 5d is reduced. By the recessed areas 16, the grease tending to pile up in the vicinity of the pocket open edge of the cage 5 can be caused to smoothly flow onto the inner surface of each of the pocket 11, thus contributing to the lubrication.

The sealing member 6 forms the grease reservoir Gd, which is surrounded by the primary and auxiliary sealing lips 8Ac and 8Ad, which are shaped to represent the inverted L shape through the branched portion 8Ab, and the inner side wall 10b of the seal groove 10, and which is communicated with the bearing interior through the labyrinth seal Ls and is closed at the contact seal S1. Since this grease reservoir Gd function to further relieve the internal pressure of the bearing assembly, the interference of the primary sealing lip 8Ac can be reduced to achieve a low torque and, at the same time, a high sealing can be achieved.

The counterbore portion forming the inner ring outer diametric surface on the left side of Fig. 64 is so formed as to have a diameter smaller than that of the outer diametric portion 2D on the right side of Fig. 64 and, therefore, the inner ring 2 can be easily incorporated to the outer ring 3 and the balls 4 from the inner ring outer diametric side on the left side. Also, the distance between the inner diametric surface 5d of the cage 5, 5C on the pocket back face side and the inner ring outer diametric surface can be increased. In such case, due to the recessed areas 16, by the cumulative effect in which the amount of the grease sticking to the balls 4 and scraped therefrom by the inner diametric surface 5d of the cage 5, it is possible to avoid the deposition of the grease onto the inner ring outer diametric surface on the left side.

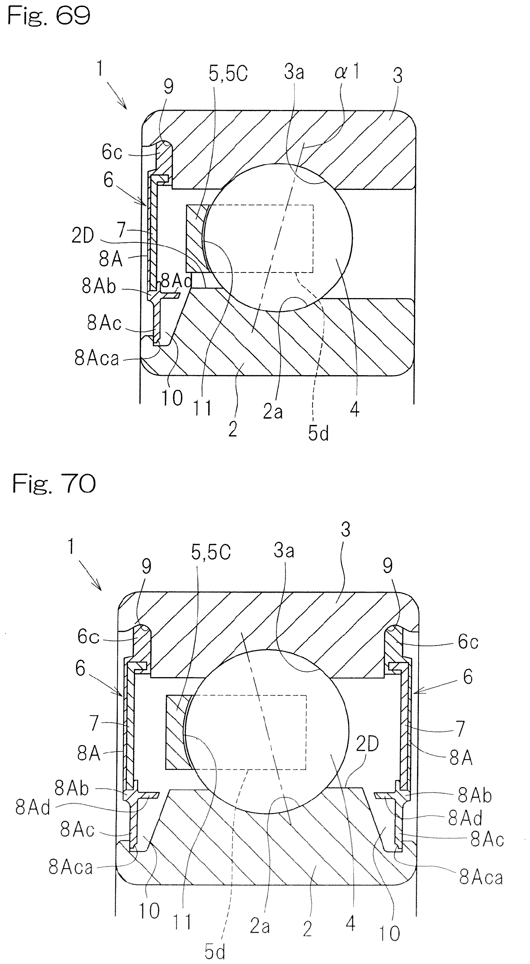

In the single row angular contact ball bearing assembly according to the fourteenth embodiment shown in Fig. 69, the seal groove 10 is formed on a left side of the pocket back face side of the inner ring 2 and the sealing member 6 shown in Fig. 64 is provided only on a left end. In correspondence with the seal groove 10 on the left side, a sealing member anchoring groove 9 is formed in a left end of the outer ring inner diametric surface. The counterbore portion defining the inner ring outer diametric surface on the right side of Fig. 69 is so formed as to have a diameter smaller than that of the outer diametric portion 2D on the left side of Fig. 69.

According to the construction shown in and described with reference to Fig. 69, with respect to the grease thrust from the raceway surface 2a or the like towards the left side of Fig. 69, the amount of the grease adhering to the balls 4 and scraped therefrom by the inner diametric surface 5d of the cage 5 can be reduced by the presence of the recessed areas 16. Accordingly, deposition of the grease on the outer diametric portion 2D of the inner ring 2 can be avoided and the flow of the grease towards the seal groove 10 can also be avoided. Even when the grease somewhat sticks to the outer diametric surface 2D, the grease so sticking to the outer diametric surface 2D can smoothly move towards the outer diametric surface of the auxiliary sealing lip 8Ad. Therefore, the amount of the grease passing through the labyrinth seal Ls (Fig. 65) can be reduced. The internal pressure of the bearing assembly is relieved by the auxiliary sealing lip 8Ad and the internal pressure acting on the primary sealing lip 8Ac is reduced. Accordingly, the interference of the contact seal S1 formed by the primary sealing lip 8Ac can be reduced to achieve the low torque. By the action of the sealing member 6 on the left side, intrusion of foreign matters from the outside of the bearing assembly can be minimized.

As is the case with the single row angular contact ball bearing assembly according to a fifteenth embodiment shown in Fig. 70, sealing members 6 and 6 shown in Fig. 64 may be provided on respective sides of the inner and outer rings. The grease thrust from the raceway surface 2a or the like towards the right side of Fig. 70 can be prevented by the sealing member 6 on the right side from leaking. With respect to the grease thrust from the raceway surface 2a or the like towards the left side of Fig. 70, by the action of the recessed areas 16 (Fig. 4) in the cage 5, the amount of the grease sticking to the balls 4 and scraped therefrom by the inner diametric surface 5d can be reduced. Therefore, the flow of the grease towards the seal groove 10 on the left side of the inner ring 2 can be avoided.

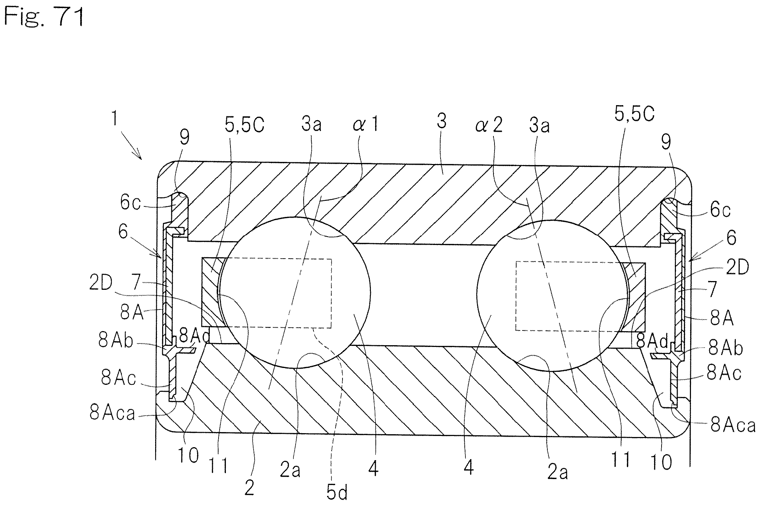

The ball bearing assembly according to a sixteenth embodiment shown in Fig. 71 is a double row angular contact ball bearing assembly, which includes an inner ring 2, an outer ring 3, a plurality of balls 4, cages 5 and 5 one for each of the row of the balls 4, and sealing members 6 and 6 shown in Fig. 64. The contact angles α1 and α2 of the illustrated double row angular contact bearing assemblies are held in a relation generally depicted by an inverted V shape as shown by the single dotted chain line in Fig. 71. The rows of the balls 4 are interposed between the raceway surfaces 2a and 3a and each of the cages 5 retains the corresponding row of the balls 4. The pocket open side of the cage 5 for each row is oriented axially inwardly and the pocket back face side is somewhat spaced from and opposed to the sealing member 6. In other words, the respective pocket front faces of the cages 5 and 5 are so arranged as to be opposed to each other. The grease is filled in the bearing space. In this double row angular contact ball bearing assembly, the use of the sealing members 6 and the cages 5 make it possible to achieve the low torque, resistance to grease leakage, dust proofing and space saving simultaneously and at a low cost.

According to this double row angular contact ball bearing assembly, since the recessed areas 16 are provided in each of the snap cages 5 and the respective pocket front surfaces of those two cages 5 and 5 are arranged so as to confront with each other, the leakage of the grease from the cage back face side is suppressed. Accordingly, the grease can be prevented from sticking to the outer diametric portion 2D of the inner ring 2. Therefore, not only can the deposition of the grease in the seal groove 10 of the inner ring 2 be avoided, but also there is no need to change the design and the shape of the seal groove 10 and also to use a space for installation of a slinger or the like. Accordingly, the manufacturing cost can be lowered with the number of component parts reduced to a small number as compared with those in the conventional example.

Also, in the sealing member 6, the grease is sealed by the labyrinth seal Ls, formed by the auxiliary sealing lip 8Ad, and the contact seal S1 formed by the primary sealing lip 8Ac, and leakage thereof to the outside is prevented. Since the outer diametric surface of the auxiliary sealing lip 8Ad spreads axially to a height about equal to the inner ring outer diametric surface 2D, the grease thrust from the side of the raceway surface 2a smoothly move towards the outer diametric surface side thereof. Therefore, the amount of the grease passing through the labyrinth seal Ls can be reduced. The internal pressure of the bearing assembly is relieved by the auxiliary sealing lip 8Ad and the internal pressure acting on the primary sealing lip 8Ac is reduced.

In the double row angular ball bearing assembly, due to the cage shape, the deposition of the grease on the inner ring outer diametric portion 2D is suppressed and the leakage of the grease from the cage back face side, that is, from a counter-pocket side can be suppressed. In addition, by the use of the above described sealing members 6, the low torque and the high sealability can be realized, which are brought about by the labyrinth structure.

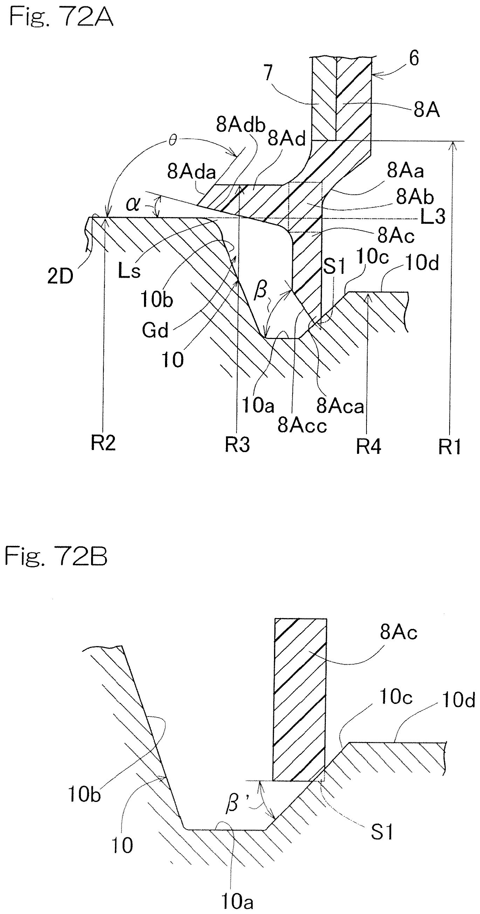

The rolling bearing assembly according to a seventeenth embodiment shown in Fig. 72A is a single row, sealed deep groove ball bearing assembly, in which the cage 5C is employed for retaining the plural balls 4 and opposite ends of the annular space delimited between the inner and outer rings 2 and 3 are sealed by respective sealing members 6 of the type shown in and described with reference to Fig. 64 to Figs. 66A and 66B.

The seventeenth embodiment will now be described in detail with reference to Fig. 72A.

The sealing structure according to the seventeenth embodiment best shown in Fig. 72A is basically similar to the sealing structure according to the thirteenth embodiment shown in and described with reference to Fig. 64 to Fig. 66A and 66B. The difference therebetween lies, however, in that the radial position of the branched portion 8Ab lies at a position on the line of extension L3 of the inner ring outer diametric surface 2D and the most portion of the auxiliary sealing lip 8Ad exists in an upper position (on the outer diametric side of the sealing member 6) above the line of extension L3. The radius R3 of the maximum diametric portion of the auxiliary sealing lip 8Ad is greater than the radius R2 of the inner ring outer diametric surface 2D. For this reason, although the capacity of the grease reservoir Gd increases, a problem arises that the tip portion face of the auxiliary sealing lip 8Ad will provide an obstruction to the grease then moving from the inner ring outer diametric surface 2D side towards the outer diametric side of the auxiliary sealing lip 8Ad. To avoid this problem, the tip portion of the auxiliary sealing lip 8Ad is formed with a tapered face 8Ada that is inclined at an angle θ not smaller than 90° relative to the inner ring outer diametric surface 2D.

The auxiliary sealing lip 8Ad has an inner diametric face inclined at a predetermined angle α (for example, within the range of 5° to 10°) relative to the inner ring outer diametric surface 2D, and a labyrinth seal Ls is formed between the inclined face 8Adb and the inner groove wall 10b of the seal groove 10.

A tapered face 8Acc is also formed in the tip portion inner face of the primary sealing lip 8Ac, and the angle β defined between the tapered face 8Acc and the outer groove wall 10c of the seal groove 10 is so formed as to be of a value equal to or larger than 90°. In the presence of such a large angle β, as compared with the case of the narrow angle β' of not greater than 90° as shown in Fig. 72B as a comparative example, the grease will hardly pass through the contact seal S1 of the primary sealing lip 8Ac. Other structural features, and functions and effects brought about thereby, are similar to those afforded by the sealing structure according to the embodiment shown in and described with reference to Fig. 64 to Figs. 66A and 66B.

In the sealing structure according to the seventeenth embodiment shown in and described with reference to Fig. 72A, a test similar to that carried out in connection with the thirteenth embodiment shown in and described with reference to Figs. 64 to Figs. 66A and 66B was carried out. In Fig. 67, the actually measured value of the torque value is indicated by "B". Also, in Fig. 68, the actually measured value of the amount of grease leaked is indicated by "B". As can readily be understood from those results, the low torque and the high sealing, which are about equal to those in the thirteenth embodiment shown in and described with reference to Fig. 64 to Figs. 66A and 66B, could be achieved. Also, in the rolling bearing assembly according to the seventeenth embodiment, when any one of the cages described hereinbefore is employed, the bearing assembly free from the grease leakage can be assembled.

Examples of the present disclosure suggested for reference purpose will now be described with particular reference to Figs. 73A and 73B, respectively. The example suggested for reference purpose, which is shown in Figs. 73A and 73B, is devised during a preliminary step towards contrivance of the sealing structure shown in and described with particular reference to Fig. 64 to Figs. 66A and 66B and Figs. 72A and 72B. In the case of the sealing structure shown in Fig. 73A, the sealing lip of the sealing member 6 is only a primary sealing lip 8Ac and this primary sealing lip 8Ac has a predetermined width and also has its tip portion formed with a end face 8Acd in a widthwise direction. An outer corner portion of the end face 8Acd is held in contact with the outer groove wall 10c of the seal groove 10 to thereby form a contact seal S1. This is unique in that as compared with the previously described embodiment, no auxiliary sealing lip is employed.

As shown in Fig. 67, the torque value C, when the interference of the primary sealing lip 8Ac is so chosen to be about equal to that in the previously described embodiment, has been confirmed as being about equal to the torque value A exhibited by the article of the present disclosure. With respect to the sealability, as shown in Fig. 68, "C" exhibits about 1/2 of the currently available article X and it has been affirmed that it is inferior to A and B in respect of the sealability. Although this appears to have resulted from the fact that neither the auxiliary sealing lip 8Ad nor the grease reservoir Gd, both employed in the embodiment, is employed, conversely it means that the auxiliary sealing lip 8Ad and the grease reservoir Gd contribute to increase of the leakage performance.

The example suggested for reference purpose shown in Fig. 73B is such that the inner diametric portion of the core metal 7 is angularly bent to represent a shape similar to the shape of a figure "L" and, at the same time, the synthetic rubber 8A is also bent to approach the inner groove wall 10b of the seal groove 10; that two staged auxiliary sealing lips 8Adl and 8Ad2 are provided in a face confronting the inner groove wall 10b; and that a third staged auxiliary sealing lip 8Ad3 is provided along the groove bottom 10a of the seal groove 10. By those first to third auxiliary sealing lips 8Ad1 to 8Ad3, labyrinth seals Lsa, Lsb and Lsc are formed. A constricted area 8Aa is formed in a face opposite to those auxiliary sealing lips 8Ad1 to 8Ad3, that is, the outer face. The outer face of the primary sealing lip 8Ac is continued to a tip portion of the constricted area 8Aa and an inner face of the primary sealing lip 8Ac is continued to the tip portion of the third staged auxiliary sealing lip 8Ad3. A tip portion having its inner face intersecting the outer face is held in contact with the outer groove wall 10c of the seal groove 10 to thereby form the contact seal S1.

The above described example suggested for reference purpose differs considerably from the previously described embodiment in that the auxiliary sealing lips 8Ad1 to 8Ad3 (i.e., labyrinth seals Lsa to Lsc) exist at the respective positions; the capacity of the grease reservoir defined between the auxiliary sealing lips 8Ad1 to 8Ad3 and the groove wall of the seal groove 10 opposed thereto and between the primary sealing lip 8Ac and the groove wall of the seal groove 10 opposed thereto is small; and the amount of projection of the auxiliary sealing lip 8Ad1 in the axial direction is so small and the base of the auxiliary sealing lip 8Ad1 is continued to the inner face of the synthetic rubber 8A inclined inwardly.

In this example suggested for reference purpose, the torque value D measured when the interference of the primary sealing lip 8Ac is set to be about equal to that in the previously described embodiment, has been ascertained to be about equal to the torque value A exhibited by the article of the present disclosure as shown in Fig. 67. The sealability D makes no significant difference from the previously mentioned C as shown in Fig. 68 and, hence, it has been ascertained that it is inferior to A and B in respect of the sealability. This appears to have resulted from the fact that no effect of the use of the three staged auxiliary sealing lips 8Ad1 to 8Ad3 was found, the grease reservoir had a small capacity, and the amount of projection of the auxiliary sealing lip 8Ad1 in the axial direction was small and the outer diametric surface is inclined and was brought in close proximity to the inclined face 8A of the synthetic rubber 8A.

The following summarizes the various embodiments shown in and described with reference to Fig. 64 to Figs. 72A and 72B.

The ball bearing assembly, which forms a basic construction in each of the following modes, is of a structure including the cage of the present disclosure, a plurality of balls retained by this cage and interposed between the inner and outer rings, and a sealing member for closing the bearing space between the inner and outer rings, in which a seal groove is formed in the outer diametric surface of the inner ring in a direction circumferentially thereof; the sealing member has an outer peripheral edge fixed to the outer ring inner diametric surface opposed to the seal groove and also has an inner peripheral edge provided with a primary sealing lip and an auxiliary sealing lip, the primary sealing lip being held in contact with the seal groove to form a contact seal whereas the auxiliary sealing lip is brought to or proximate to the seal groove to form a labyrinth seal; a branched portion is provided in the sealing member at a position proximate to the height of an inner ring outer diametric surface, the primary sealing lip being formed by a portion of the branched portion protruding in an inner diametric direction; the primary sealing lip has a tip portion held in contact with an outer groove wall of the seal groove to form the contact seal whereas the auxiliary sealing lip is formed by another portion of the branched portion protruding in the axial direction; and a labyrinth seal is formed between the tip portion of the auxiliary sealing lip and the inner groove wall of the seal groove.

### Mode C1)

The ball bearing assembly of the above described basic construction is a double row angular contact ball bearing assembly of a structure, which is provided with the sealing member and the two snap cages each having a plurality of pockets, the pockets in one of the cages and the pockets in the other of the cages being so arranged as to oppose to each other.

According to this construction, since each of the snap cages is provided with recessed areas and the pockets in one of the cages and the pockets in the other of the cages being so arranged as to oppose to each other, the leakage of grease from the cage back face side is suppressed. Accordingly, deposition of the grease onto the inner ring outer diametric portion can be avoided and, also, prevention of the deposition of the grease in the seal groove in the inner ring can be expected.

### Mode C2)

In the basic construction described above, the sealing member may have the primary sealing lip and the auxiliary sealing lip, which are formed in an inverted L shape through the branched portion. A grease reservoir is surrounded by those lips and an inner side wall of the seal groove, which groove is opposed to the primary and auxiliary sealing lips, and is communicated with the inside of the bearing assembly via the labyrinth seal in one side and closed by the contact seal in another side. Since the grease reservoir functions to further relieve the internal pressure of the bearing assembly, the interference of the primary sealing lip can be reduced to achieve a low torque and, at the same time, a high sealing characteristic.

### Mode C3)

In the basic construction described above, the sealing member may be of such a design in which the radial of the maximum diametric portion of the auxiliary sealing lip is greater than the radial of the inner ring outer diametric, in which case a tip portion of this auxiliary sealing lip is formed with a tapered face inclined at an angle equal to or greater than 90° relative to the inner ring outer diametric surface. The provision of the tapered face is effective to shift the grease smoothly towards an outer diametric surface of the auxiliary sealing lip.

### Mode C4)

In the basic construction described above, the inner diametric surface of the auxiliary sealing lip may be inclined at a predetermined angle relative to the inner ring outer diametric surface so that a labyrinth seal can be formed between the inclined inner diametric surface of the auxiliary sealing lip and the inner side wall of the seal groove. In this way, the labyrinth seal can be easily formed by inclining the inner diametric surface of the auxiliary sealing lip and the grease leak pressure can be reduced thanks to the labyrinth seal so formed.

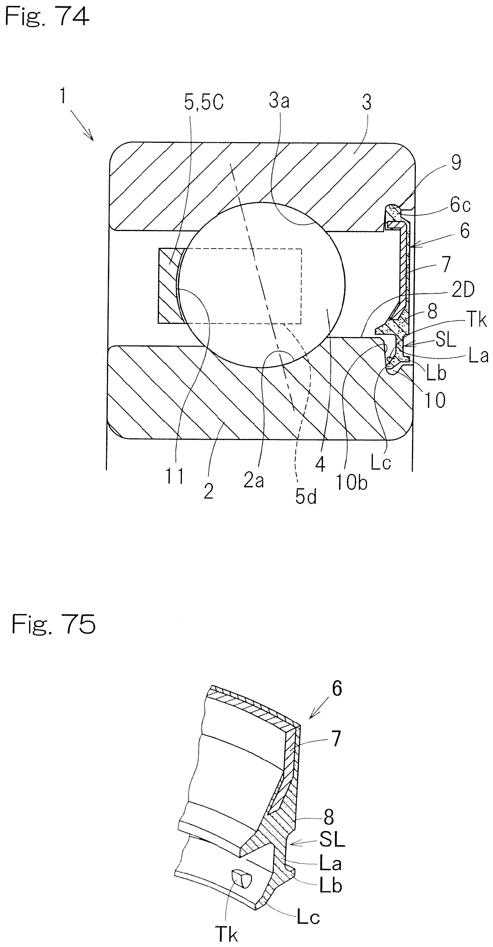

An eighteenth embodiment will be described with particular reference to Fig. 74 to Figs. 78A to 78C. The ball bearing assembly 1 according to this embodiment is a single row angular ball bearing assembly equipped with the cage of the present disclosure. As shown in Fig. 74, this single row angular contact ball bearing assembly is of a structure, in which a plurality of balls 4 are interposed between the respective raceway surfaces 2a and 3a of the inner and outer rings 2 and 3, a cage 5 (or a cage 5C as will be described later) is provided for retaining those balls 4, and one of opposite ends of the annular space delimited between the inner and outer rings 2 and 3, which is on the pocket open side, is sealed by the sealing member 6 shown in Figs. 75 to 77. The raceway surfaces 2a and 3a are so formed as to have respective predetermined contact angles as shown by the single dotted chain line in Fig. 74. The counterbore portion forming the inner ring outer diametric surface on the left side of Fig. 74, which has no seal groove 10, is so formed as to have a diameter smaller than that of the outer diametric portion 2D on the right side of Fig. 74. Accordingly, relative to the outer ring 3 and the balls 4, the inner ring 2 can be easily incorporated from the inner ring outer diametric surface on the left side. In addition, the distance between the inner diametric surface 5d of the cage 5, 5C on the pocket back face side and the inner ring outer diametric surface can be increased. The grease is filled in the bearing space.

In this angular ball bearing assembly, the use of the sealing member 6, as will be detailed later, and the cage 5 of the present disclosure makes it possible to achieve a low torque, a resistance to the grease leakage, dust proofing and space saving and, at the same time, a low cost.

The details of the sealing member 6 will now be described.

As shown in Fig. 74, on a right side portion of the inner ring outer diametric surface, an annular seal groove 10 is formed in a circumferential direction thereof. The outer ring inner diametric surface is formed with a sealing member anchoring groove 9 opposed to the seal groove 10. The sealing member 6 has an outer peripheral edge portion 6c engaged in this sealing member anchoring groove 9.

The sealing member 6 is in the form of an elastic body 8 made of a synthetic rubber and reinforced by a core metal 7 and is formed with a sealing lip SL at a portion of the elastic body 8 so as to extend radially inwardly. For the synthetic rubber used to form the elastic body 8, a hydrogen added nitryl rubber or ester resistant acrylic rubber can be employed. Since the hydrogen added nitryl rubber is excellent in heat resistance as compared with nitryl rubber generally used as a sealing member and it has no problem in respect of the chemical resistance thereof, not only can stabilized characteristics be maintained, but also it can be used at higher temperature. Since the ester resistant acrylic rubber is excellent in heat resistance as compared with the nitryl rubber as is the case with the hydrogen added nitryl rubber and the chemical resistance against chemicals such as, for example, an ester oil of the acrylic rubber and a compressor oil used in an air conditioner is increased, not only can stabilized characteristics be maintained, but also it can be used at higher temperature.

The sealing lip SL includes a lumber portion La at which the wall thickness of the elastic body 8 is small, a dust sealing lip Lb extending from one end portion of the lumber portion La in a direction axially outwardly, and a primary sealing lip Lc extending from that end portion of the lumber portion La in a direction inwardly therefrom and having its tip portion slidingly engageable with an inner side face 10b of the seal groove 10. As best shown in Fig. 75, the primary sealing lip Lc has a projection Tk formed in a face thereof opposed to the inner side face 10b of the seal groove 10, which projection TK protrudes therefrom towards the inner side face 10b. This projection Tk is provided at one or a plurality of locations along its tip portion, that is, an inner peripheral edge of the sealing member 6.

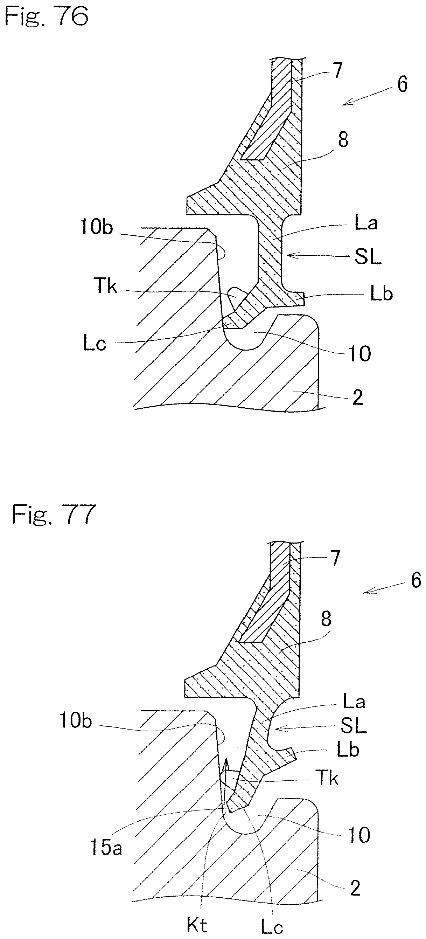

The sealing member 6 so structured as hereinabove described is such that, when the sealing member 6 is engaged in the sealing member anchoring groove 9 in the outer ring 3, the tip portion of the primary sealing lip Lc is held in contact with the inner side face 10b of the seal groove 10 as shown in Fig. 76. In this condition, when there is no difference in pressure between the inside and the outside of the bearing assembly, the projection Tk does not contact the inner side face 10b of the seal groove 10, and therefore, there is no possibility of the sealability being deteriorated. Due to the temperature change during the transportation of the angular contact ball bearing assembly, generation of a frictional heat caused by the rotation of the angular contact ball assembly and/or cooling the bearing assembly, the pressure difference is developed between the inside and the outside of the bearing assembly and, hence, the sealing lip SL is urged inwardly. In such cases, the projection Tk provided in the primary sealing lip Lc is brought into contact with the inner side face 10b of the seal groove 10 as best shown in Fig. 77. Accordingly, the tip portion of the primary sealing lip Lc in the vicinity of the projection Tk is elastically deformed outwardly to separate from the inner side face 10b of the seal groove 10.

In this condition, since an air passage Kt communicating the interior of the bearing assembly to the outside thereof is formed around the projection Tk and the difference in pressure between the inside and outside of the bearing assembly is removed, a suction phenomenon of the bearing assembly can therefore be avoided. Since the air passage Kt is formed only around the projection Tk, a portion of the tip portion of the primary sealing lip Lc, where no projection Tk exist, keeps contacting with the inner side face 10b of the seal groove 10 and, therefore, the sealability is secured. When the pressure difference between the inside and the outside of the bearing assembly is removed, the sealing lip SL immediately resume a normal condition, with reduction in sealability being minimized consequently.

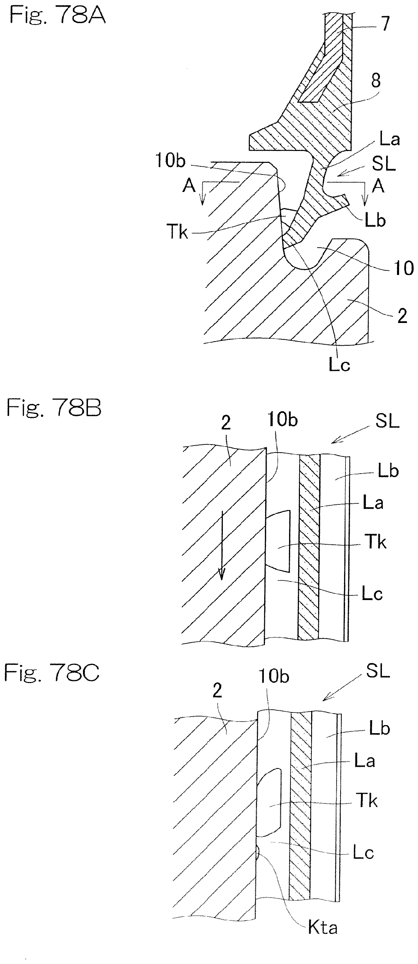

If the contact between the projection Tk and the inner side face 10b of the seal groove 10 is lost because of the large pressure difference between the inside and the outside of the bearing assembly or the pressure difference between the inside and the outside of the bearing assembly is very small, as shown in Fig. 78A the suction phenomenon, in which the projection Tk and the tip portion of the primary sealing lip Lc are held in contact with the inner side face 10b, occurs. In the suction phenomenon occurring in such case, the tip portion of the projection Tk contacting with the inner side face 10b of the seal groove 10 will contact the inner side face 10b under a contact pressure higher than the contact pressure between the inner side face 10b and the tip portion of the primary sealing lip Lc.

Because of the difference in contact pressure, the sliding resistance of the tip portion of the projection Tk becomes higher than that of the tip portion of the primary sealing lip Lc and, when under this sucked condition the bearing assembly is rotated, the projection Tk maintains the condition, in which it is in contact with the inner side face 10b of the seal groove 10 as shown in Fig. 78B, attempting to rotate together with this inner side face 10b. At this time, since the tip of the primary sealing lip Lc slides, the inner peripheral edge of the sealing lip SL, which is the tip portion of the primary sealing lip Lc, is elastically deformed so as to undulate in a wavy fashion as shown in Fig. 78C. During the elastic deformation of the tip portion of the primary sealing lip Lc, an air passage Kta is formed and the suction is released.

According to the angular contact ball bearing assembly according to the above described eighteenth embodiment, since the snap cage 5 is provided with the recessed areas 16, the amount of grease sticking to the balls 4 and scraped therefrom by the inner diametric surface of the cage 5 can be reduced. Accordingly, the grease deposition onto the outer diametric portion 2D of the inner ring 2 can be avoided. Therefore, deposition of the grease onto the seal groove 10 in the inner ring 2 can be avoided. There is no need to change the design and the shape of the seal groove 10 and, also, to secure a space for installation of a slinger or the like. Accordingly, the manufacturing cost can be reduced with the number of component parts reduced as compared with the conventional example.

Also, since in the sealing member 6, the previously described projection Tk is provided in the inner face of the sealing lip SL, once the suction phenomenon occurs, the sealing lip SL is urged in a direction axially inwardly of the bearing assembly as shown in Fig. 77, but simultaneously with the sealing lip SL being so urged, the projection TK in the inner face of the sealing lip SL is urged against the inner side face 10b of the seal groove 10. At this time, due to the presence of the projection Tk the sealing lip Lc in the vicinity of the position of contact of the projection Tk with the inner side face 10b of the seal groove 10 is partially elastically deformed relative to the other portion thereof. In other words, the primary sealing lip Lc of the sealing lip SL in the vicinity of the position of contact of the projection Tk is incapable of sliding along the inner side face 10b of the seal groove 10 and, due to the non-contact thereof, the air passage Kt communicating between the bearing inside and the bearing outside is formed.

Further, as shown in Fig. 78A, in the condition, in which the projection Tk and the tip portion of the primary sealing lip Lc are held in contact with the inner side face 10b of the seal groove 10, because of the difference in contact pressure between the projection Tk and the tip portion of the primary sealing lip Lc, the sliding resistance of the tip portion of the projection Tk becomes higher than the sliding resistance of the tip portion of the primary sealing lip Lc. When the bearing assembly is rotated under this condition, the tip portion of the primary lip Lc twists as is undulated in a wavy fashion with the air passage Kta consequently formed as shown in Fig. 78C.

For this reason, the suction phenomenon can be avoided with the balance in pressure between the bearing inside and outside instantly maintained uniformly. The air passage Kta necessary to maintain this pressure balance is immediately closed if the balance in pressure between the bearing inside and outside is uniform, that is, no pressure difference is developed, and the sealing lip SL assumes a normal condition as shown in Fig. 76. At this time, the projection Tk is in non-contact with the inner side face 10b of the seal groove 10. Accordingly, intrusion of foreign matters from the bearing outside is minimized and, since the air passage Kt therefor is narrow, there is no possibility that the grease within the bearing assembly leaks.

Since the counterbore portion forming the inner ring outer diametric surface on the left side of Fig. 74 is so formed as to have a diameter smaller than that of the outer diametric portion 2D on the right side of Fig. 74 and, accordingly, relative to the outer ring 3 and the balls 4, the inner ring 2 can be easily incorporated from the inner ring outer diametric surface on the left side. In addition, the distance between the inner diametric surface 5d of the cage 5, 5C on the pocket back face side and the inner ring outer diametric surface can be increased. In this case, due to the recessed areas 16 as a means for suppressing scraping of the grease in the cage, by the cumulative effect in which the amount of the grease adhering to the balls and scraped by the inner diametric surface 5d of the cage 5 is reduced, it becomes possible to avoid deposition of the grease onto the inner ring outer diametric surface on the left side. By the sealing member 6 on the right side, intrusion of foreign matters from the bearing outside is minimized and, since the air passage Kta (Fig. 78C) therefor is narrow, there is no possibility that the grease may leak.

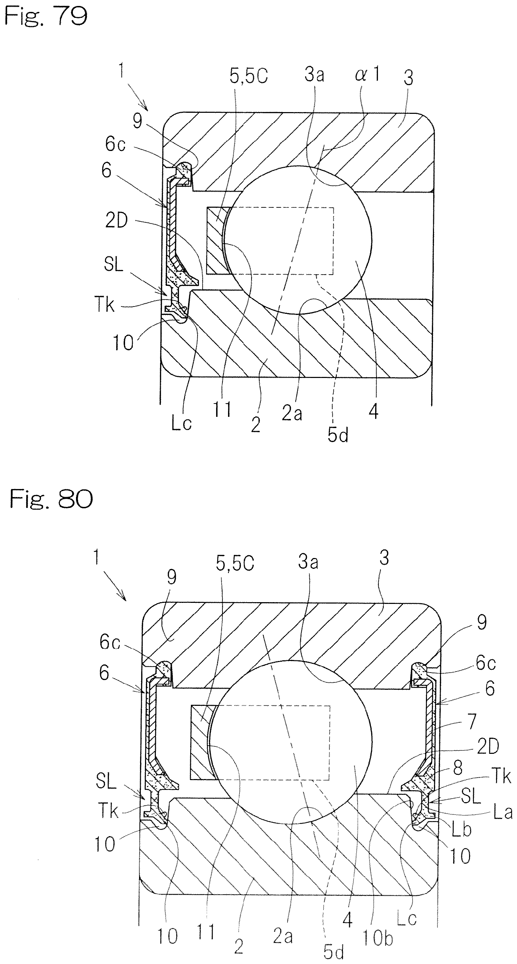

In the single row angular contact ball bearing assembly according to a nineteenth embodiment shown in Fig. 79, the seal groove 10 is formed on the pocket back face side, that is, the left side of the inner ring 2 and the sealing member 6 shown in Fig. 74A is provided only in the left end. In correspondence with the seal groove 10 provided on the left side, the sealing member anchoring groove 9 is formed in a left end of the outer ring inner diametric surface. Also, the counterbore portion forming the inner ring outer diametric surface on the right side of Fig. 79 is so formed to have a diameter smaller than that of the outer diametric portion 2D on the left side of Fig. 79. According to the construction shown in Fig. 79, with respect to the grease urged from the raceway surface 2a or the like towards the left side of Fig. 79, the amount of the grease adhering to the balls 4 and scraped by the inner diametric surface 5d of the cage 5 is reduced by the recessed areas 16. Accordingly, deposition of the grease onto the outer diametric portion 2D of the inner ring 2 can be avoided and the flow of the grease towards the seal groove 10 can be avoided. Even if the grease deposits somewhat on the outer diametric portion 2D, there is no possibility that the grease may leak because of the sealing member 6 on the left side. Intrusion of foreign matters from the bearing outside is minimized by the sealing member 6 on the left side.

As is the case with the single row angular contact ball bearing assembly according to a twentieth embodiment, the sealing members 6 and 6 shown in Fig. 74A may be provided on respective sides of the inner and outer rings. The grease urged from the raceway surface 2a or the like towards the right side of Fig. 80 is prevented by the sealing member 6 on the right side from leaking. With respect to the grease urged from the raceway surface 2a or the like towards the left side of Fig. 80, the amount of the grease depositing on the balls 4 and scraped by the inner diametric surface 5d is reduced by the grease scraping suppressing section of the cage, that is the recessed areas 16. Therefore, the flow of the grease towards the seal groove 10 on the left side of the inner ring 2 can be avoided.

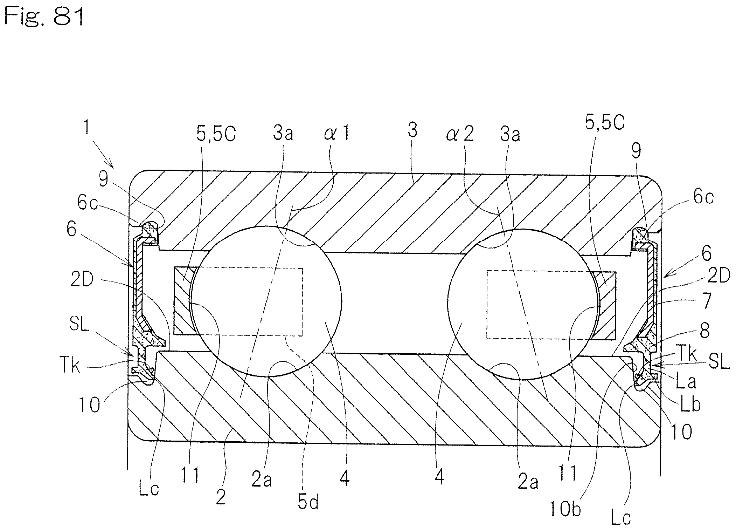

Fig. 81 illustrates a sealed double row angular contact ball bearing assembly according to a twenty first embodiment, which includes an inner ring 2, an outer ring 3, a plurality of balls 4, cages 5 and 5 and sealing members 6 and 6 shown in Fig. 74A. The contact angles α1 and α2 in this double row angular contact ball bearing assembly is so formed as to represent a shape similar to the shape of an inverted figure V as shown by the single dotted chain line in Fig. 81. The plural rows of the balls 4 are interposed between the raceway surfaces 2a and 3a and the cages 5 retains the plural balls 4 of each row. The pocket open side of each of the cages 5 is axially oriented and the pocket back face side is somewhat spaced from and opposed to the sealing member 6. In other words, the respective pocket front faces of the cages 5 and 5 are so arranged as to be opposed to each other. The grease is filled within the bearing space. In this double row angular contact ball bearing assembly, by the use of the sealing members 6 of the type described above and the cages 5 of the type described above, a low torque orientation, the resistance to grease leakage, dust proofing and space saving are achieved simultaneously with a low cost.

According to this double row angular contact ball bearing assembly, since the recessed areas 16 as the grease scraping suppressing section is provided in each of the snap cages 5 and the two cages 5 and 5 are so arranged with their pocket surfaces opposed to each other, the grease leakage from the cage rear surface is suppressed. Accordingly, the grease deposition onto the outer diametric portion 2D of the inner ring 2 can be avoided. Therefore, the grease can be prevented from depositing in the seal groove 10 of the inner ring 2 and there is no need to change the design and the shape of the seal groove 10 and also to secure a space for installation of a slinger. Accordingly, the manufacturing cost can be reduced with the number of component parts reduced to a value smaller than those in the previously described Patent Documents.

In addition, when the suction phenomenon occurs in the sealing member 6, as shown in Fig. 77, the sealing lip SL is urged in a direction axially inwardly of the bearing assembly, but simultaneously with the sealing lip SL being so urged, the projection Tk on the inner face of the sealing lip SL is forced against the inner side face 10b of the seal groove 10. At this time, the tip portion of the primary sealing Lc in the vicinity of the position of contact of the projection Tk and urged against the inner side face 10b is partially elastically deformed relative to the other portion because of the existence of the projection Tk. In other words, the primary sealing lip Lc of the sealing lip SL in the vicinity of the position of contact of the projection Tk is unable to contact the inner side face 10b and, due to this non-contact, the air passage Kt communicating the bearing inside and the bearing outside is formed.

As shown in Fig. 78A, in the condition, in which the projection Tk and the tip portion of the primary sealing lip Lc are held in contact with the inner side face 10b of the seal groove 10, because of the difference in contact pressure between the projection Tk and the tip portion of the primary sealing lip Lc, the sliding resistance of the tip portion of the projection Tk becomes higher than the sliding resistance of the tip portion of the primary sealing lip Lc. When the bearing assembly is rotated under this condition, the tip portion of the primary lip Lc twists as is undulated in a wavy fashion with the air passage Kta consequently formed as shown in Fig. 78C.

For this reason, the suction phenomenon can be avoided with the balance in pressure between the bearing inside and outside instantly maintained uniformly. The air passage Kta necessary to maintain this pressure balance is immediately closed if the balance in pressure between the bearing inside and outside is uniform, that is, no pressure difference is developed, and the sealing lip SL assumes a normal condition as shown in Fig. 76. At this time, the projection Tk is in non-contact with the inner side face 10b of the seal groove 10. Accordingly, intrusion of foreign matters from the bearing outside is minimized and, since the air passage Kt therefor is narrow, there is no possibility that the grease within the bearing assembly leaks.

In the double row angular contact ball bearing assembly, because of the unique shape of each of the cages, grease deposition on the inner ring outer diametric portion 2D is suppressed and the grease leakage from the cage back face side, that is, the counter-pocket side can be suppressed. Also, by the use of the sealing members 6 of the type described hereinbefore, not only can the leakage of the grease within the bearing assembly be avoided, but also intrusion of foreign matters from the bearing outside can be minimized.

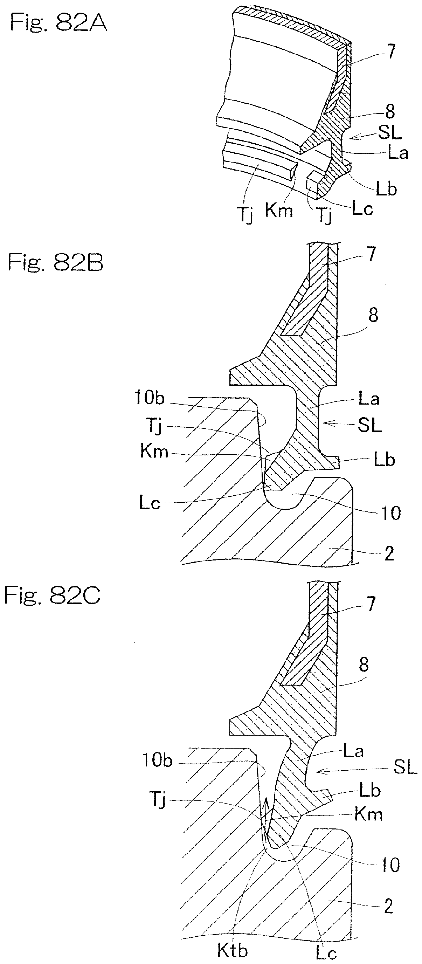

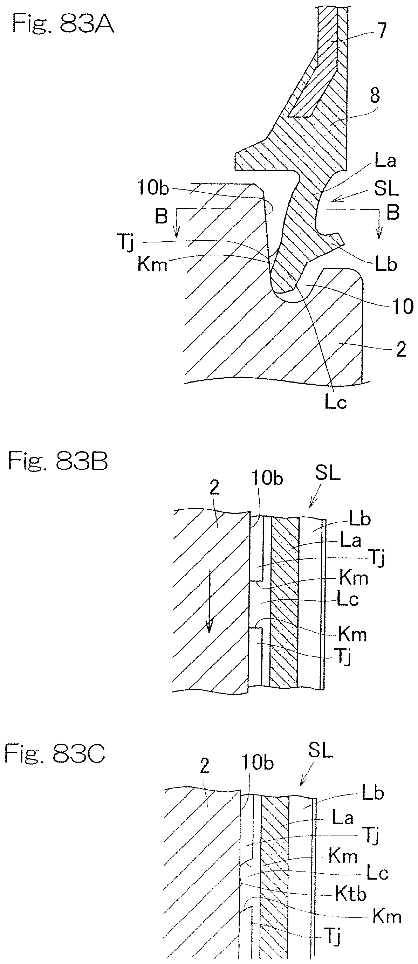

A twenty second embodiment will now be described with particular reference to Figs. 82A to 82C and Figs. 83A to 83C.

The embodiment in this case differs from the previously described eighteenth embodiment in that as shown in Fig. 82A, a projection Tj is formed in an inner face of the primary sealing lip Lc so as to protrude along the tip slidable portion thereof over the entire circumference and a cutout groove Km is provided in a direction traversing this projection Tj. Other structural feature thereof are similar to those in the eighteenth embodiment. Since as shown in Fig. 82B, the projection Tj does not contact the inner side face 10b of the seal groove 10 during a condition in which no pressure difference exist between the bearing inside and the bearing outside, there is no possibility of the sealing characteristic being deteriorated. The cutout groove Km may not be always of a type that is formed by cutting out a portion of the projection Tj, but may include the type that is formed by segmentalizing the projection Tj so as to reach the inner face of the primary lip Lc.

Due to the temperature change during the transportation of the angular contact ball bearing assembly, generation of a frictional heat caused by the rotation of the angular contact ball assembly and/or cooling the bearing assembly, the pressure difference is developed between the inside and the outside of the bearing assembly and, hence, when the sealing lip SL is urged inwardly, the projection Tj provided in the primary sealing lip Lc is brought into contact with the inner side face 10b of the seal groove as best shown in Fig. 82C. Accordingly, the tip portion of the primary sealing lip Lc in the vicinity of the projection Tj is elastically deformed outwardly to separate from the inner side face 10b of the seal groove 10.

In this condition, since an air passage Ktb communicating the bearing inside and the bearing outside is formed by the projection Tj, the difference in pressure between the bearing inside and the bearing outside is removed and a suction phenomenon of the bearing assembly can therefore be avoided. In addition, since the projection Tj protruding along the tip portion of the primary sealing lip Lc over the entire circumference is held in contact with the inner side face 10b of the seal groove 10, the sealing characteristic can be secured. If the projection Tj is collapsed as a result of its contact with the inner side face 10b of the seal groove 10 because of the large pressure difference between the bearing inside and the bearing outside and/or such pressure difference between the bearing inside and the bearing outside is very small, the suction phenomenon, in which the projection Tj and the tip portion of the primary sealing lip Lc are held in contact with the inner side face 10b of the seal groove 10, occurs as shown in Fig. 83A. Under the condition in which the suction phenomenon has occurred, the tip portion of the projection Tj contacting the inner side face 10b of the seal groove 10 will contact the inner side face 10b under a contact pressure higher than the contact pressure between the inner side face 10b and the tip portion of the primary sealing lip Lc.

Because of the difference in contact pressure, the sliding resistance of the tip portion of the projection Tj becomes higher than that of the tip portion of the primary sealing lip Lc and, when under this sucked condition the bearing assembly is rotated, the projection Tj maintains the condition, in which it is in contact with the inner side face 10b of the seal groove 10 as shown in Fig. 83B, attempting to rotate together with this inner side face 10b. At this time, since the tip of the primary sealing lip Lc slides, the inner peripheral edge of the sealing lip SL, which is the tip portion of the primary sealing lip Lc, is elastically deformed so as to undulate in a wavy fashion as shown in Fig. 83C. During the elastic deformation of the tip portion of the primary sealing lip Lc, an air passage Ktb is formed and the suction is released. In addition, in the rolling bearing assembly according to this embodiment, when the cage 5, 5C is adopted, the grease will hardly adhere to the seal groove 10 of the inner ring 2 and the grease leakage can be avoided. Accordingly, There is no need to change the design and the shape of the seal groove 10 and, also, to secure a space for installation of a slinger or the like. Accordingly, the manufacturing cost can be reduced with the number of component parts reduced as compared with those in the previously described Patent Documents.

The following summarizes the various embodiments which have been shown in and described with reference to Fig. 74 to Figs. 83A to 83C.

The ball bearing assembly, which forms a basic construction in each of the following modes, is of a structure including the cage of the present disclosure, a plurality of balls retained by this cage and interposed between the inner and outer rings, and sealing members provided in the outer ring or the inner ring for sealing the bearing space, in which one of the sealing members has one of peripheral edge portions, which is slidingly engaged in a seal groove formed in one end of one of raceways, and the other of the peripheral edge portions fixed to the other of the raceways, and
in which a peripheral edge of the sealing member slidingly engaged with the seal groove is rendered to be a sealing lip and, at the same time, this sealing lip has an inner face provided with a projection, the projection being displaceable between a first condition, in which when as a result of development of the pressure difference occurring in the bearing inside and the bearing outside that are divided by the sealing member, the sealing lip is urged inwardly, contacts an inner side face of the seal groove and, as a result of this contact of the projection, the sealing lip in the vicinity of the contact is partially elastically deformed to form an air passage that communicate between the bearing inside and the bearing outside, and a second condition, in which in the absence of the pressure difference referred to above, the projection is held in a non-contact with the inner side face of the seal groove.

### Mode D1

The ball bearing assembly according to the above described basic construction is a double angular contact ball bearing assembly, which includes an outer ring having an inner periphery formed with double rows of raceway surface, an inner ring having an outer periphery formed with double rows of raceway surface that are opposed to the above mentioned raceway surfaces, double rows of balls interposed between the raceway surfaces in the inner ring and the raceway surfaces in the outer ring, a cage provided in the outer ring or the inner ring and employed for each of the rows of the balls for retaining the balls of the respective row, and opposite sealing members for closing an bearing space delimited between the inner ring and outer ring, in which there are provided the sealing members and two snap cages having respective pocket surfaces arranged so as to oppose to each other.

According to this construction, in the sealing members, if the suction phenomenon occurs, the sealing lip is urged inwardly, but simultaneously with the sealing lip being so urged, the projection in the inner face of the sealing lip is brought into contact with the inner side face of the seal groove. At this time, due to the presence of the projection the sealing lip in the vicinity of the position with the seal groove inner side face is partially elastically deformed relative to the other portion thereof. The primary sealing lip in the vicinity of the position of contact of the projection is incapable of contacting the inner side face of the seal groove and, due to the non-contact thereof, the air passage communicating between the bearing inside and the bearing outside is formed.

In the double row angular contact ball bearing assembly, because of the cage of the shape discussed above, deposition of the grease on the inner ring outer diametric portion is suppressed and the grease leakage from the cage back face side, that is, the counter-pocket side can be suppressed. Also, the use of the sealing members of the kind discussed above, not only can the grease leakage from inside of the bearing assembly be avoided, but also intrusion of foreign matters from the bearing outside is minimized to achieve a low torque.

### Mode D2)

In the above described basic construction, the projection may be formed a predetermined distance on the inner face of the sealing lip along the slidable tip portion thereof. When the suction phenomenon occurs, the projection referred to above is urged against the inner side face of the seal groove and, at the same time, the sealing lip in the vicinity of the projection is elastically deformed. For this reason, the slidable tip portion of the sealing lip and the inner side face of the seal groove separate from each other and the air passage for communicating between the bearing inside and the bearing outside is formed around the projection.

### Mode D3)

In the above described construction, the projection referred to above may be formed in the inner face of the sealing lip so as to protrude along the slidable tip portion thereof over the entire circumference and a cutout groove may be provided in a direction traversing the projection. In such case, when the suction phenomenon occurs, the projection is urged against the inner side face of the seal groove and, at the same time, the seal lip in the vicinity of this projection is elastically deformed. For this reason, the slidable tip portion of the sealing lip and the inner side face of the seal groove separate from each other and as a result, the air passage for communicating between the bearing inside and the bearing outside is formed in this cutout groove in the projection.

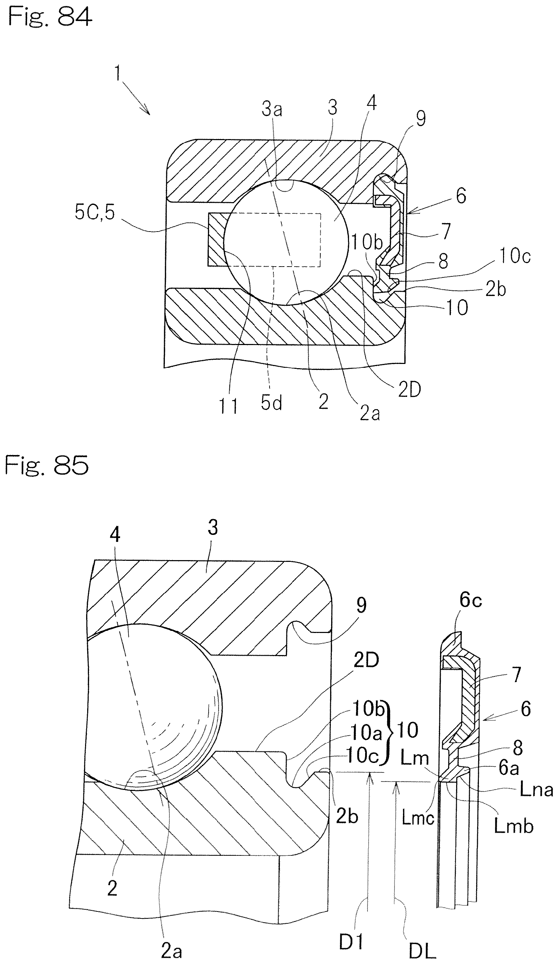

A twenty third embodiment will be described in detail with reference to Figs. 84 to 87. The ball bearing assembly 1 according to this embodiment is a single row angular contact ball bearing assembly equipped with the cage of the present disclosure. As shown in Fig. 84, this single row angular contact ball bearing includes a plurality of balls 4 interposed between raceway surfaces 2a and 3a defined respectively in inner and outer rings 2 and 3, a cage 5 (or a cage 5C as will be described later) for retaining the row of the balls 4, and a sealing member 6 for sealing one of opposite ends of an annular space delimited between the inner and outer rings 2 and 3, which is on the pocket open side, the sealing member 6 being of a structure shown in Figs. 85 to 87 and as will be described subsequently. The raceway surfaces 2a and 3a are so formed as to form a predetermined contact angle shown by the single dotted chain line in Fig. 84. The counterbore portion forming the inner ring outer diametric surface on the left side of Fig. 84, which has no seal groove 10, is so formed as to have a diameter smaller than that of the outer diametric portion 2D on the right side of Fig. 84. Accordingly, relative to the outer ring 3 and the balls 4, the inner ring 2 can be easily incorporated from the inner ring outer diametric surface on the left side. In addition, the distance between the inner diametric surface 5d of the cage 5, 5C on the pocket back face side and the inner ring outer diametric surface can be increased. The grease is filled in the bearing space.

In this angular contact ball bearing assembly, the use of the sealing member 6, as will be detailed later, and the cage 5 of the present disclosure makes it possible to achieve a low torque, a resistance to the grease leakage, dust proofing and space saving and, at the same time, a low cost. As shown in Figs. 84 and 85, a circumferentially extending seal groove 10 is formed in the inner ring 2 on the right side of the raceway surface 2a and an anchoring groove 9 is formed in the inner peripheral surface of the outer ring 3 in opposition to the seal groove 10. The sealing member 6 has an outer peripheral edge portion 6c press-fitted into this anchoring groove 9. The seal groove 10 in the inner ring 2 is delimited between the bottom surface 10a, an inner side wall 10b on the raceway side of the inner ring 2 and an outer side wall 10c on a shoulder portion 2b side. The outer side wall 10c is inclined axially outwardly and is formed in continuity to an outer peripheral surface of the shoulder portion 2b. The inner side wall 10b is referred as a "raceway side groove wall 10b" whereas the outer side wall 10c is referred to as a "shoulder side groove wall 10c".

The details of the sealing member 6 will now be described.

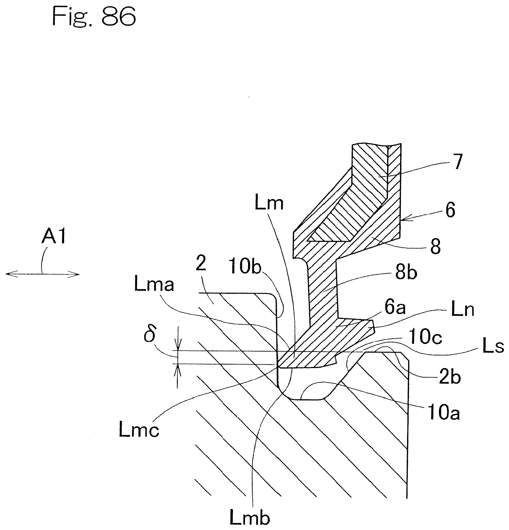

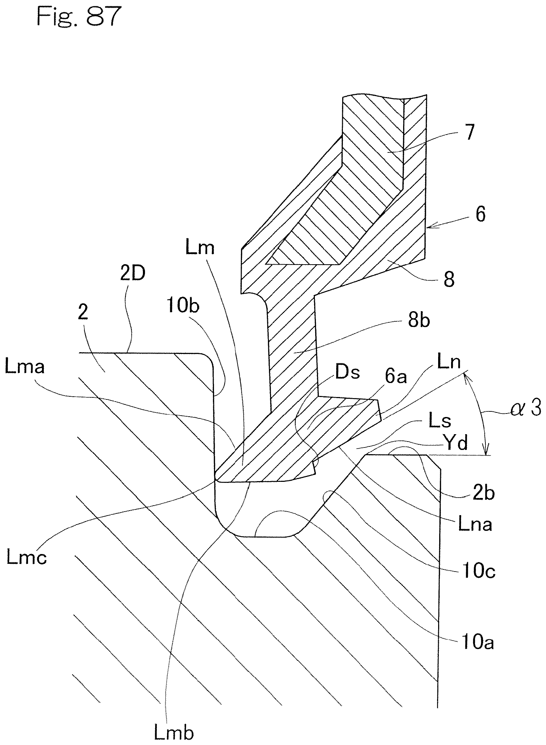

As shown in Figs. 86 and 87, the sealing member 6 is in the form of a contact sealing member including a core metal 7 and an elastic member 8, the elastic member 8 having an axially inwardly oriented sealing lip 6a provided on an inner peripheral side thereof. The sealing member 6 is of a structure, in which the elastic member 8 made of a synthetic rubber is reinforced by the core metal 7. For the synthetic rubber as a material for the elastic member 8, a hydrogen added nitryl rubber or ester resistant acrylic rubber can be employed. Since the hydrogen added nitryl rubber is excellent in heat resistance as compared with nitryl rubber generally used as a sealing member and it has no problem in respect of the chemical resistance thereof, not only can stabilized characteristics be maintained, but also it can be used at higher temperature. Since the ester resistant acrylic rubber is excellent in heat resistance as compared with the nitryl rubber as is the case with the hydrogen added nitryl rubber and the chemical resistance against chemicals such as, for example, an ester oil of the acrylic rubber and a compressor oil used in an air conditioner is increased, not only can stabilized characteristics be maintained, but also it can be used at higher temperature.

The sealing member 6 is of a structure, in which a portion of the elastic member 8 in an inner peripheral portion thereof is formed with a thin constricted area 8b having a small wall thickness. The constricted area 8b is formed so as to extend in constricted form from a primary sealing lip Lm or a labyrinth lip Ln or the both including the boundary therebetween, as will be descried later, towards an outer diametric side. A tip portion on the inner peripheral side of the constricted area 8b is provided with a sealing lip 6a. The sealing lip 6a includes the primary sealing lip Lm contacting the raceway side groove wall 10b of the seal groove 10 and the labyrinth lip Ln protruding above the shoulder portion 2b.

The primary sealing lip Lm has an inclined wall face Lma spreading outwardly while opposed to the raceway side groove wall 10b of the seal groove 10, an inner peripheral face Lmb positioned radially inwardly of the inclined wall face Lma and opposed to the bottom surface 10a of the seal groove 10 and a tip portion Lmc continuously straddling between the inclined wall face Lma and the inner peripheral face Lmb. As shown in Figs. 85 to 87, when the outer peripheral edge portion 6c of the sealing member 6 is fixedly press-fitted into the anchoring groove 9 in the outer ring 3, the tip portion Lmc of the primary sealing lip Lm slidably contacts the raceway side groove wall 10b of the seal groove 10. Since the primary sealing lip Lm is provided at the tip portion of the constricted area 8b so formed thin as to have a small wall thickness and the constricted area 8b elastically deforms in an axial direction shown by the arrow A1 in Fig. 86, the follow-up characteristic relative to the raceway side groove wall 10b of the seal groove 10, along which it slides, can be maintained. Accordingly, the grease inside the bearing assembly is prevented from leaking into the seal groove 10 and, also, intrusion of foreign matters and/or muddy water from the outside into the bearing inside cal be avoided.

The labyrinth lip Ln confronts a region ranging from the shoulder portion 2b to the shoulder portion side groove wall 10c of the seal groove 10, forming a labyrinth seal Ls. As shown in Fig. 87, an inner peripheral portion of the labyrinth lip Ln is provided with an inclined face Lna having its diameter decreasing inwardly. The inclined face Lna is so designed as to have an angle of inclination α3 within the range of 10 to 40° relative to an outer peripheral surface of the shoulder portion 2b of the inner ring 2. If the angle of inclination α3 is so set, muddy water sticking to the inclined face Lna move axially outwardly along the inclined face Lna by the effect of the centrifugal force resulting from the rotation of the sealing member 6 and is then discharged to the bearing outside. If the angle of inclination α3 is smaller than the lower limit of 10°, the centrifugal force resulting from the rotation of the sealing member 6 does not sufficiently act on the muddy water sticking to the labyrinth lip Ln and, therefore, the muddy water will be hardly discharged. On the other hand, if the angle of inclination α3 is greater than 40°, the gap between the outer peripheral surface of the shoulder portion 2b and the inclined face Lna of the labyrinth lip Ln expands, resulting in reduction in sealability exhibited by the labyrinth seal Ls. For this reason, the angle of inclination α3 is set to be within the range of 10 to 40°.

The labyrinth lip Ln is has its tip portion provided adjacent the shoulder portion side wall 10c of the seal groove 10. Accordingly, the distance of travel of the muddy water, sticking to the labyrinth lip Ln, along the inclined face Lna by the effect of the centrifugal force resulting from the rotation of the sealing member 6 decreases and, hence, the muddy water pooled within the seal groove 10 is apt to be discharged. A step Ds is provided between the inner peripheral surface Lmb of the primary sealing lip Lm and the inclined face Lna of the labyrinth lip Ln. This step Ds is so provided as to protrude towards the shoulder portion side groove wall 10c of the seal groove 10. Accordingly, the inner peripheral surface Lmb of the primary sealing lip Lm is so formed as to be continued to the inclined face Lna of the labyrinth lip Ln through the step Ds and, therefore, the muddy water pooled within the seal groove 10 is apt to be discharged to the bearing outside along the inclined face Lna of the labyrinth lip Ln by the effect of the centrifugal force resulting from the rotation of the sealing member 6.

Also, if the step Ds is so provided as to protrude, a constricted portion is formed between an outer peripheral edge of the inner peripheral surface Lmb of the primary sealing lip Lm and the shoulder portion side groove wall 10c of the seal groove 10. By this constricted portion, the sealability by the labyrinth seal Ls can be secured. Since another constricted portion is formed also between a hill portion Yd at the boundary between the seal groove 10 and the shoulder portion 2b and the inclined face Lna of the labyrinth lip Ln, the sealability by the labyrinth seal Ls cal be further secured.

As shown in Fig. 85, the inner diametric dimension DL of the tip portion of the sealing lip 6a before the sealing member 6 is assembled into the bearing assembly is smaller than the diameter D1 of the shoulder portion 2b of the inner ring 2 and the difference DL - L1 between the inner diametric dimension DL and the diameter D1 is regulated to a value equal to or greater than -0.2 mm so that the seal member 6 can be easily assembled into the bearing assembly. When the sealing member 6 is assembled into the bearing assembly having been engaged in the anchoring groove 9 of the outer ring 3, as shown in Fig. 86, the tip portion of the sealing lip 6a is brought into contact with the raceway side groove wall 10b of the seal groove 10 at a contact position lower or radially inwardly by dimention *δ* than the upper end position of the shoulder portion side groove wall 10c, opposed thereto. Accordingly, even when this bearing assembly is used under the environment in which water and/or mud are often scattered, the tip portion Lmc is stably held in contct with the raceway side groove wall 10b without either of the water and mud directly contacting the tip portion Lmc of the sealing lip 6a.

An example of enforcement of the twenty third embodiment is as follows. A foreign matter intrusion test was conducted, in which the angular contact ball bearing assembly equipped with the sealing member 6 was fitted to a rotary testing machine under the environment, in which foreign matter such as a mixture of water and mud scattered continually, and the amount of intrusion of the foreign matter into the bearing space when the contact height position δ3 of the tip portion Lmc into the raceway side groove wall 10b of the seal groove 10 was varied was then investigated. The contact height position δ3 was varied to -0.1 mm and -0.05 (Embodiments), which were lower than the upper end position of the shoulder portion side groove wall 10c in the radial direction, and to 0.0mm, 0.05 mm and 0.1 mm (Comparative Examples), which were equal to or higher than the upper end position of the shoulder portion side wall 10c. The amount of intrusion of the foreign matter was determined by measuring the amount of the mass of the bearing assembly before and after the test. Test conditions were as follows:
Bearing rotating speed: 2,000 rpm
Test hours: 3 hours

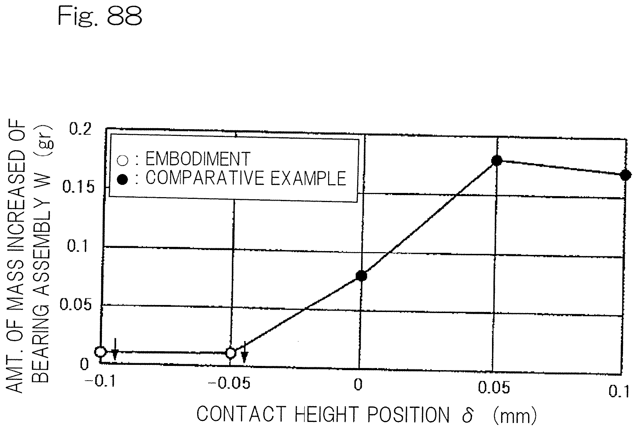

Results of the foreign matter intrusion test are shown in Fig. 88. White circles pertain to the examples of enforcement of the embodiment whereas blackened circles pertain to the comparative examples. From the results of the test shown in Fig. 88, it has been made clear that the comparative examples, in which the contact height position δ3 of the tip portion Lmc was chosen to be equal or higher than the upper end position of the shoulder portion side groove wall 10c, exhibited considerably increased amounts W of the mass of the bearing assembly, whereas no increase of the amount of the mass W of the bearing assembly was remarkably found in the examples of enforcement of the embodiment, in which the contact height position δ3 of the tip portion Lmc was chosen to be lower than the upper end position of the shoulder portion side groove wall 10c and, hence, little foreign matter intruded. Accordingly, by selecting the contact height position δ3 of the tip portion Lmc of the sealing lip 6a to be lower than the upper end position of the shoulder portion side groove wall 10c of the inner ring 2, it has been ascertained that the tip portion Lmc was caused to contact stably the raceway side groove wall 10b and the sufficient sealability could be secured while the intrusion of the foreign matter was avoided.

According to the angular contact ball bearing assembly 1 according to the twenty third embodiment as hereinabove described, since the snap cage 5 is provided with the recessed areas 16, the amount of grease sticking to the balls and scraped therefrom by the inner diametric surface 5d of the cage 5 can be reduced. Accordingly, the grease deposition onto the outer diametric portion 2D of the inner ring 2 can be avoided. Therefore, deposition of the grease onto the seal groove 10 in the inner ring 2 can be avoided. There is no need to change the design and the shape of the seal groove 10 and, also, to secure a space for installation of a slinger or the like. Accordingly, the manufacturing cost can be reduced with the number of component parts reduced as compared with those in the previously described Patent Documents. In addition, in the sealing member 6, the tip portion Lmc of the sealing lip 6a can be brought into engagement with the raceway side groove wall 10b at a location lower than the upper end position of the shoulder portion side groove wall 10c, which is opposed to the raceway side groove wall 10b of the seal groove 10. Accordingly, muddy water being scattered will not directly contact the tip portion Lmc of the contact primary sealing lip Lm of sealing lip 6a. Therefore, the tip portion of the sealing lip 6a can be stably engaged with the raceway side groove wall 10b to allow the sealing member 6 to exhibit a sufficient sealing characteristic.

The counterbore portion forming the inner ring outer diametric surface on the left side of Fig. 84, which has no seal groove 10, is so formed as to have a diameter smaller than that of the outer diametric portion 2D on the right side of Fig. 84 and, therefore, relative to the outer ring 3 and the balls 4, the inner ring 2 can be easily incorporated from the inner ring outer diametric surface on the left side. In addition, the distance between the inner diametric surface 5d of the cage 5, 5C on the pocket back face side and the inner ring outer diametric surface can be increased. In this case, due to the recessed areas 16 as a means for suppressing scraping of the grease in the cage 5, by the cumulative effect in which the amount of the grease adhering to the balls and scraped by the inner diametric surface 5d of the cage 5 is reduced, it becomes possible to avoid deposition of the grease onto the inner ring outer diametric surface on the left side. By the sealing member 6 on the right side, the prevention of the grease leakage in the bearing assembly and increase of the resistance to the muddy water can be accomplished.

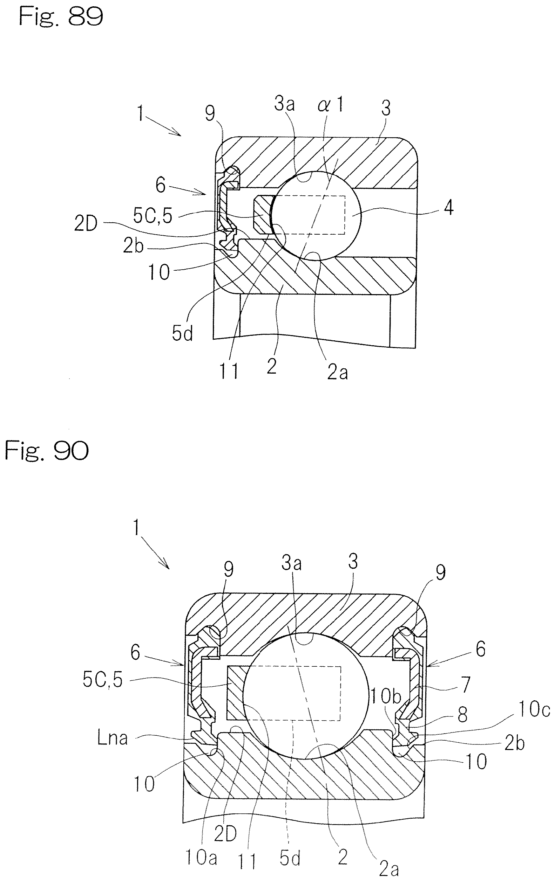

In the single row angular contact ball bearing assembly according to a twenty fourth embodiment shown in Fig. 89, the seal groove 10 is formed on the pocket back face side, that is, on the left side of the inner ring 2 and the sealing member 6 shown in Fig. 84 is provided only at the left end. In correspondence with the seal groove 10 provided on the left side, the anchoring groove 9 is formed in a left end of the outer ring inner diametric surface. Also, the counterbore portion forming the inner ring outer diametric surface on the right side of Fig. 89 is so formed to have a diameter smaller than that of the outer diametric portion 2D on the left side of Fig. 89. According to the construction shown in Fig. 89, with respect to the grease urged from the raceway surface 2a or the like towards the left side of Fig. 89, the amount of the grease adhering to the balls 4 and scraped by the inner diametric surface 5d of the cage 5 is reduced by the recessed areas 16. Accordingly, deposition of the grease onto the outer diametric portion 2D of the inner ring 2 can be avoided and the flow of the grease towards the seal groove 10 can be avoided. Even if the grease deposits somewhat on the outer diametric portion 2D, there is no possibility that the grease may leak because of the sealing member 6 on the left side. Intrusion of foreign matters from the bearing outside is minimized by the sealing member 6 on the left side.

As is the case with the single row angular contact ball bearing assembly according to a twenty fifth embodiment shown in Fig. 90, the sealing members 6 and 6 shown in Fig. 84 may be provided on respective sides of the inner and outer rings. The grease urged from the raceway surface 2a or the like towards the right side of Fig. 90 is prevented by the sealing member 6 on the right side from leaking. With respect to the grease urged from the raceway surface 2a or the like towards the left side of Fig. 90, the amount of the grease depositing on the balls 4 and scraped by the inner diametric surface 5d is reduced by the grease scraping suppressing section of the cage, that is the recessed areas 16. Therefore, the flow of the grease towards the seal groove 10 on the left side of the inner ring 2 can be avoided.

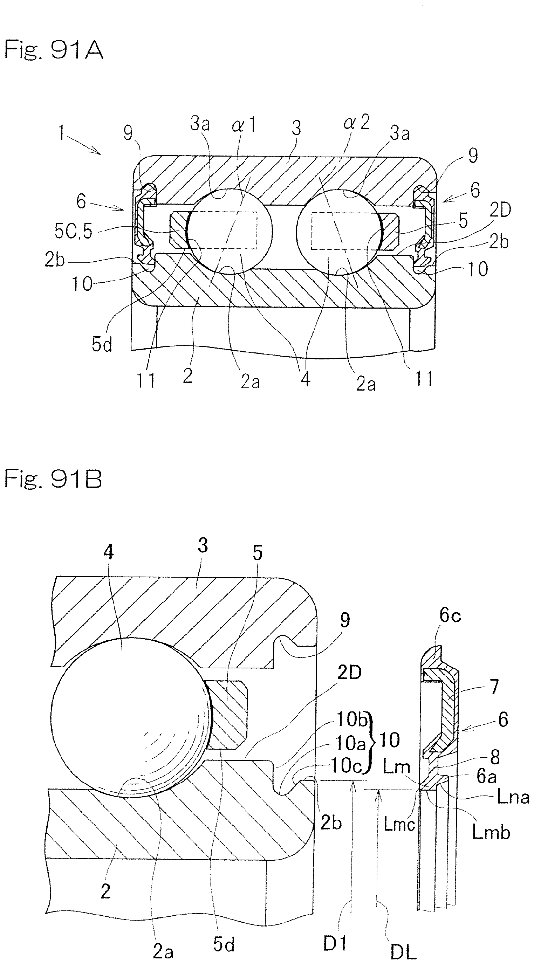

Fig. 91A illustrates the sealed double row angular contact ball bearing assembly according to a twenty sixth embodiment, which has an inner ring 2, an outer ring 3, a plurality of balls 4, cages 5 and 5 and sealing members 6 and 6 shown in Fig. 84. The respective contact angles α1 and α2 of the illustrated double row angular contact bearing assemblies are held in a relation generally depicted by a figure of inverted V as shown by the single dotted chain line in Fig. 91A. The rows of the balls 4 are interposed between the raceway surfaces 2a and 3a and each of the cages 5 retains the corresponding row of the balls 4. The pocket open side of the cage 5 for each row is oriented axially inwardly and the pocket back face side is somewhat spaced from and opposed to the sealing member 6. In other words, the respective pocket faces of the cages 5 and 5 are so arranged as to be opposed to each other. The grease is filled in the bearing space.

In this double row angular contact ball bearing assembly, the use of the sealing members 6 and the cages 5 make it possible to achieve the low torque, resistance to grease leakage, dust proofing and space saving simultaneously and at a low cost. As shown in Figs. 91A and 91B, circumferentially extending seal grooves 10 and 10 are formed on both sides of the double rows of the raceway surfaces 2a and 2a and anchoring grooves 9 and 9 are formed on the inner peripheral surface of the outer ring 3 in opposition to the respective seal grooves 10 and 10. Each of the sealing members 6 has an outer peripheral edge portion 6c press-fitted into the corresponding anchoring groove 9. The seal groove 10 in the inner ring 2 is delimited between the bottom surface 10a, an inner side wall 10b on the raceway side of the inner ring 2 and an outer side wall 10c on a shoulder portion 2b side. The outer side wall 10c is inclined axially outwardly and is formed in continuity to an outer peripheral surface of the shoulder portion 2b.

According to the double row angular contact ball bearing assembly according to the twenty sixth embodiment, since the recessed areas 16 as the grease scraping suppressing section is provided in each of the snap cages 5 and the two cages 5 and 5 are so arranged with their pocket surfaces opposed to each other, the grease leakage from the cage rear surface is suppressed. Accordingly, the grease deposition onto the outer diametric portion 2D of the inner ring 2 can be avoided. Therefore, the grease can be prevented from depositing in the seal groove 10 of the inner ring 2 and there is no need to change the design and the shape of the seal groove 10 and also to secure a space for installation of a slinger. Accordingly, the manufacturing cost can be reduced with the number of component parts reduced to a value smaller than those in the previously described Patent Documents.

In addition, in the sealing member 6, the tip portion Lmc of the sealing lip 6a can be brought into engagement with the raceway side groove wall 10b at a location lower than the upper end position of the shoulder portion side groove wall 10c, which is opposed to the raceway side groove wall 10b of the seal groove. Accordingly, muddy water being scattered will not directly contact the tip portion Lmc of the contact sealing lip 6a. Therefore, the tip portion of the sealing lip 6a can be stably engaged with the raceway side groove wall 10b to allow the sealing member 6 to exhibit a sufficient sealing characteristic.
In this double row angular contact ball bearing assembly, thanks to the unique shape of the previously described cages, deposition of the grease on the inner ring outer diametric portion 2D is avoided and the grease leakage from the cage back face side, that is, the counter-pocket side can be suppressed. Also, the use of the sealing members 6 of the type referred to above, the leakage of the grease within the bearing assembly can be avoided and the resistance to muddy water can be obtained. Therefore, since there is no increase the tightening force of the lip or the like, the low torque can be achieved.

The following summarizes modes of the various embodiments of the present disclosure which have been shown in and described with reference to Figs. 84 to Figs. 91A and 91B.

The ball bearing assembly, which forms a basic construction in each of the following modes, is of a structure including the cage of the present disclosure, a plurality of balls retained by this cage and interposed between the inner and outer rings, and a sealing member provided in the outer ring for closing the bearing space between the inner and outer rings, in which a shoulder portion is formed between a seal groove, formed at a location laterally of a raceway in the inner ring; the sealing member is mounted on an inner peripheral surface of the outer ring opposed to the seal groove and has an inner periphery side tip portion provided with a primary sealing lip and a labyrinth lip protruding above the shoulder portion; and in which the primary sealing lip is provided with an inner peripheral face opposed to the seal groove; and the labyrinth lip is provided with an inclined face having its diameter gradually increasing towards a tip portion of the labyrinth lip.

### Mode E1)

The ball bearing assembly of the basic construction described above is a double row angular contact ball bearing assembly of a structure, in which respective pocket surfaces of the two cages are so arranged as to oppose to each other.

According to the above construction, since the primary sealing lip and the labyrinth lip are provided in the inner peripheral portion of the sealing member, the primary sealing lip is provided with an inner peripheral surface opposed to the seal groove, and the labyrinth lip has an inner periphery formed with an inclined face, the tip portion of the primary sealing lip can be brought into contact with the raceway side groove wall of the seal groove at a contact position lower than the upper end position of the shoulder side groove wall opposed to the raceway side groove wall of the seal groove.

In the double row angular contact ball bearing assembly, thanks to the unique shape of the previously described cage, deposition of the grease on the inner ring outer diametric portion is suppressed and the grease leakage from the cage back face side, that is, the counter-pocket side can be suppressed. Also, the use of the sealing member of the kind described above makes it possible to avoid the grease leakage within the bearing assembly and also to secure the resistance to muddy water.

### Mode E2)

In the basic construction described above, the angle of inclination of the inclined face of the labyrinth lip referred to above may be so set as to be within the range of 10 to 40° relative to the outer peripheral surface of the shoulder portion. Once this angle of inclination is set, muddy water pooled within the seal groove moves axially outwardly along the inclined face of the labyrinth lip under the influence of the centrifugal force developed as a result of rotation of the sealing member and is subsequently easily discharged to the bearing outside.

If the angle of inclination of the inclined face of the labyrinth lip is smaller than the lower limit of 10°, the centrifugal force resulting from the rotation of the sealing member becomes small and, therefore, the muddy water will be hardly discharged. On the other hand, if the angle of inclination is greater than the upper limit of 40°, the gap between the outer peripheral surface of the shoulder portion and the inclined face of the labyrinth seal expands, resulting in reduction in sealability exhibited by the labyrinth seal.

### Mode E3)

In the basic construction described above, the inclined face of the labyrinth lip may be provided at its axially inner end portion with a step protruding towards the shoulder portion side groove wall of the seal groove and be continued to the inner peripheral surface of the primary sealing lip through this step. Since the step protrudes towards the shoulder portion side groove wall of the seal groove, a constricted portion is formed in the labyrinth seal formed by the labyrinth lip and the sealing characteristic brought about by this labyrinth seal can be secured.

### Mode E4)

In the basic construction described above, the sealing member may be rendered to be of a type in which an elastic body is reinforced by a core metal. In such case, the rigidity of the sealing member is increased so that it can be stably held in contact with the inner side wall of the seal groove without allowing the tip portion of the sealing lip to be undesirably deformed elastically.

### Mode E5)

In the basic construction described above, the elastic body of the sealing member may be a hydrogen added nitryl rubber or ester resistant acrylic rubber. Since the hydrogen added nitryl rubber is excellent in heat resistance as compared with nitryl rubber generally used as a sealing member and, since it has no problem in respect of the chemical resistance thereof, not only can stabilized characteristics be maintained, but also it can be used at higher temperature, particularly where the hydrogen added nitryl rubber is employed as the elastic body of the sealing member.

The ester resistant acrylic rubber is excellent in heat resistance as compared with the nitryl rubber as is the case with the hydrogen added nitryl rubber and the chemical resistance against chemicals such as, for example, an ester oil of the acrylic rubber and a compressor oil used in an air conditioner is increased/ For this reason, particularly where the ester resistant acrylic rubber is employed as the elastic body of the sealing member, not only can stabilized characteristics be maintained, but also it can be used at higher temperature.

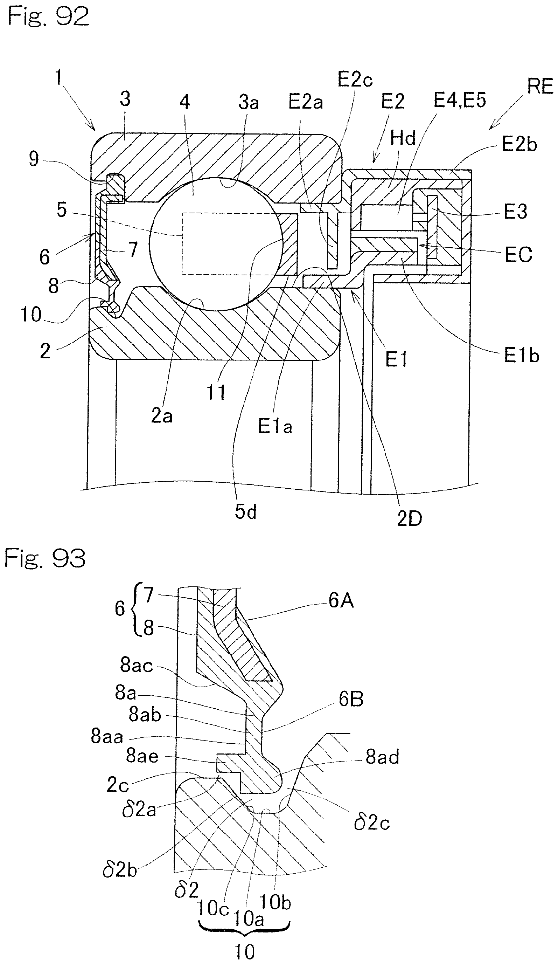

A twenty seventh embodiment will now be described with particular reference to Figs. 92 and 93. The twenty seventh embodiment is such that the cage of the present disclosure is adopted in a ball bearing assembly for a rotary encoder equipped motor. The bearing assembly for the rotary encoder equipped motor in this embodiment is used in association with a rotary shaft of a rotary encoder equipped motor. This bearing assembly 1 includes a plurality of balls 4 interposed between raceway surfaces 2a and 3a defined respectively in inner and outer rings 2 and 3, a cage 5 for retaining those balls 4, a non-contact type sealing member 6 provided on one side face for sealing a bearing space and a rotary encoder RE provided on the other side face. In this case, the bearing assembly is rendered to be a seal equipped deep groove ball bearing assembly. The balls 4 are in the form of steel balls.

The sealing member 6 includes an annular core metal 7 and a rubber member 8 integrated with this core metal 7 and has its outer peripheral portion mounted on a seal anchoring groove 9 defined in an inner peripheral surface of the outer ring 3. The rubber member 8 is made of a synthetic rubber and the core metal 7 is rendered to be in the form of a product of a steel plate. The inner ring 2 is formed with a seal groove 10 at a location corresponding to an inner diametric portion of each of the sealing members 6 and a labyrinth seal gap δ2 is formed between an inner diametric side end of the sealing member 6 and the seal groove 10 in the inner ring 2 The seal fitting groove 9 and the seal groove 10 are finished by a turning process.

As shown in Fig. 93 on an enlarged scale, the seal groove 10 has its bottom surface 10a formed in a flat surface of a cylindrical surface configuration and also has a seal groove inner side wall 10b and a seal groove outer side wall 10c both formed in an inclined face. The shoulder portion outer peripheral face 2c of the inner ring 2 adjacent the bearing outside and remote from the seal groove 10 is lower than the shoulder portion outer peripheral face on the bearing inner side of the seal groove 10, that is, is formed to have a small diameter. The rubber member 8 of the sealing member 6 includes a metal-coreless rubber portion 8a extending from an inner peripheral end of the core metal 7 towards an inner diametric side and a constricted area 8ab of a sectional shape enough to render a side face on the outside to form an annular groove 8aa is provided in this metal-coreless rubber portion 8a. A groove side wall face 8ac on the outer diametric side of the annular groove 8aa continuing from the constricted area 8ab is rendered to represent a tapered shape.

An inner diametric portion of the metal-coreless rubber portion 8a is formed to have two sealing lips, that is, a center sealing lip 8ad and a dust sealing lip 8ae extending towards the inner diametric side and the bearing outside, respectively. The dust sealing lip 8ae extends towards the bearing outside with the center sealing lip 8ad serving as a base end. The center sealing lip 8ad extends towards the bearing inside and keeps in a non-contact relation with the seal groove inner side wall 10b. Thus, with the center sealing lip 8ad extending towards the bearing inside, the axial position of the center of gravity of the metal-coreless rubber portion 8a is offset towards the bearing inside from the center of the section of the constricted area 8ab, more specifically from the center of the section of a groove bottom portion of the constricted area 8ab.

The labyrinth seal gap δ2 defined between the inner diametric end side of the sealing member 6 and the outer diametric surface of the inner ring 2 is formed, at a plurality of locations arranged in inner and outer directions, with respective constricted areas δ2a to δ2c of predetermined gap dimensions according to respective shapes of sealing lips 8ad and 8ae formed in the inner diametric portion of the metal-coreless rubber portion 8a. More specifically, the first constricted area δ2a is formed between the dust sealing lip 8ae and the outer diametric surface of the inner ring 2; the second constricted area δ2b is formed between the center sealing lip 8ad and the seal groove outer side wall 10c of the inner ring; and the third constricted area δ2c is formed between the center sealing lip 8ad and the seal groove inner side wall 10b of the inner ring 2. The outermost constricted area δ2a is so formed as to be narrower than the other constricted areas δ2b and δ2c. Accordingly, the labyrinth seal gap δ2 has three large and narrow varying portions, each comprises of a set of narrow and wide locations.

At two locations arranged in a radial direction, a side face on the inner side of the sealing member 6 is formed with grease reservoir 6A and 6B each in the form of an annular groove. Of those grease reservoirs 6A and 6B, the grease reservoir 6A on the outer diametric side has an outer diametric dimension, which is so selected as to be smaller than the inner diametric dimension of the outer ring 3. Since the sectional shape of the inner diametric side end of the sealing member 6 is so designed that the constricted areas δ2a to δ2c each being of a gap dimension are formed, and arranged in the inner and outer direction, in the labyrinth seal gap δ2 formed between the sealing member inner diametric end and the outer diametric surface of the inner ring 2, a plurality of (for example, three in the illustrated instance,) three large and narrow varying portions, each comprises of a set of narrow and wide locations, are formed in the labyrinth seal gap δ2. Since as described above the labyrinth seal gap δ2 varies wide and narrow, the capability of avoiding the grease leakage from the labyrinth seal gap δ2 can be enhanced. Accordingly, contamination of the surrounding due to the grease leakage can be avoided.

Also, since the axial position of the center of gravity of the metal-coreless rubber portion 8a in the sealing member 6 is offset towards the bearing inside from the center of the section of the constricted area 8ab, waggling of an inner diametric portion tip portion of the sealing member 6 towards the bearing outside during, for example, the rotation of the outer ring can be suppressed. For this reason, the pumping effect, which arises when due to the waggling the gap δ2 between the sealing member 6 inner diametric end and the seal groove 10, can be reduced to thereby suppress promotion of the grease leakage which would result from the pumping effect.

With respect to the side face on the inner side of the sealing member 6, since the grease reservoirs 6A and 6B each in the form of an annular groove are employed and arranged in the radial direction and since the outer diametric dimension of the grease reservoir 6A on the outer diametric side is so chosen to be smaller than the inner diametric dimension of the outer ring 3, the grease within the grease reservoirs 6A and 6B can be supplied gradually towards the raceway surface 3a by the effect of the centrifugal force developed during the outer ring rotation. For this reason, it is possible to cause the grease within the grease reservoirs 6A and 6B to participate in lubrication of the raceway surfaces 2a and 3a.

Hereinafter, the rotary encoder RE will be described.

The rotary encoder RE includes a magnetic encoder EC and sensors E4 and E5. Of them, the magnetic encoder EC is provided with an inner ring side core metal E1. At the end opposite to the side where the sealing member 6 is provided, the annular inner ring side core metal E1 is fixedly mounted on the outer diametric surface of the inner ring 2. An outer ring side core metal E2 is fixed to the inner diametric surface of the outer ring 3 The inner ring side core metal E1 and the outer ring side core metal E2 are opposed to each other in the radial direction. The inner ring side core metal E1 is provided with an L-sectioned inner ring side mounting portion E1b, which is bent at an outer end of an annular inner ring side fixing portion E1a in a direction in which diametric expansion takes place, and a magnetic encoder body is fixedly mounted on an outer diametric surface of this inner ring side mounting portion E1b. This magnetic encoder body is of a type having an array of magnetic poles of a predetermined width magnetized alternately at a predetermined pitch in a direction circumferentially thereof over the entire circumference thereof.

The outer ring side core metal E2 is of a type provided with an outer ring side mounting portion E2b of an L-sectioned configuration at the outer end of the annular outer ring side anchoring portion E2a, and this outer ring side mounting portion E2b protrudes in the axial direction a distance greater than the inner ring side mounting portion E1b. Also, the outer ring side anchoring portion E2a has an inner diametric surface formed with a sealing portion E2c protruding over the entire circumference in a direction towards the inner ring side anchoring portion E1a. In the outer ring side core metal E2, a sensor holder Hd is mounted on an inner surface of the outer ring side mounting portion E2b of the L-sectioned configuration and an electric circuit substrate E3 and others are integrally fixed in a portion of this sensor holder Hd. A portion on a small diametric side of the sensor holder Hd has the electric circuit substrate E3 embedded therein over a required range in the circumferential direction. This electric circuit substrate E3 has an inner surface an A phase sensor E4 in the form of, for example, a Hall IC and a B phase sensor E5 provided thereon, having been spaced a predetermined space in the circumferential direction, so as to protrude inwardly therefrom. Each of the sensors E4 and E5 are exposed at an inner diametric surface of a large diameter in the sensor holder Hd and confronts the magnetic poles of the magnetic encoder EC.

In the bearing assembly for the rotary encoder equipped motor according to this embodiment, any of the cages 5 according to the respective embodiments of the present disclosure can be employed. Accordingly, not only can the grease leakage towards the inner ring outer diametric portion be avoided and, hence, the flow of the grease towards the sensors E4 and E5 of the rotary encoder RE or the seal groove 10 in the inner ring 2 can be avoided to thereby prevent the grease from leaking from the bearing assembly for the rotary encoder equipped motor.

Also, since the provision of the cage 5 of the type hereinbefore described the grease leakage can be prevented, there is no need to change the design and the shape of the seal groove 10 of the inner ring 2 and, also, there is no need to provide a slinger or the like in the axial direction of the bearing assembly. Accordingly, space saving can be accomplished with no need to increase the number of component parts. Therefore, the grease deposition on the sensors E4 and E5 of the rotary encoder RE is also prevented and it is possible to accurate detect the rotating condition. In addition, since the grease leakage is prevented, the sealing member 6 comprised of the non-contact seal can be adopted and, hence, a low torque characteristic can be accomplished. Even when the sealing member 6 comprises of the non-contact seal is adopted, the use of the cage of the structure hereinbefore described makes it possible to increase the dust proofing characteristic.

The following applied examples are contemplated, in which the structural feature of the use of the "recessed areas formed in the inner face of each of the pockets so as to extend from the pocket open edge on the cage inner diametric side towards the cage outer diametric side" is not employed.

The cage for the ball bearing assembly according to the first applied example is a snap cage including an annular body formed in one side face of the annular body with partially opened pockets at a plurality of circumferential locations of the annular body, and a pair of pawls provided on the open side of each the pockets so as to protrude axially and opposed to each other in the circumferential direction, in which the distance between respective tip portions of the pair of the pawls of each of the pockets on the cage outer diametric side is chosen to be smaller than the distance between the tip portions on the cage inner diametric side.

According to the first applied example described above, since the distance between respective tip portions of the pair of the pawls of each of the pockets on the cage outer diametric side is chosen to be smaller than the distance between the tip portions on the cage inner diametric side, the grease adhering to the balls will not be permitted to approach the outer diametric portion of the inner ring from the outer ring side and even the grease from the inner ring side can be scraped by the cage outer diametric side of the pawls distant from the outer diametric portion of the inner ring and, as a result, the grease leakage from the ball bearing assembly can be avoided.

The cage for the ball bearing assembly according to the second applied example is a snap cage including an annular body formed in one side face of the annular body with partially opened pockets at a plurality of circumferential locations of the annular body, and a pair of pawls provided on the open side of each the pockets so as to protrude axially and opposed to each other in the circumferential direction, in which a space between the respective tip portions on the cage inner diametric side of the pair of the pawls of each of the pocket is opened and the respective tip portion on the cage outer diametric side are connected together.

According to the second applied example, since the space between the respective tip portions on the cage inner diametric side of the pair of the pawls of each of the pocket is opened and the respective tip portion on the cage outer diametric side are connected together, the grease adhering to the balls will not be permitted to approach the outer diametric portion of the inner ring from the outer ring side and even the grease from the inner ring side can be scraped by the cage outer diametric side of the pawls distant from the outer diametric portion of the inner ring and, as a result, the grease leakage from the ball bearing assembly can be avoided.

Although the present invention has been fully described in connection with preferred embodiments of the invention as well as embodiments illustrating some features of the invention and preferred features thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A snap cage (5) for a ball bearing assembly (1), which comprises:
an annular body (12) having one side face opened at a plurality of circumferential locations to define respective pockets (11) each for retaining a ball (4) and having an inner face;
recessed areas (16) defined in the inner face of the respective pocket (11) so as to extend from a pocket open edge on a cage inner diametric side towards a cage outer diametric side; and
a pair of pawls (14) opposed to each other in a circumferential direction, the pair of pawls (14) being provided on the open side of the pocket (11) so as to protrude in an axial direction;
in which the distance between respective tip portions (14ba) of the pair of the pawls (14) in the pocket (11) on the cage outer diametric side is smaller than the distance between the tip portions (14ba) of the pair of the pawls (14) in the pocket (11) on the cage inner diametric side, or in which respective tip portions (14ba) of the pair of pawls (14) in the pocket (11) on the cage inner diametric side are spaced a distance from each other, but respective tip portions (14ba) of the pair of pawls (14) in the pocket (11) on the cage outer diametric side are connected together,
and wherein the recessed areas (16) are provided at a plurality of locations while positioned on respective sides of a center (OW11) of the pocket (11) in a cage circumferential direction at the open edge of each of the pockets (11)
**characterized in that**
the inner face of each of the recessed areas (16) is of a substantially cylindrical surface shape following a surface of the imaginary cylinder (V) having its center lying in a direction radially of the cage (5) and is of such a shape that each of the recessed areas (16) extends from the open edge on the cage inner diametric side towards a pitch circle (PCD) of arrangement of a row of the balls (4) and has a width gradually getting shallow and narrow from a cage inner diametric edge to the pitch circle (PCD) of the row of the balls (4).

2. The snap cage (5) for the ball bearing assembly (1) as claimed in claim 1, in which an axial position of the recessed area (16) in each of the pockets (11) is a position substantially coinciding with a shoulder portion (2b) of a raceway surface (2a) of an inner ring (2).

3. The snap cage (5) for the ball bearing assembly (1) as claimed in claim 1, in which the inner face of the pocket (11) represents a concaved spherical surface shape and in which a bridge portion (13) is provided between the neighboring pockets (11), the bridge portion (13) having an end point on a side opposite to a pocket open side on a cage inner diametric surface in a section at a center position of the cage circumferential direction with an axial position of such end point lying at a position adjacent a center side of a raceway surface (2a) and remote from a shoulder (2b) of a raceway surface (2a) of an inner ring (2).

4. The snap cage (5) for the ball bearing assembly (1) as claimed in claim 1, in which the pocket (11) has a pocket bottom wall, a portion (Ps) of the pocket bottom wall at a center of the pocket (11) in the cage circumferential direction being of such a shape that the wall thickness of the pocket bottom wall portion (Ps) is greater at an outer diametric side than at an inner diametric side.

5. The snap cage for the ball bearing assembly as claimed in claim 1, in which the pair of pawls (14) are provided on the cage inner and outer diametric sides, respectively, and in which, assuming that the total width of the pawl (14), when projected onto a straight line (N) extending a cage radial direction across the center (O11) of each of the pockets (11) in a cage circumferential direction, is expressed by It, the width Ie of a pawl portion (14a, 14b) of the pawl (14) on a cage outer diametric side, when projected onto the straight line (N), is of a value not greater than 2/3It.

6. The snap cage (5) for the ball bearing assembly (1) as claimed in claim 1, in which the angle (θb) in a cage circumferential direction from a pocket center equivalent position in the section taken along the cage circumferential direction, to a pawl tip portion (14b) on a cage outer diametric side is chosen to be of a value not smaller than 1.5 times the corresponding angle (θa) of the pawl tip portion (14a) on a cage inner diametric side.

7. A ball bearing assembly (1) having incorporated therein the cage (5) as defined in claim 1.

8. The ball bearing assembly (1) as claimed in claim 7, in which a plurality of balls (4) interposed between inner and outer rings (2, 3) are retained by the cage (5); a grease composition is filled in a bearing space (V1) delimited between the inner and outer rings (2, 3); and a sealing member (6) provided in the outer ring (3) or the inner ring (2) for closing the bearing space (V1); and
in which the grease composition is filled in the bearing space (V1);
the grease composition is prepared by blending an additive to a base grease containing a base oil and a thickener;
the additive is at least an aluminum series additive selected from the group consisting of an aluminum powder and an aluminum compound; and the aluminum series additive is blended in a quantity within the range of 0.05 to 10 parts by weight relative to 100 parts by weight of the base grease.

9. The ball bearing assembly (1) as claimed in claim 8, in which the aluminum compound includes at least one compound selected from the group consisting of aluminum carbonate and aluminum nitrate.

10. The ball bearing assembly (1) for supporting a rotary shaft of a rotary encoder equipped motor as claimed in claim 7, which comprises a plurality of balls (4) interposed between an inner ring (2) and an outer ring (3) and retained by a cage (5), and a sealing member (6) fitted to the outer ring (3) or the inner ring (2) for sealing a bearing space (V1).

11. The ball bearing assembly (1) as claimed in claim 7, which comprises a plurality of balls (4) interposed between inner and outer rings (2, 3) and retained by the cage (5) and a sealing member (6) provided in the outer ring (3) for closing a bearing space (V1);
in which a seal groove (10) is formed in an outer diametric surface of the inner ring (2) in a circumferential direction; the sealing member (6) having an outer peripheral edge fixed to an outer ring inner diametric surface opposed to the seal groove (10); the sealing member (6) also having an inner peripheral portion provided with primary and auxiliary sealing lips (8Ac, 8Ad), the primary sealing lip (8Ac) being held in contact with the seal groove (10) to thereby form a contact seal (S1) whereas the auxiliary sealing lip (8Ad) being held proximate to the seal groove (10) or its neighborhood to thereby form a labyrinth seal (Ls), and
in which a branched portion (8Ab) is provided at a position of the sealing member (6) proximate to a level of the inner ring outer diametric surface; the primary sealing lip (8Ac) being formed by a portion protruding from the branched portion (8Ab) in an inner diametric direction and having a tip portion held in contact with an outer side groove wall (10c) of the seal groove (10) to thereby form the contact seal (S1); and the auxiliary sealing lip (8Ad) is formed by a portion protruding from the branched portion (8Ab) in the axially inward direction, the labyrinth seal (Ls) being formed between a tip portion of the auxiliary sealing lip (8Ad) and an inner side groove wall (10b) of the seal groove (10).

12. The ball bearing assembly (1) as claimed in claim 7, which comprises a plurality of balls (4) interposed between inner and outer raceway rings (2, 3) and retained by the cage (5) and a sealing member (6) provided in the outer ring (3) or the inner raceway ring (2) for closing a bearing space (VI);
in which the sealing member (6) has circumferential edges opposite to each other, one of the circumferential edges of the sealing member (6) being slidingly engaged in a seal groove (10) formed in an end of one of the raceway rings (2, 3) and the other of the circumferential edges of the sealing member (6) being fixed to an end of the other of the raceway rings (3, 2),
in which the peripheral edge of the sealing member (6) slidingly engaged in the seal groove (10) is rendered to be a sealing lip (SL) and has an inner side face formed with a projection (TK), the projection (TK) being capable of displacing between a first condition, in which when as a result of development of a pressure difference occurring in the inside of the bearing assembly (1) and the outside of the bearing assembly (1) that are divided by the sealing member (6), the projection (TK) contacts the inner side face of the seal groove (10) and, as a result of this contact of the projection (TK), the sealing lip (SL) in proximity to the contact is partially elastically deformed to form an air passage (Kt) that communicate between the inside of the bearing assembly (1) and the outside of the bearing assembly (1), and a second condition, in which in the absence of the pressure difference referred to above, the projection (TK) is held in a non-contact with the inner side face of the seal groove (10).

13. The ball bearing assembly (1) as claimed in claim 7, which comprises a plurality of balls (4) interposed between inner and outer rings (2, 3) and retained by the cage (5) and a sealing member (6) provided in the outer ring (3) for closing a bearing space (VI);
in which a shoulder portion (2b) is formed between a seal groove (10), formed at a location laterally of a raceway (2a) in the inner ring (2); the sealing member (6) is mounted on an inner peripheral surface of the outer ring (3) opposed to the seal groove (10) and has an inner periphery side tip portion provided with a primary sealing lip (Lm) and a labyrinth lip (Ln) protruding above the shoulder portion (2b) and in which the primary sealing lip (Lm) is provided with an inner peripheral face (Lmb) opposed to the seal groove (10); and the labyrinth lip (Ln) is provided with an inclined face (Lna) having its diameter gradually increasing towards a tip portion of the labyrinth lip (Ln).

14. A method of making a cage (5) for a ball bearing assembly (1) as defined in claim 1, which comprises the steps of:
forming a pawl component (14ba) separately from and independent of a cage body (5A), the pawl component (14ba) having pawl tip portions (14a, 14b) of pawls (14) protruding at least from pawl portions (14a, 14b) on a cage inner diametric side of respective pawl portions (14a, 14b) on a cage outer diametric side; and bonding, fusion bonding or mounting the pawl component (14ba) on the cage body (5A) after the cage body (5A) has been assembled in inner and outer rings (2, 3) and balls (4) of the ball bearing assembly (1).

15. A method of making a cage (5) defined in claim 1, which comprises the steps of:
manufacturing a half-finished cage component (5B), in which pawl tip portions (14ba) of pawls (14) protruding from pawl portions (14a, 14b) on a cage inner diametric side of respective pawl portions (14a, 14b) on a cage outer diametric side are spaced from a center (O11) of each of pockets (11) an extent larger than those assumed when completed, to assume an opened posture; and effecting a thermal deformation or a secondary processing to allow the pawl tip portions (14ba) to assume a closed posture to follow a corresponding ball surface after the cage body (5B) has been assembled in inner and outer rings (2, 3) and balls (4) of the ball bearing assembly (1).

## Patentansprüche

1. Schnappkäfig (5) für eine Kugellageranordnung (1), Folgendes umfassend:
einen ringförmigen Körper (12), der eine Seitenfläche aufweist, die an mehreren umlaufenden Stellen geöffnet ist, um entsprechende Taschen (11) zu definieren, die jeweils eine Kugel (4) einschließen und eine Innenseite aufweisen;
ausgesparte Bereiche (16), die in der Innenseite der jeweiligen Tasche (11) definiert sind, um sich von einer offenen Taschenkante auf einer diametrischen Innenseite des Käfigs zu einer diametrischen Außenseite des Käfigs zu erstrecken; und
ein Paar Klinken (14), die einander in Umfangsrichtung entgegengesetzt sind, wobei das Paar Klinken (14) auf der offenen Seite der Tasche (11) vorgesehen ist, um in Axialrichtung vorzustehen;
wobei der Abstand zwischen jeweiligen Spitzenabschnitten (14ba) des Paares Klinken (14) in der Tasche (11) auf der diametrischen Außenseite des Käfigs kleiner als der Abstand zwischen den Spitzenabschnitten (14ba) des Paares Klinken (14) in der Tasche (11) auf der diametrischen Innenseite des Käfigs ist, oder wobei die jeweiligen Spitzenabschnitte (14ba) des Paares Klinken (14) in der Tasche (11) auf der diametrischen Innenseite des Käfigs voneinander beabstandet sind, wobei jedoch jeweilige Spitzenabschnitte (14ba) des Paares Klinken (14) in der Tasche (11) auf der diametrischen Außenseite des Käfigs miteinander verbunden sind,
und wobei die ausgesparten Bereiche (16) an mehreren Stellen vorgesehen sind, während sie in Umfangsrichtung des Käfigs an der offenen Kante jeder der Taschen (11) auf jeweiligen Seiten der Mitte (OW11) der Tasche (11) angeordnet sind,
**dadurch gekennzeichnet, dass**
die Innenseite jedes der ausgesparten Bereiche (16) eine im Wesentlichen zylindrische Oberflächenform aufweist, die einer Oberfläche des gedachten Zylinders (V) folgt, dessen Mitte in einer Radialrichtung des Käfigs (5) liegt und eine derartige Form aufweist, dass sich jeder der ausgesparten Bereiche (16) von der offenen Kante der diametrischen Innenseite des Käfigs zu einem Teilkreis (PCD) einer Anordnung einer Reihe von Kugeln (4) erstreckt und eine Breite aufweist, die von einer diametrischen Innenkante des Käfigs zum Teilkreis (PCD) der Reihe von Kugeln (4) allmählich flacher und schmaler wird.

2. Schnappkäfig (5) für die Kugellageranordnung (1) nach Anspruch 1, wobei die Axialposition des ausgesparten Bereichs (16) in jeder der Taschen (11) eine Position ist, die im Wesentlichen mit einem Schulterabschnitt (2b) einer Laufflächenoberfläche (2a) eines Innenrings (2) zusammenfällt.

3. Schnappkäfig (5) für die Kugellageranordnung (1) nach Anspruch 1, wobei die Innenseite der Tasche (11) eine konkave Kugeloberflächenform darstellt und wobei ein Brückenabschnitt (13) zwischen den benachbarten Taschen (11) vorgesehen ist, wobei der Brückenabschnitt (13) einen Endpunkt auf einer Seite aufweist, die einer offenen Taschenseite auf einer diametrischen Innenoberfläche des Käfigs in einem Abschnitt an einer Mittelposition der Umfangsrichtung des Käfigs entgegengesetzt ist, wobei eine Axialposition eines derartigen Endpunkts an einer Position liegt, die an eine Mittelseite einer Laufflächenoberfläche (2a) angrenzt und von einer Schulter (2b) einer Laufflächenoberfläche (2a) eines Innenrings (2) entfernt ist.

4. Schnappkäfig (5) für die Kugellageranordnung (1) nach Anspruch 1, wobei die Tasche (11) eine Taschenbodenwand aufweist, wobei ein Abschnitt (Ps) der Taschenbodenwand in der Mitte der Tasche (11) in Umfangsrichtung des Käfigs eine derartige Form aufweist, dass die Wandstärke des Taschenbodenwandabschnitts (Ps) an einer diametrischen Außenseite größer als an einer diametrischen Innenseite ist.

5. Schnappkäfig für die Kugellageranordnung nach Anspruch 1, wobei das Paar Klinken (14) auf der diametrischen Innen- bzw. Außenseite des Käfigs vorgesehen ist und wobei, angenommen, dass die Gesamtbreite der Klinke (14), wenn sie auf eine Gerade (N) projiziert wird, die sich in Radialrichtung des Käfigs über die Mitte (O11) jeder der Taschen (11) in Umfangsrichtung des Käfigs erstreckt, durch It ausgedrückt wird, wobei die Breite Ie eines Klinkenabschnitts (14a, 14b) der Klinke (14) auf der diametrischen Außenseite des Käfigs, wenn sie auf die Gerade (N) projiziert wird, einen Wert von maximal 2/3 It aufweist.

6. Schnappkäfig (5) für die Kugellageranordnung (1) nach Anspruch 1, wobei der Winkel (θb) in Umfangsrichtung des Käfigs von einer zu einer Taschenmitte äquivalenten Position im Abschnitt entlang der Umfangsrichtung des Käfigs zu einem Klinkenspitzenabschnitt (14b) auf einer diametrischen Außenseite des Käfigs als Wert ausgewählt ist, der nicht kleiner als das 1,5-Fache des zugehörigen Winkels (θa) des Klinkenspitzenabschnitts (14a) auf der diametrischen Innenseite des Käfigs ist.

7. Kugellageranordnung (1), die den in Anspruch 1 definierten Käfig (5) darin integriert.

8. Kugellageranordnung (1) nach Anspruch 7, wobei mehrere Kugeln (4), die zwischen einem Innen- und Außenring (2, 3) angeordnet sind, vom Käfig (5) eingeschlossen werden; wobei eine Schmiermittelzusammensetzung in einen Lagerzwischenraum (V1) gefüllt wird, der zwischen dem Innen- und Außenring (2, 3) begrenzt ist; und wobei ein Dichtungselement (6) im Außenring (3) oder im Innenring (2) vorgesehen ist, um den Lagerzwischenraum (V1) zu verschließen; und
wobei die Schmiermittelzusammensetzung in den Lagerzwischenraum (V1) gefüllt wird;
wobei die Schmiermittelzusammensetzung durch das Mischen eines Zusatzstoffs mit einer Schmiermittelbasis, die eine Ölbasis und ein Verdickungsmittel enthält, zubereitet wird;
wobei der Zusatzstoff mindestens ein Aluminiumzusatzstoff ist, der aus der Gruppe bestehend aus einem Aluminiumpulver und einem Aluminiumverbundmaterial ausgewählt ist; und wobei der Aluminiumzusatzstoff in einer Menge innerhalb des Bereichs von 0,05 bis 10 Gewichtsteilen in Bezug zu 100 Gewichtsteilen der Schmiermittelbasis gemischt wird.

9. Kugellageranordnung (1) nach Anspruch 8, wobei das Aluminiumverbundmaterial mindestens ein Verbundmaterial umfasst, das aus der Gruppe bestehend aus Aluminiumkarbonat und Aluminiumnitrat ausgewählt ist.

10. Kugellageranordnung (1) zum Lagern einer Drehwelle eines mit einem Drehgeber ausgestatteten Motors nach Anspruch 7, die mehrere Kugeln (4), die zwischen einem Innenring (2) und einem Außenring (3) angeordnet und von einem Käfig (5) eingeschlossen werden, und ein Dichtungselement (6), das auf den Außenring (3) oder auf den Innenring (2) montiert ist, um einen Lagerzwischenraum (V1) abzudichten, umfasst.

11. Kugellageranordnung (1) nach Anspruch 7, die mehrere Kugeln (4), die zwischen einem Innen- und einem Außenring (2, 3) angeordnet und vom Käfig (5) eingeschlossen werden, und ein Dichtungselement (6), das im Außenring (3) vorgesehen ist, um einen Lagerzwischenraum (V1) zu verschließen, umfasst;
wobei eine Dichtungsnut (10) in einer diametrischen Außenoberfläche des Innenrings (2) in Umfangsrichtung ausgebildet ist; wobei das Dichtungselement (6) eine Außenrandkante aufweist, die an einer diametrischen Innenoberfläche des Außenrings der Dichtungsnut (10) entgegengesetzt fixiert ist; wobei das Dichtungselement (6) außerdem einen Innenrandabschnitt aufweist, der mit einer primären und einer Hilfsdichtungslippe (8Ac, 8Ad) versehen ist, wobei die primäre Dichtungslippe (8Ac) mit der Dichtungsnut (10) in Kontakt gehalten wird, um dadurch eine Kontaktdichtung (S1) auszubilden, wobei die Hilfsdichtungslippe (8Ad) neben der Dichtungsnut (10) oder in deren Umfeld gehalten wird, um dadurch eine Labyrinthdichtung (Ls) auszubilden, und
wobei ein Zweigabschnitt (8Ab) an einer Position des Dichtungselements (6) neben einer Höhe der diametrischen Außenoberfläche des Innenrings vorgesehen ist; wobei die primäre Dichtungslippe (8Ac) durch einen Abschnitt ausgebildet ist, der vom Zweigabschnitt (8Ab) in eine diametrische Innenrichtung vorsteht und einen Spitzenabschnitt aufweist, der mit einer Nutaußenwand (10c) der Dichtungsnut (10) in Kontakt gehalten wird, um dadurch die Kontaktdichtung (S1) auszubilden; und wobei die Hilfsdichtungslippe (8Ad) durch einen Abschnitt ausgebildet ist, der vom Zweigabschnitt (8Ab) in axiale Innenrichtung vorsteht, wobei die Labyrinthdichtung (Ls) zwischen einem Spitzenabschnitt der Hilfsdichtungslippe (8Ad) und einer Nutinnenwand (10b) der Dichtungsnut (10) ausgebildet ist.

12. Kugellageranordnung (1) nach Anspruch 7, die mehrere Kugeln (4), die zwischen einem inneren und einem äußeren Laufflächenring (2, 3) angeordnet und durch den Käfig (5) eingeschlossen werden, und ein Dichtungselement (6), das im Außenring (3) oder dem inneren Laufflächenring (2) vorgesehen ist, um einen Lagerzwischenraum (V1) zu verschließen, umfasst;
wobei das Dichtungselement (6) einander entgegengesetzte umlaufende Kanten aufweist, wobei eine der umlaufenden Kanten des Dichtungselements (6) verschiebbar in eine Dichtungsnut (10) eingreift, die in einem Ende eines der Laufflächenringe (2, 3) ausgebildet ist, und die andere der umlaufenden Kanten des Dichtungselements (6) an einem Ende des anderen der Laufflächenringe (3, 2) fixiert ist, wobei die Randkante des Dichtungselements (6), die verschiebbar in die Dichtungsnut (10) eingreift, als Dichtungslippe (SL) ausgeführt ist und eine Innenseitenfläche aufweist, die mit einem Vorsprung (TK) ausgebildet ist, wobei der Vorsprung (TK) dazu fähig ist, sich zwischen einem ersten Zustand, in dem aufgrund einer Entwicklung eines innerhalb der Lageranordnung (1) und außerhalb der Lageranordnung (1), die durch das Dichtungselement (6) getrennt sind, auftretenden Druckunterschieds, wobei der Vorsprung (TK) die Innenseitenfläche der Dichtungsnut (10) berührt, und aufgrund des Kontakts des Vorsprungs (TK), die Dichtungslippe (SL) in der Nähe des Kontakts teilweise elastisch verformt wird, um einen Luftdurchgang (Kt) auszubilden, der zwischen dem Inneren der Lageranordnung (1) und dem Äußeren der Lageranordnung (1) kommuniziert, und einem zweiten Zustand, in dem in Abwesenheit des vorstehend beschriebenen Druckunterschieds der Vorsprung (TK) kontaktlos zur Innenseitenfläche der Dichtungsnut (10) gehalten wird, zu verschieben.

13. Kugellageranordnung (1) nach Anspruch 7, die mehrere Kugeln (4), die zwischen einem Innen- und einem Außenring (2, 3) angeordnet und vom Käfig (5) eingeschlossen werden, und ein Dichtungselement (6), das im Außenring (3) vorgesehen ist, um einen Lagerzwischenraum (V1) zu verschließen, umfasst;
wobei ein Schulterabschnitt (2b) zwischen einer Dichtungsnut (10), die an einer Stelle seitlich von einer Lauffläche (2a) im Innenring (2) ausgebildet ist, ausgebildet ist; wobei das Dichtungselement (6) auf einer Innenrandoberfläche des Außenrings (3) der Dichtungsnut (10) entgegengesetzt montiert ist und einen Innenrandseitenspitzenabschnitt aufweist, der mit einer primären Dichtungslippe (Lm) und einer Labyrinthlippe (Ln), die über den Schulterabschnitt (2b) vorsteht, versehen ist, und wobei die primäre Dichtungslippe (Lm) mit einer der Dichtungsnut (10) entgegengesetzten Innenrandfläche (Lmb) versehen ist; und wobei die Labyrinthlippe (Ln) mit einer geneigten Fläche (Lna) versehen ist, deren Durchmesser zu einem Spitzenabschnitt der Labyrinthlippe (Ln) stetig zunimmt.

14. Verfahren zur Herstellung eines Käfigs (5) für eine Kugellageranordnung (1) nach Anspruch 1, das die folgenden Schritte umfasst:
Ausbilden einer Klinkenkomponente (14ba) getrennt und unabhängig von einem Käfigkörper (5A), wobei die Klinkenkomponente (14ba) Klinkenspitzenabschnitte (14a, 14b) der Klinken (14) aufweist, die zumindest von Klinkenabschnitten (14a, 14b) auf der diametrischen Innenseite des Käfigs der jeweiligen Klinkenabschnitte (14a, 14b) auf einer diametrischen Außenseite des Käfigs vorstehen; und Verbinden, Verschmelzen oder Montieren der Klinkenkomponente (14ba) mit bzw. auf dem Käfigkörper (5A), nachdem der Käfigkörper (5A) im Innen- und Außenring (2, 3) und die Kugeln (4) der Kugellageranordnung (1) montiert wurden.

15. Verfahren zur Herstellung eines Käfigs (5) nach Anspruch 1, das die folgenden Schritte umfasst:
Herstellen einer halbfertigen Käfigkomponente (5B), in der Klinkenspitzenabschnitte (14ba) von Klinken (14), die von Klinkenabschnitten (14a, 14b) auf der diametrischen Innenseite des Käfigs der jeweiligen Klinkenabschnitte (14a, 14b) einer diametrischen Außenseite des Käfigs vorstehen, von einer Mitte (O11) jeder der Taschen (11) in einem Ausmaß beabstandet sind, das größer als das bei der Fertigstellung angenommene ist, um eine geöffnete Stellung einzunehmen; und Bewirken einer Wärmeumformung oder einer sekundären Bearbeitung, um zuzulassen, dass die Klinkenspitzenabschnitte (14ba) eine geschlossene Stellung einnehmen, um einer zugehörigen Kugeloberfläche zu folgen, nachdem der Käfigkörper (5B) im Innen- und Außenring (2, 3) und die Kugeln (4) der Kugellageranordnung (1) montiert sind.

## Revendications

1. Cage à enclenchement (5) pour un ensemble de roulement à billes (1), qui comprend :
un corps annulaire (12) ayant une face latérale ouverte à une pluralité d'endroits circonférentiels pour définir des poches respectives (11) pour retenir chacune une bille (4) et ayant une face intérieure ;
des zones en retrait (16) définies dans la face intérieure de la poche respective (11) de manière à s'étendre d'un bord ouvert de poche sur un côté diamétral intérieur de cage vers un côté diamétral extérieur de cage ; et
une paire de cliquets (14) opposés l'un à l'autre dans une direction circonférentielle, la paire de cliquets (14) étant prévue sur le côté ouvert de la poche (11) de manière à dépasser dans une direction axiale ;
dans laquelle la distance entre des parties de pointe respectives (14ba) de la paire de cliquets (14) dans la poche (11) sur le côté diamétral extérieur de cage est plus petite que la distance entre les parties de pointe (14ba) de la paire de cliquets (14) dans la poche (11) sur le côté diamétral intérieur de cage, ou dans laquelle des parties de pointe respectives (14ba) de la paire de cliquets (14) dans la poche (11) sur le côté diamétral intérieur de cage sont espacées d'une distance l'un de l'autre, mais des parties de pointe respectives (14ba) de la paire de cliquets (14) dans la poche (11) sur le côté diamétral extérieur de cage sont reliées entre elles,
et dans laquelle les zones en retrait (16) sont prévues à une pluralité d'endroits tout en étant positionnées sur des côtés respectifs d'un centre (OW11) de la poche (11) dans une direction circonférentielle de cage au bord ouvert de chacune des poches (11)
**caractérisée en ce que**
la face intérieure de chacune des zones en retrait (16) est de forme de surface sensiblement cylindrique qui suit une surface du cylindre imaginaire (V) ayant son centre situé dans une direction radialement de la cage (5) et est de forme telle que chacune des zones en retrait (16) s'étend du bord ouvert sur le côté diamétral intérieur de cage vers un cercle primitif (PCD) d'arrangement d'une rangée des billes (4) et a une largeur progressivement moins profonde et plus étroite d'un bord diamétral intérieur de cage jusqu'au cercle primitif (PCD) de la rangée des billes (4).

2. Cage à enclenchement (5) pour l'ensemble de roulement à billes (1) selon la revendication 1, dans laquelle une position axiale de la zone en retrait (16) dans chacune des poches (11) est une position coïncidant sensiblement avec une partie d'épaulement (2b) d'une surface de chemin de roulement (2a) d'une bague intérieure (2).

3. Cage à enclenchement (5) pour l'ensemble de roulement à billes (1) selon la revendication 1, dans laquelle la face intérieure de la poche (11) représente une forme de surface sphérique concave et dans laquelle une partie de pont (13) est prévue entre les poches (11) voisines, la partie de pont (13) ayant un point d'extrémité sur un côté opposé à un côté ouvert de poche sur une surface diamétrale intérieure de cage dans une section à une position centrale de la direction circonférentielle avec une position axiale d'un point d'extrémité située à une position adjacente à un côté central d'une surface de chemin de roulement (2a) et éloignée d'un épaulement (2b) d'une surface de chemin de roulement (2a) d'une bague intérieure (2).

4. Cage à enclenchement (5) pour l'ensemble de roulement à billes (1) selon la revendication 1, dans laquelle la poche (11) a une paroi inférieure de poche, une partie (Ps) de la partie inférieure de poche à un centre de la poche (11) dans la direction circonférentielle de cage étant de forme telle que l'épaisseur de paroi de la partie inférieure de poche (Ps) soit plus grande à un côté diamétral extérieur qu'à un côté diamétral intérieur.

5. Cage à enclenchement (5) pour l'ensemble de roulement à billes (1) selon la revendication 1, dans laquelle la paire de cliquets (14) est prévue sur les côtés diamétral intérieur et extérieur, respectivement, et dans laquelle, en supposant que la largeur totale du cliquet (14), projetée sur une ligne droite (N) étendant une direction radiale de cage à travers le centre (O11) de chacune des poches (11) dans une direction circonférentielle de cage, soit exprimée par It, la largeur le d'une partie de cliquet (14a, 14b) du cliquet (14) sur un côté diamétral extérieur de cage, projetée sur la ligne droite (N), est d'une valeur non supérieure à 2/3 It.

6. Cage à enclenchement (5) pour l'ensemble de roulement à billes (1) selon la revendication 1, dans laquelle l'angle (θb) dans une direction circonférentielle de cage d'une position équivalente au centre de poche dans la section réalisée le long de la direction circonférentielle de cage, jusqu'à une partie de pointe de cliquet (14b) sur un côté diamétral extérieur de cage est choisi pour être d'une valeur non inférieure à 1,5 fois l'angle correspondant (θa) de la partie de pointe de cliquet (14a) sur un côté diamétral intérieur de cage.

7. Ensemble de roulement à billes (1) dans lequel est incorporée la cage (5) selon la revendication 1.

8. Ensemble de roulement à billes (1) selon la revendication 7, dans lequel une pluralité de billes (4) intercalées entre des bagues intérieure et extérieure (2, 3) sont retenues par la cage (5) ; une composition de graisse est versée dans un espace de roulement (V1) délimité entre les bagues intérieure et extérieure (2, 3) ; et un organe d'étanchéité (6) prévu dans la bague extérieure (3) ou la bague intérieure (2) pour fermer l'espace de roulement (V1) ; et
dans lequel la composition de graisse est versée dans l'espace de roulement (V1) ; et la composition de graisse est préparée en mélangeant un additif à une graisse de base contenant une huile de base et un épaississant ;
l'additif est au moins un additif de séries d'aluminium sélectionné dans le groupe consistant en une poudre d'aluminium et un composé d'aluminium ; et l'additif de séries d'aluminium est mélangé en une quantité à l'intérieur de la plage de 0,05 à 10 parties en poids par rapport à 100 parties en poids de la graisse de base.

9. Ensemble de roulement à billes (1) selon la revendication 8, dans lequel le composé d'aluminium inclut au moins un composé sélectionné dans le groupe consistant en carbonate d'aluminium et nitrate d'aluminium.

10. Ensemble de roulement à billes (1) pour supporter un arbre rotatif d'un moteur équipé d'un codeur rotatif selon la revendication 7, qui comprend une pluralité de billes (4) intercalées entre une bague intérieure (2) et une bague extérieure (3) et retenues par une cage (5), et un organe d'étanchéité (6) monté sur la bague extérieure (3) ou la bague intérieure (2) pour rendre étanche l'espace de roulement (V1).

11. Ensemble de roulement à billes (1) selon la revendication 7, qui comprend une pluralité de billes (4) intercalées entre des bagues intérieure et extérieure (2, 3) et retenues par la cage (5), et un organe d'étanchéité (6) prévu dans la bague extérieure (3) pour fermer un espace de roulement (V1) ;
dans lequel une rainure pour joint (10) est formée dans une surface diamétrale extérieure de la bague intérieure (2) dans une direction circonférentielle ; l'organe d'étanchéité (6) ayant un bord périphérique extérieur fixé à une surface diamétrale intérieure de bague extérieure opposé à la rainure pour joint (10) ; l'organe d'étanchéité (6) ayant aussi une partie périphérique intérieure pourvue de lèvres d'étanchéité primaire et auxiliaire (8Ac, 8Ad), la lèvre d'étanchéité primaire (8Ac) étant maintenue en contact avec la rainure pour joint (10) pour former ainsi un joint de contact (S1) tandis que la lèvre d'étanchéité auxiliaire (8Ad) est près de la rainure pour joint (10) ou dans son voisinage pour former ainsi un joint à labyrinthe (Ls), et dans lequel une partie à embranchement (8Ab) est prévue à une position de l'organe d'étanchéité (6) proche d'un niveau de la surface diamétrale extérieure de bague intérieure ; la lèvre d'étanchéité primaire (8Ac) étant formée par une partie dépassant de la partie à embranchement (8Ab) dans une direction diamétrale intérieure et ayant une partie de pointe maintenue en contact avec une paroi de rainure latérale extérieure (10c) de la rainure pour joint (10) pour former ainsi le joint de contact (S1 ; et la lèvre d'étanchéité auxiliaire (8Ad) est formée par une partie dépassant de la partie à embranchement (8Ab) dans la direction axialement vers l'intérieur, le joint à labyrinthe (Ls) étant formé entre une partie de pointe de la lèvre d'étanchéité auxiliaire (8Ad) et une paroi de rainure latérale intérieure (10b) de la rainure pour joint (10).

12. Ensemble de roulement à billes (1) selon la revendication 7, qui comprend une pluralité de billes (4) intercalées entre des bagues de chemin de roulement intérieure et extérieure (2, 3) et retenues par la cage (5) et un organe d'étanchéité (6) prévu dans la bague extérieure (3) ou la bague de chemin de roulement intérieure (2) pour fermer un espace de roulement (V1) ;
dans lequel l'organe d'étanchéité (6) a des bords circonférentiels opposés l'un à l'autre, l'un des bords circonférentiels de l'organe d'étanchéité (6) étant engagé de manière coulissante dans une rainure pour joint (10) formée dans une extrémité de l'une des bagues de chemin de roulement (2, 3) et l'autre des bords circonférentiels de l'organe d'étanchéité (6) étant fixé à une extrémité de l'autre des bagues de chemin de roulement (2, 3),
dans lequel le bord périphérique de l'organe d'étanchéité (6) engagé de manière coulissante dans la rainure pour joint (10) est rendu pour être une lèvre d'étanchéité (SL) et a une face latérale intérieure formée par une saillie (TK), la saillie (TK) étant capable de se déplacer entre une première condition, dans laquelle quand, à la suite du développement d'une différence de pression se produisant dans le côté intérieur de l'ensemble de roulement à billes (1) et le côté extérieur de l'ensemble de roulement à billes (1) qui sont divisés par l'organe d'étanchéité (6), la saillie (TK) vient en contact avec la face latérale intérieure de la rainure pour joint (10) et, à la suite de ce contact de la saillie (TK), la lèvre d'étanchéité (SL) à proximité du contact est partiellement déformée élastiquement pour former un passage d'air (Kt) qui communique entre le côté intérieur de l'ensemble de roulement à billes (1) et le côté extérieur de l'ensemble de roulement à billes (1), et une deuxième condition, dans laquelle en l'absence de la différence de pression indiquée ci-dessus, la saillie (TK) est maintenue dans un non contact avec la face latérale intérieure de la rainure pour joint (10).

13. Ensemble de roulement à billes (1) selon la revendication 7, qui comprend une pluralité de billes (4) intercalées entre des bagues intérieure et extérieure (2, 3) et retenues par la cage (5) et un organe d'étanchéité (6) prévu dans la bague extérieure (3) pour fermer un espace de roulement (V1) ;
dans lequel une partie d'épaulement (2b) est formée entre une rainure pour joint (10), formée à un endroit latéralement par rapport à un chemin de roulement (2a) dans la bague intérieure (2) ; l'organe d'étanchéité (6) est monté sur une surface périphérique intérieure de la bague extérieure (3) opposée à la rainure pour joint (10) et a une partie de pointe côté périphérie intérieure pourvue d'une lèvre d'étanchéité primaire (Lm) et d'une lèvre à labyrinthe (Ln) dépassant au-dessus de la partie d'épaulement (2b) et dans lequel la lèvre d'étanchéité primaire (Lm) est pourvue d'une face périphérique intérieure (Lmb) opposée à la rainure pour joint (10) ; et la lèvre à labyrinthe (Ln) est pourvue d'une face inclinée (Lna) dont le diamètre augmente progressivement vers une partie de pointe de la lèvre à labyrinthe (Ln).

14. Procédé pour faire une cage (5) pour un ensemble de roulement à billes (1) définie dans la revendication 1, qui comprend les étapes de :
former un composant de cliquet (14ba) séparément et indépendant d'un corps de cage (5A), le composant de cliquet (14ba) ayant des parties de pointe de cliquet (14a, 14b) de cliquets (14) dépassant au moins de parties de cliquet (14a, 14b) sur un côté diamétral intérieur de cage de parties de cliquet (14a, 14) respectives sur un côté diamétral extérieur de cage ; et lier ou monter par fusion le composant de cliquet (14ba) sur le corps de cage (5A) après que le corps de cage (5A) a été assemblé dans des bagues intérieure et extérieure (2, 3) et des billes (4) de l'ensemble de roulement à billes (1).

15. Procédé pour faire une cage (5) définie dans la revendication 1, qui comprend les étapes de :
fabriquer un composant de cage semi-fini (5B), dans lequel des parties de pointe de cliquet (14ba) de cliquets (14) dépassant de parties de cliquet (14a, 14b) sur un côté diamétral intérieur de cage de parties de cliquet (14a, 14b) respectives sur un côté diamétral extérieur de cage sont espacées d'un centre (O11) de chacune de poches (11) davantage qu'une fois terminées, pour adopter une posture ouverte ; et effectuer une déformation thermique ou un traitement secondaire pour permettre aux parties de pointe de cliquet (14ba) d'adopter une posture fermée pour suivre une surface de bille correspondante après que le corps de cage (5b) a été assemblé dans des bagues intérieure et extérieure (2, 3) et des billes (4) de l'ensemble de roulement à billes (1).
